# EUROPEAN PATENT APPLICATION

(11) **EP 4 654 704 A1**
(43) Date of publication of application: **26.11.2025**
(21) Application number: 23916875.0
(22) Date of filing: 16.02.2023
(51) Int. Cl.: H04W 72/044, H04W 24/08

(54) **INFORMATION PROCESSING METHOD AND APPARATUS**

(30) Priority: 20.01.2023 WO PCT/CN2023/073402
(71) Applicant: FUJITSU LIMITED, Kawasaki-shi, Kanagawa 211-8588 (JP)
(72) Inventor: AKIMOTO, Yosuke, Kawasaki-shi Kanagawa 211--8588 (JP); ZHANG, Jian, Beijing 100022 (CN); SUN, Gang, Beijing 100022 (CN); JIA, Meiyi, Beijing 100022 (CN)
(74) Representative: Haseltine Lake Kempner LLP
(86) International application number: PCT/CN2023/076615
(87) International publication number: WO 2024/152398

(57) **Abstract**

Embodiments of this disclosure provide an information processing method and apparatus. A terminal equipment receives first configuration information, the first configuration information including one or more list groups, and one list group including an SSB index list and a cell index list. Hence, the terminal equipment may perform SSB measurement according to the first configuration information, thereby achieving flexible measurement configurations, which is helpful to flexible cell handover.

## Description

### Field

This disclosure relates to the field of communication.

### Background

The 3GPP standardization organization carried out standardization related work on inter-cell beam management (ICBM) during the standardization process of Release 17 (Rel-17). Wherein, a terminal equipment in Rel-17 may use beams of a non-serving cell, but is not handed over to the non-serving cell.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

Inter-cell beam management (ICBM) has been standardized in Rel-17. The ICBM includes measurement, reporting and beam indication. For the measurement, a terminal equipment is able to perform layer 1 reference signal receiving power (L1-RSRP) measurement based on synchronization signal blocks (SSBs) and physical broadcast channel (PBCH) blocks of a non-serving cell. For the reporting, the terminal equipment reports a piece of L1-RSRP measurement result to a network device. And for the beam indication, the network device may indicate a transmission configuration indication (TCI) state associated with the non-serving cell to the terminal equipment.

In this way, the terminal equipments may use beams of the non-serving cell, such as using the beams to transmit information to or receive information from the non-serving cell. Although the terminal equipment is able to use the beams of the non-serving cell, a serving cell of the terminal equipment is not changed, that is, the terminal equipment will not be handed over to the non-serving cell. Hence, the terminal equipment is still within a bandwidth of the serving cell, and applies the indicated TCI state associated with the non-serving cell on the serving cell based on relevant configurations of the serving cell. Here, the non-serving cell refers to a cell with physical cell ID (PCI) different from a physical cell ID of the serving cell. The Rel-17 ICBM is based on the Rel-17 unified TCI.

Release 18 (Rel-18) will investigate layer 1/layer 2 triggered mobility (L1/L2 LTM). For the LTM in Rel-18, the goal is to reduce the time needed in handover interruption via cell handover based on layer 1/layer 2 signaling, thereby enabling faster handover from the serving cell to a target cell. The target cell is a cell after handover, which may be a serving cell, or may be a non-serving cell. The handover interruption refers to a time from the terminal equipment receives a cell handover command to the terminal equipment and the cell after handover perform uplink or downlink communication for the first time. Compared to conventional cell handover based on layer 3 signaling, cell handover based on layer 1/layer 2 signaling is able to further reduce handover latency. In order to achieve cell handover based on layer 1/layer 2, the terminal equipment needs to measure and report candidate cells, and the network device needs to indicate beams to be used after cell handover to the terminal equipment. For Rel-17 ICBM, the terminal equipment does not need to perform cell handover. For Rel-18 LTM, the terminal equipment needs to perform cell handover, so as to be handed over to the target cell. Hence, the measurement, reporting and beam indication in Rel-18 need to designed differently.

It was found by the inventors that the cell handover of Rel-18 LTM requires measurement and reporting by the terminal equipment. At present, how to measure and report by the terminal equipment is still an open issue, for example, specific contents of measurement configuration and measurement reporting have not been defined yet.

In order to solve at least one of the above problems, embodiments of this disclosure provide an information processing method and apparatus.

According to one aspect of the embodiments of this disclosure, there is provided an information processing method, applicable to a terminal equipment, wherein the method includes:
receiving first configuration information, the first configuration information including K list groups, wherein K≥1, and one list group includes an SSB index list and a cell index list; and
performing SSB measurement according to the first configuration information.

According to another aspect of the embodiments of this disclosure, there is provided an information processing method, applicable to a terminal equipment, wherein the method includes:
transmitting R groups of reporting information for R groups of SSBs, wherein R ≥1, a group of reporting information includes a group of L1-RSRP and a group of SSBRIs (SS/PBCH block resource indicators), or a group of L1-SINRs (layer 1 signal to interference plus noise ratios) and a group of SSBRIs.

According to a further aspect of the embodiments of this disclosure, there is provided an information processing method, applicable to a network device, wherein the method includes:
transmitting first configuration information, the first configuration information including K list groups, wherein K≥1, and one list group includes an SSB index list and a cell index list.

According to still another aspect of the embodiments of this disclosure, there is provided an information processing method, applicable to a network device, wherein the method includes:
receiving R groups of reporting information for R groups of SSBs, wherein R≥1, a group of reporting information includes a group of L1-RSRP and a group of SSBRIs, or a group of L1-SINRs and a group of SSBRIs.

According to yet another aspect of the embodiments of this disclosure, there is provided an information processing apparatus, configured in a terminal equipment, wherein the information processing apparatus includes:
a receiving unit configured to receive first configuration information, the first configuration information including K list groups, wherein K≥1, and one list group includes an SSB index list and a cell index list; and
a measurement unit configured to perform SSB measurement according to the first configuration information.

According to yet still another aspect of the embodiments of this disclosure, there is provided an information processing apparatus, configured in a terminal equipment, wherein the information processing apparatus includes:
a transmitting unit configured to transmit R groups of reporting information for R groups of SSBs, wherein R≥1, a group of reporting information includes a group of L1-RSRP and a group of SSBRIs, or a group of L1-SINRs and a group of SSBRIs.

According to yet further aspect of the embodiments of this disclosure, there is provided an information processing apparatus, configured in a network device, wherein the apparatus includes:
a transmitting unit configured to transmit first configuration information, the first configuration information including K list groups, wherein K≥1, and one list group includes an SSB index list and a cell index list.

According to yet further another aspect of the embodiments of this disclosure, there is provided an information processing apparatus, configured in a network device, wherein the apparatus includes:
a receiving unit configured to R groups of reporting information for R groups of SSBs, wherein R≥1, a group of reporting information includes a group of L1-RSRP and a group of SSBRIs, or a group of L1-SINRs and a group of SSBRIs.

One of the advantages of the embodiments of this disclosure exists in that the terminal equipment receives first configuration information, the first configuration information including one or more list groups, and one list group including an SSB index list and a cell index list. Hence, the terminal equipment may perform SSB measurement according to the first configuration information, thereby achieving flexible measurement configurations, which is helpful to flexible cell handover.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments.
FIG. 1 is schematic diagram of a communication system of an embodiment of this disclosure;
FIG. 2 is a schematic diagram of a serving cell and a non-serving cell of the embodiment of this disclosure;
FIG. 3 is a schematic diagram of an information processing method of an embodiment of this disclosure;
FIG. 4 is a schematic diagram of K list groups of the embodiment of this disclosure;
FIG. 5 is a schematic diagram of a list group of the embodiment of this disclosure;
FIG. 6 is a schematic diagram of K SSB index lists of the embodiment of this disclosure;
FIG. 7 is another schematic diagram of K list groups of the embodiment of this disclosure;
FIG. 8 is a schematic diagram of a first list group of the embodiment of this disclosure;
FIG. 9 is a further schematic diagram of K list groups of the embodiment of this disclosure;
FIG. 10 is a schematic diagram of second list groups of the embodiment of this disclosure;
FIG. 11 is a schematic diagram of third list groups of the embodiment of this disclosure;
FIG. 12 is still another schematic diagram of K list groups of the embodiment of this disclosure;
FIG. 13 is yet another schematic diagram of K list groups of the embodiment of this disclosure;
FIG. 14 is a schematic diagram of fourth list groups of the embodiment of this disclosure;
FIG. 15 is a schematic diagram of a fifth list group of the embodiment of this disclosure;
FIG. 16 is yet still another schematic diagram of K list groups of the embodiment of this disclosure;
FIG. 17 is a schematic diagram of a list group configured per cell of the embodiment of this disclosure;
FIG. 18 is a schematic diagram of R groups of reporting information of the embodiment of this disclosure;
FIG. 19 is another schematic diagram of R groups of reporting information of the embodiment of this disclosure;
FIG. 20 is a schematic diagram of R groups of SSBs of the embodiment of this disclosure;
FIG. 21 is another schematic diagram of R groups of SSBs of the embodiment of this disclosure;
FIG. 22 is a further schematic diagram of R groups of SSBs of the embodiment of this disclosure;
FIG. 23 is a schematic diagram of SSBRIs of the embodiment of this disclosure;
FIG. 24 is a schematic diagram of R groups of SSBs configured per cell of the embodiment of this disclosure;
FIG. 25 is a schematic diagram of a quantization mode of the embodiment of this disclosure;
FIG. 26 is another schematic diagram of the quantization mode of the embodiment of this disclosure;
FIG. 27 is a schematic diagram of an information processing method of an embodiment of this disclosure;
FIG. 28 is a schematic diagram of an information processing method of an embodiment of this disclosure;
FIG. 29 is a schematic diagram of an information processing method of an embodiment of this disclosure;
FIG. 30 is a schematic diagram of an information processing apparatus of an embodiment of this disclosure;
FIG. 31 is a schematic diagram of an information processing apparatus of an embodiment of this disclosure;
FIG. 32 is a schematic diagram of an information processing apparatus of an embodiment of this disclosure;
FIG. 33 is a schematic diagram of an information processing apparatus of an embodiment of this disclosure;
FIG. 34 is a schematic diagram of a terminal equipment of an embodiment of this disclosure; and
FIG. 35 is a schematic diagram of a structure of a network device of an embodiment of this disclosure.

### Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, 5G and new radio (NR), etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

Wherein, the base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, an industrial wireless device, a surveillance camera, a device to device (D2D) terminal, and a machine to machine (M2M) terminal, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above. "A device" may refer to a network device, and may also refer to a terminal equipment.

Scenarios in the embodiments of this disclosure shall be described below by way of examples; however, this disclosure is not limited thereto.

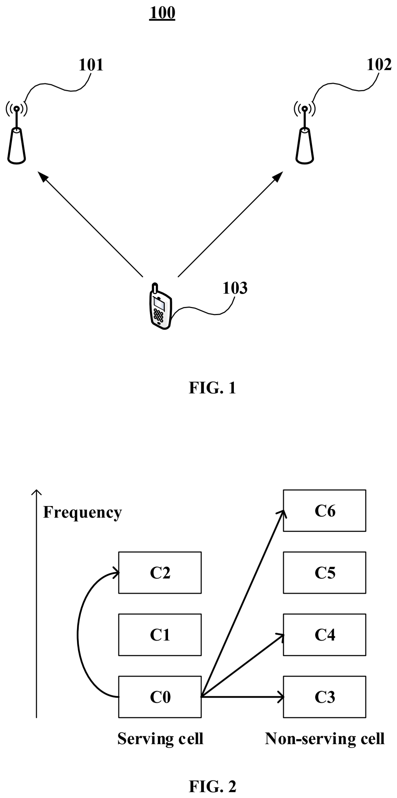

FIG. 1 is a schematic diagram of a communication system of an embodiment of this disclosure, in which a case where a terminal equipment and network devices are taken as examples is schematically shown. As shown in FIG. 1, the communication system 100 may include a first network device 101, a second network device 102 and a terminal equipment 103. For the sake of simplicity, an example having only two network devices and one terminal equipment is schematically given in FIG. 1; however, the embodiment of this disclosure is not limited thereto. For example, the first network device 101 is a serving cell of the terminal equipment 103, and the second network device 102 is a non-serving cell of the terminal equipment 103; or, the first network device 101 is a primary serving cell of the terminal equipment 103, and the second network device 102 is a secondary serving cell of the terminal equipment 103; or, the first network device 101 is a source cell of the terminal equipment 103, and the second network device 102 is a target cell or candidate cell of the terminal equipment 103.

FIG. 2 is a schematic diagram of a serving cell and a non-serving cell of the embodiment of this disclosure. As shown in FIG. 2, As shown in FIG. 2, cells C0, C1 and C2 belong to the serving cell. For example, C0, C1 and C2 are a group of cells of carrier aggregation, C0 is a Pcell (primary cell), and C1 and C2 are Scells (secondary cells). The serving cell is at least one of the following: a SpCell (special cell), an Scell, an activated cell, and a deactivated cell. Cells C3, C4, C5 and C6 belong to a non-serving cell. For example, C3, C4, C5 and C6 are a group of cells of carrier aggregation, C3 is a Pcell, and C4, C5 and C6 are Scells.

Rel-18 LTM supports a cell (e.g. C0) to be handed over to a serving cell, an intra-frequency cell, and an inter-frequency cell. For example, cell C0 may be handed over to cells C2, C3, C4 and C6. A cell to which a terminal equipment may be handed over is referred to as a candidate cell, and a cell to which a terminal equipment is actually handed over is referred to as a target cell. Rel-17 ICBM only supports beam handover between intra-frequency cells, for example, beams of cell C0 are handed over to beams of cell C3. Compared to Rel-17 ICBM, a more flexible measurement and/or reporting mechanism is helpful to supporting more flexible cell handover.

### Embodiment of a first aspect

The embodiment of this disclosure provides an information processing method, applicable to a terminal equipment side.

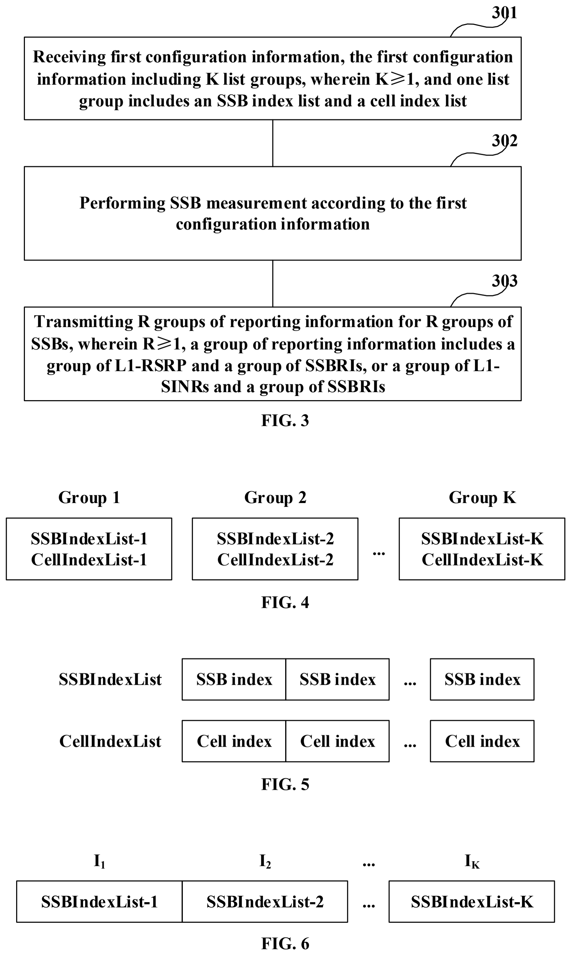

FIG. 3 is a schematic diagram of the information processing method of the embodiment of this disclosure. As shown in FIG. 3, the method includes:
301: receiving first configuration information, the first configuration information including K list groups, wherein K≥1, and one list group includes an SSB index list and a cell index list; and
302: performing SSB measurement according to the first configuration information.

In the above embodiment, the terminal equipment receives the first configuration information, the first configuration information including one or more list groups, and each list group including an SSB index list and a cell index list. Hence, the terminal equipment may perform SSB measurement according to the first configuration information, thereby achieving flexible measurement configurations, which is helpful to flexible cell handover.

It should be noted that FIG. 3 only schematically illustrates the embodiment of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 3.

In some embodiments, the first configuration information configures K groups of SSBs, where K≥1. A list group corresponds to a group of SSBs. In a list group, the SSB index list includes one or more SSB indices, and the cell index list includes one or more cell indices. The SSB indices in the SSB index list and the cell indices in the cell index list correspond to a group of SSBs.

FIG. 4 is a schematic diagram of K list groups in the embodiment of this disclosure. In some embodiments, as shown in FIG. 4, the terminal equipment is configured with K (K≥1) {SSB index list (SSBIndexList), cell index list (CellIndexList)}. Without loss of generality, a *k-th* SSB index list is denote by SSBIndexList-k, and a *k-th* cell index list is denote by CellIndexList-k; where, 1≤k ≤K. Wherein, SSBIndexList-k includes one or more SSB indices, and CellIndexList includes one or more cell indices. SSBIndexList-k and CellIndexList-k are taken as a group, which is denoted as a *k-th* group. By configuring K list groups via the first configuration information, K groups of SSBs may be configured for the terminal equipment, enabling the terminal equipment to measure and/or report according to the K groups of SSBs. For example, the terminal equipment may measure the K groups of SSBs configured by the first configuration information, and/or report measurement results of the K groups of SSBs. However, this disclosure is not limited thereto, and the terminal equipment may also measure a part of SSBs in the K groups of SSBs configured by the first configuration information, and/or report the measurement results of a part of SSBs in the K groups of SSBs.

In some embodiments, multiple groups (e.g. K>1 groups) of SSBs (cells) may be configured for the terminal equipment, which facilitates reuse of the framework to support the terminal equipment in reporting multiple groups of measurement results. For example, in a case where the network device configures K (K>1) groups of SSBs (cells) for the terminal equipment, the terminal equipment may deem that the network device implicitly instructs the terminal equipment to report K groups of measurement results. Configuring the terminal equipment by the network device to report measurement results for multiple groups of cells is helpful to achieving more flexible cell handover without increasing reporting overhead.

For example, in a case where all cells are taken as a group and configured for the terminal equipment, the terminal equipment selects M cells with highest L1-RSRP in all the cells to report. However, the network device sometimes needs to hand the terminal equipment over to a cell with a lower payload (although the cell does not belong to the M cells with the highest L1-RSRP). In this case, the network device is unable to obtain a measurement result of the cell. By configuring multiple groups of cells for the terminal equipment (e.g. dividing all the cells into multiple groups of cells), the terminal equipment selects m cells with the highest L1-RSRP in each group of cells to report, so that the network device may selects cells with relatively high L1-RSRP in a group of cells with lower payloads for handover.

Wherein, an amount of first reporting information reported by the terminal equipment by selecting m cells with the highest L1-RSRP in each group of cells may be equal to an amount of second reporting information reported by the terminal equipment by selecting M cells with the highest L1-RSRP in all the cells, which is helpful to achieving more flexible cell handover without increasing reporting overhead; however, this disclosure is not limited thereto, and the amount of the first reporting information may also be less than or greater than the amount of the second reporting information, which is also helpful to achieving more flexible cell handover.

In some embodiments, in a list group, the number of SSB indices included in an SSB index list is equal to the number of cell indices included in a cell index list. FIG. 5 is a schematic diagram of a list group in the embodiment of this disclosure. As shown in FIG. 5, in a list group (without loss of generality, a suffix "k" is omitted here), SSBIndexList includes I SSB indices, and CellIndexList includes I cell indices. For a cell where an *i-th* (1≤i≤I) SSB index in SSBIndexList is located, a cell index of the cell is an *i-th* cell index in CellIndexList. Multiple cell indices in CellIndexList may be identical. For example, multiple SSB indices belonging to the same cell have identical cell indices.

In some embodiments, a cell has its own SSB configuration. The cell index indicates a cell that the terminal equipment needs to measure, and based on the SSB configuration of the cell, the SSB indices further indicate which SSBs the terminal equipment needs to measure.

In some embodiments, the number of SSB indices included in the K list groups configured by the first configuration information may be less than or equal to a first threshold, and/or the number of different cell indices included in the K list groups may be less than or equal to a second threshold, the second threshold being less than or equal to the first threshold. FIG. 6 is a schematic diagram of K SSB index lists in the embodiment of this disclosure. As shown in FIG. 6, in a case where a *k-th* (1≤k≤ K) SSB index list SSBIndexList-k includes Iₖ SSB indices, a total number of SSB indices included in the K SSB index lists is I₁+I₂+...+I_{K}. By making the total number less than or equal to a first threshold Iₘₐₓ, it may be ensured that measurement of the SSBs does not exceed a capability of the terminal equipment. Likewise, by making the total number of different cell indices included in the K list groups (for example, the total number of different cell indices is calculated by labeling identical cell indices as one cell index) less than or equal to a second threshold, it may also be ensured that the terminal equipment performs SSB measurement within its capability. As multiple SSB indices may possibly have identical cell indices, the total number of different cell indices may be less than or equal to the total number of the SSB indices, and the second threshold is less than or equal to the first threshold.

In some embodiments, the first configuration information may include information indicating the cell indices and/or SSB indices belong to a serving cell or a non-serving cell. Repeated configuration of information may be avoided by distinguishing whether the cell indices and/or SSB indices belong to a serving cell or a non-serving cell by the terminal equipment. For example, for a non-serving cell, time-frequency resources and physical cell IDs (PCIs) of the SSBs need to be additionally configured; however, for a serving cell, the terminal equipment has already obtained information on the above SSBs and PCIs, the network device needs only to provide a serving cell index, and the terminal equipment may determine a serving cell accordingly and obtain information on SSBs and PCIs of the serving cell. Hence, there is no need to repeatedly configure the information on SSBs and PCIs of the serving cell.

The first configuration information may indicate in various ways whether the cell indices and/or SSB indices belong to a serving cell or a non-serving cell. A mode for indicating whether the cell indices and/or SSB indices belong to a serving cell or a non-serving cell shall be exemplarily described below.

In some embodiments, the K list groups configured by the first configuration information may include K first list groups, or the K list groups configured by the first configuration information may be K first list groups. In the first list groups, the cell indices in the cell index list may indicate that the cell indices and SSB indices in the SSB index list corresponding to the cell indices belong to a serving cell or a non-serving cell.

For example, according to values of the cell indices, the terminal equipment may determine whether the SSB indices and cell indices belong to a serving cell or a non-serving cell.

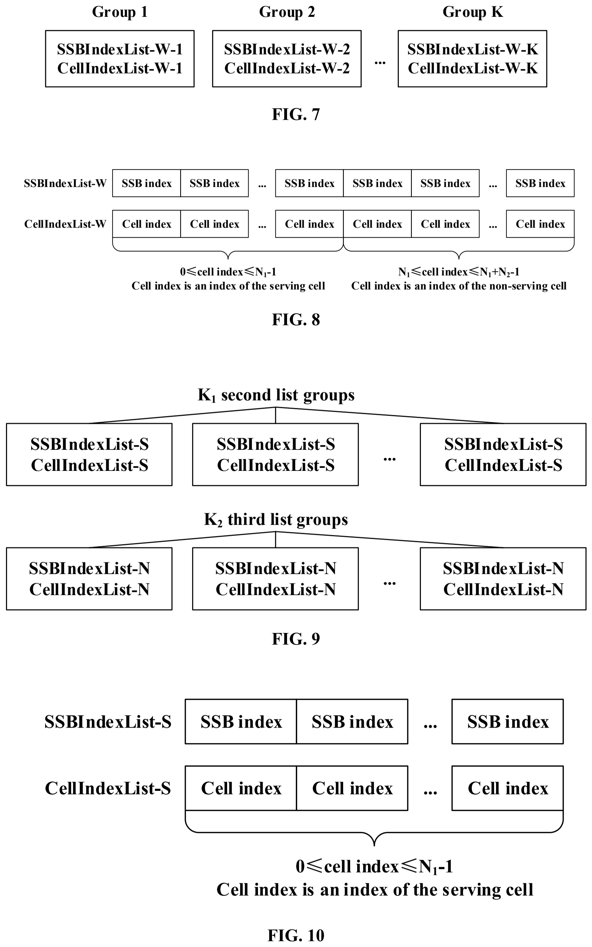

FIG. 7 is another schematic diagram of the K list groups in the embodiment of this disclosure. As shown in FIG. 7, the K list groups are K first list groups, and without loss of generality, SSB index lists in a *k-th* (1≤k≤K) first list group are denoted as SSBIndexList-W-k, and a *k-th* cell index list is denoted as CelllndexList-W-k.

FIG. 8 is a schematic diagram of the first list groups in the embodiment of this disclosure. In some embodiments, as shown in FIG. 8, in the *k-th* first list group (without loss of generality, a suffix "k" is omitted here), if an *i-th* cell index in the cell index list is less than a third threshold N₁, the *i-th* cell index and an *i-th* SSB index in the SSB index list belong to a serving cell; and if the *i-th* cell index in the cell index list is greater than or equal to the third threshold N₁, the *i-th* cell index and the *i-th* SSB index in the SSB index list belong to a non-serving cell; where, 1≤i≤Iₖ, and Iₖ is the number of cell indices in the *k-th* first list group. Wherein, only one example of an order of arrangement of the cell indices (SSB indices) is shown in FIG. 8. However, this disclosure is not limited thereto, and the cell indices (SSB indices) may also be arranged in other orders.

In some embodiments, the K list groups configured by the first configuration information may include K₁ second list groups and K₂ third list groups, or the K list groups may be K₁ second list groups and K₂ third list groups; where, 0≤K1≤K, 0≤K₂≤K, K₁+K₂=K. In this case, whether the cell indices and the SSB indices in the SSB index list corresponding to the cell indices belong to a serving cell or a non-serving cell may be indicated by taking a list group including cell indices as the second list group or the third list group. In other words, the terminal equipment may determine whether SSB indices and cell indices in a list group belong to a serving cell or a non-serving cell according to whether the list group is the second list group or the third list group.

FIG. 9 is a further schematic diagram of K list groups of the embodiment of this disclosure. As shown in FIG. 9, the K list groups are K₁ second list groups and K₂ third list groups, the second list groups being denoted by SSBIndexList-S and CellIndexList-S, and the third list groups being denoted by SSBIndexList-N and CellIndexList-N. Wherein, the second list groups include SSB index lists and cell index lists of the serving cell, and the third list groups include SSB index lists and cell index lists of the non-serving cell.

FIG. 10 is a schematic diagram of the second list groups of the embodiment of this disclosure. In some embodiments, as shown in FIG. 10, the SSB indices and cell indices in the second list groups belong to the serving cell. In other words, there will be no SSB index or cell index of the non-serving cell in the second list groups. Hence, the terminal equipment may deem that the SSB indices and cell indices in the second list groups belong to the serving cell.

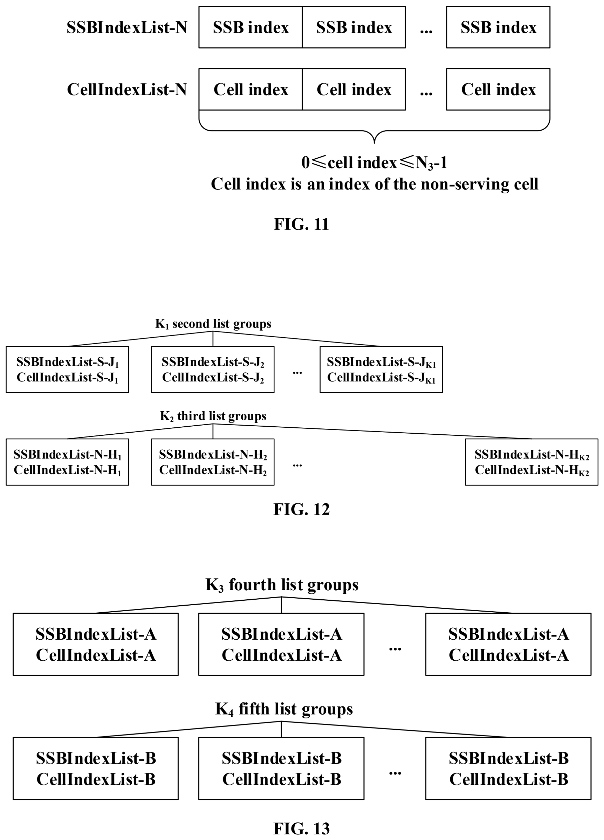

FIG. 11 is a schematic diagram of the third list groups in the embodiment of this disclosure. In some embodiments, as shown in FIG. 11, all the SSB indices and cell indices in the third list groups belong to the non-serving cell. In other words, there will be no SSB index or cell index of the serving cell in the third list groups. Hence, the terminal equipment may deem that the SSB indices and cell indices in the third list groups belong to the non-serving cell.

In some embodiments, the indices of the SSB index list and/or the indices of the cell index list (or suffixes, or list indices, or list suffixes) in the second list groups and the indices of the SSB index list and/or the indices of the cell index list in the third list groups may be numbered in various ways. For example, indices of an SSB index list may be identical to indices of a cell index list in a list group. For another example, the indices of the SSB index list in the second list group and the SSB index list in the third list group may be independently numbered, and the indices of the cell index list in the second list group and the indices of the cell index list in the third list group may be independently numbered; however, this disclosure is not limited thereto, and the indices of the above lists may also be jointly numbered.

FIG. 12 is still another schematic diagram of the K list groups of the embodiment of this disclosure. In some embodiments, as shown in FIG. 12, a *k₁-th* (1≤k₁≤ K₁) second list group includes an SSB index list with an index Jₖ₁ and a cell index list with an index Jₖ₁, and a *k₂-th* (1≤k₂≤ K₂) third list group includes an SSB index list with an index Hₖ₂ and a cell index list with an index Hₖ₂.

The indices and arrangement orders of the SSB index lists in the second list groups and third list groups shall be described by taking SSB index lists as examples. It should be understood that the following contents are also applicable to cell index lists.

For the K₁ SSB index lists included in the K₁ second list groups, the indices of the SSB index lists are J₁, J₂,..., Jₖ₁ in sequence; where, values of J₁, J₂,..., Jₖ₁ may be continuous, such as 1, 2, 3, or, values of J₁, J₂,..., J_{K1} may be discontinuous. For the K₂ SSB index lists included in the K₂ third list groups, the indices of the SSB index lists are H₁, H₂,..., H_{K2} in sequence; where, values of H₁, H₂,..., H_{K2} may be continuous, or, values of H₁, H₂,..., H_{K2} may be discontinuous, such as values 1, 2, 4. Without loss of generality, it is assumed here that indices of the SSB index lists of the second list groups and third list groups are numbered starting from 1.

In some embodiments, the second list groups and third list groups may be mapped to the K list groups in various orders. For example, the K₁ second list groups and the K₂ third list groups may be mapped to the K list groups in an order of "the indices of the SSB index list first and then list group type indices", or in an order of "list group type indices first and then the indices of the SSB index list". Wherein, the list group type indices may be used to determine types of the list groups, such as whether a list group is a second list group or a third list group. For example, a "list group type index" of a second list group is 2, and a "list group type index" of a third list group is 3; however, this disclosure is not limited thereto, and the "list group type indices" of the second list groups and third list groups may also be defined in other ways.

In some embodiments, when mapping is performed in the order of "the indices of the SSB index list first and then list group type indices", mapping may be performed in an incremental or decremental order of the indices of the SSB index list. When the indices of the SSB index list are identical, mapping may be performed in an incremental or decremental order of the list group type indices, such as mapping to the second list groups first and then the third list groups, or mapping to the third list groups first and then the second list groups.

Table 1 is a schematic table of a mapping mode of "the indices of the SSB index list first and then list group type indices" in the embodiment of this disclosure. As shown in Table 1, in the case where the K list groups include K₁ second list groups and K₂ third list groups, mapping may be performed in an incremental order of the indices of the SSB index list. When the indices of the SSB index list are identical, the second list groups are mapped first and then the third list groups are mapped. Wherein, "a second one of list groups" and "a second list group" are different, the former refers to an order of a list group, and the latter refers to a type of a list group; likewise, the "a third one of list groups" and "a third list group" are also different.

**Table 1 Schematic table of a mapping mode of "the indices of the SSB index list first and then list group type indices"**

| | |
|---|---|
| First one of list groups | A second list group including an SSB index list with an index 1 |
| Second one of list groups | A third list group including an SSB index list with an index 1 |
| Third one of list groups | A second list group including an SSB index list with an index 2 |
| Fourth one of list groups | A third list group including an SSB index list with an index 2 |
| ... | ... |

Table 2 is another schematic table of the mapping mode of "the indices of the SSB index list first and then list group type indices" in the embodiment of this disclosure. As shown in Table 2, 6 (K=6) list groups include 3 (K₁=3) second list groups (list groups where SSBIndexList-S-1, SSBIndexList-S-2 and SSBIndexList-S-3 are located) and 3 (K₂=3) third list groups (list groups where SSBIndexList-N-1, SSBIndexList-N-2 SSBIndexList-N-4 are located). List groups including an SSB index list with an index 1 are preferentially mapped, and for a second list group and third list group including SSB index lists with indices 1, the second list group is mapped first, and then the third list group is mapped, and so on.

**Table 2 Another schematic table of the mapping mode of "the indices of the SSB index list first and then list group type indices"**

| | |
|---|---|
| First one of list groups | A second list group including SSBIndexList-S-1 |
| Second one of list groups | A third list group including SSBIndexList-N-1 |
| Third one of list groups | A second list group including SSBIndexList-S-2 |
| Fourth one of list groups | A third list group including SSBIndexList-N-2 |
| Fifth one of list groups | A second list group including SSBIndexList-S-3 |
| Sixth one of list groups | A third list group including SSBIndexList-N-4 |

In some embodiments, in the case where mapping is performed in the order of "list group type indices first and then the indices of the SSB index list", mapping may be performed in an incremental or decremental order of the list group type indices. For example, the second list groups are mapped first and then the third list groups are mapped, or the third list groups are mapped first and then the second list groups are mapped. For list groups of the same type, mapping may be performed in an incremental or decremental order of the indices of the SSB index list.

Table 3 is a schematic table of the mapping mode of "list group type indices first and then the indices of the SSB index list" in the embodiment of this disclosure. As shown in Table 3, in the case where the K list groups include K₁ second list groups and K₂ third list groups, the K₁ second list groups may be mapped first, and then the K₂ third list groups are mapped. In mapping the K₁ second list groups, mapping may be performed in an incremental order of the indices of the SSB index list. Likewise, in mapping the K₂ third list groups, mapping may be performed in an incremental order of the indices of the SSB index list.

**Table 3 Schematic table of a mapping mode of "list group type indices first and then the indices of the SSB index list"**

| | |
|---|---|
| First one of list groups | A second list group including an SSB index list with an index 1 |
| Second one of list groups | A second list group including an SSB index list with an index 2 |
| ... | ... |
| *K₁-th* one of list groups | A second list group including an SSB index list with an index K₁ |
| *(K₁+1)-th* one of list groups | A third list group including an SSB index list with an index 1 |
| *(K₁+2)-th* one of list groups | A third list group including an SSB index list with an index 2 |
| ... | ... |
| *(K₁+K₂)-th* one of list groups | A third list group including an SSB index list with an index K₂ |

Table 4 is another schematic table of the mapping mode of "list group type indices first and then the indices of the SSB index list" in the embodiment of this disclosure. As shown in Table 4, 6 (K=6) list groups include 3 (K₁=3) second list groups (list groups where SSBIndexList-S-1, SSBIndexList-S-2 and SSBIndexList-S-3 are located) and 3 (K₂=3) third list groups (list groups where SSBIndexList-N-1, SSBIndexList-N-2 SSBIndexList-N-4 are located). The 3 second list groups are preferentially mapped, which are mapped in an order of list indices 1, 2 and 3; and then the 3 third list group are mapped, which are mapped in an order of list indices 1, 2 and 4.

**Table 4 Another schematic table of the mapping mode of "list group type indices first and then the indices of the SSB index list"**

| | |
|---|---|
| First one of list groups | A second list group including SSBIndexList-S-1 |
| Second one of list groups | A second list group including SSBIndexList-S-2 |
| Third one of list groups | A second list group including SSBIndexList-S-3 |
| Fourth one of list groups | A third list group including SSBIndexList-N-1 |
| Fifth one of list groups | A third list group including SSBIndexList-N-2 |
| Sixth one of list groups | A third list group including SSBIndexList-N-4 |

In some embodiments, the K list groups may include K₃ fourth list groups and K₄ fifth list groups, or the K list groups may be K₃ fourth list groups and K₄ fifth list groups; where, 0≤K₃≤K, 0≤K₄≤K, and K₃+K₄=K. In this case, whether a cell index and an SSB index in the SSB index list corresponding to the cell index may be indicated to the fourth list groups and fifth list groups by the cell index and/or a list group including the cell index. In other words, the terminal equipment may determine whether an SSB index and a cell index belong to a serving cell or a non-serving cell according to a value of the cell index and/or whether a list group is a fourth list group or a fifth list group.

FIG. 13 is another schematic diagram of the K list groups in the embodiment of this disclosure. As shown in FIG. 13, the K list groups are K₃ fourth list groups and K₄ fifth list groups, the fourth list groups being denoted by SSBIndexList-A and CellIndexList-A, and the fifth list group being denoted by SSBIndexList-B and CellIndexList-B, wherein the fourth list groups include an SSB index list and a cell index list of the serving cell and/or the non-serving cell, and the fifth list groups include the SSB index list and cell index list of the serving cell.

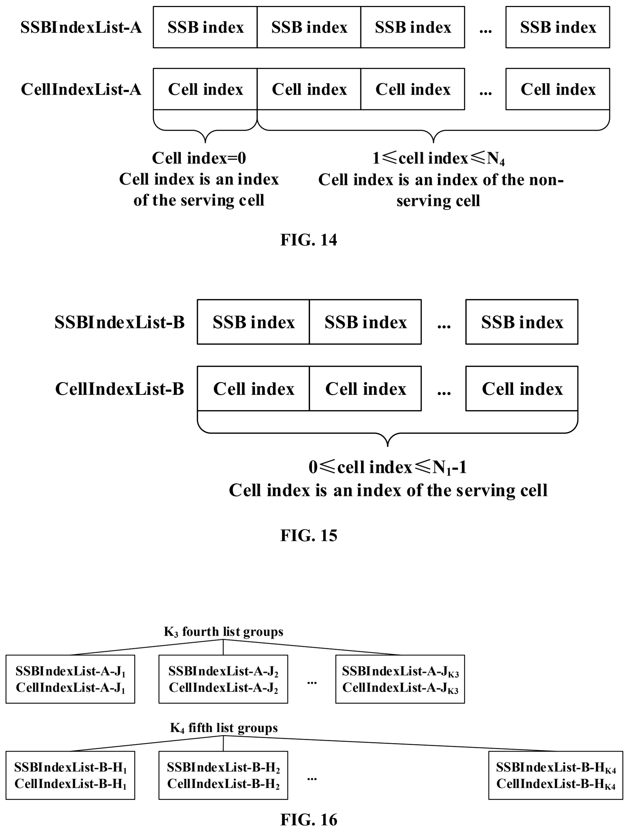

FIG. 14 is a schematic diagram of the fourth list groups in the embodiment of this disclosure. In some embodiments, as shown in FIG. 14, the fourth list groups include the SSB indices and cell indices of the serving cell and/or the non-serving cell. In a *k₃-th* (0≤ k₃≤K₃) fourth list group, whether a cell index and an SSB index to which the cell index corresponds belong to a serving cell or a non-serving cell may be indicated by the cell index.

For example, in the *k₃-th* fourth list group, if an *i-th* cell index is equal to 0, the *i-th* cell index and an *i-th* SSB index in the SSB index list belong to a serving cell defined for the *k₃-th* fourth list group (SSBIndexList-A and/or CellIndexList-A), and if the *i-th* cell index is greater than 0, the *i-th* cell index and the *i-th* SSB index in the SSB index list belong to a non-serving cell; where, 1≤ i ≤Iₖ₃, and Iₖ₃ is the number of cell indices in the *k₃-th* fourth list group. However, this disclosure is not limited thereto, and whether the cell index and SSB index in the fourth list group belong to a serving cell or a non-serving cell may also be indicated by other means.

In some embodiments, the serving cell defined by the fourth list group is that, for example, in a case where the fourth list group is configured per serving cell, if a first serving cell is configured with the fourth list group, the first serving cell is the serving cell defined for the fourth list group.

FIG. 15 is a schematic diagram of a fifth list group in the embodiment of this disclosure. In some embodiments, as shown in FIG. 15, an SSB index and cell index in the fifth list group belong to a serving cell. In other words, an SSB index and cell index of a non-serving cell will not exist in the fifth list group. Hence, the terminal equipment may deem that the SSB index and cell index in the fifth list group belong to a serving cell.

In some embodiments, the indices of the SSB index list and/or the indices of the cell index list in the fourth list group and the indices of the SSB index list and/or the indices of the cell index list in the fifth list group may be numbered in various ways. For example, an index of an SSB index list may be identical to an index of a cell index list in a list group. For another example, the indices of the SSB index list in the fourth list group and the indices of the SSB index list in the fifth list group may be numbered independently, and the indices of the cell index list in the fourth list group and the indices of the cell index list in the fifth list group may be numbered independently; however, this disclosure is not limited thereto, and the indices of the above lists may also be numbered jointly.

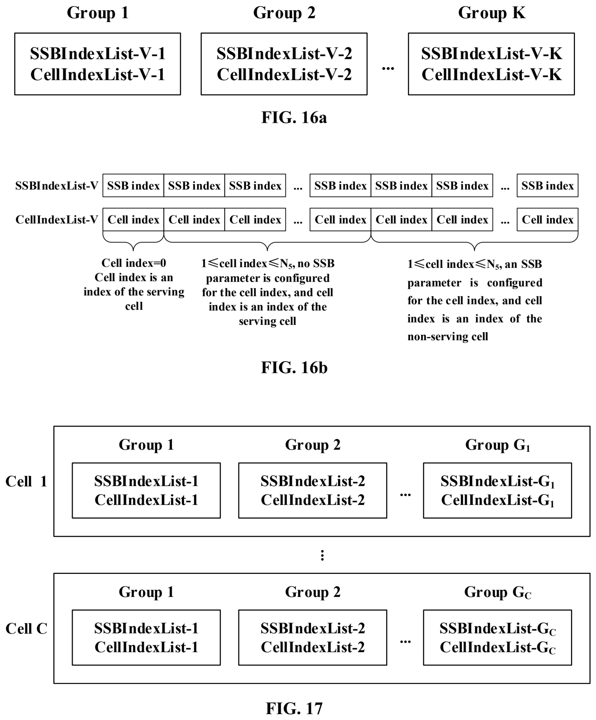

FIG. 16 is yet still another schematic diagram of the K list groups of the embodiment of this disclosure. In some embodiments, as shown in FIG. 16, a *k₃-th (1* ≤k₃≤K₃) fourth list group includes an SSB index list with an index Jₖ₃ and a cell index list with an index Jₖ₃, and a *k₄-th* (1≤k₄≤K₄) fifth list group includes an SSB index list with an index Hₖ₄ and a cell index list with an index Hₖ₄.

The indices and arrangement orders of the indices of the SSB index lists in the fourth list group and fifth list group shall be described by taking SSB index lists as examples. It should be understood that the following contents are also applicable to cell index lists.

For the K₃ SSB index lists included in the K₃ fourth list groups, the indices of the SSB index lists are J₁, J₂,..., Jₖ₃ in sequence; where, values of J₁, J₂,..., J_{K3} may be continuous, such as 1, 2, 3, or, values of J₁, J₂,..., J_{K3} may be discontinuous. For the K₄ SSB index lists included in the K₄ fifth list groups, the indices of the SSB index lists are H₁, H₂,..., Hₖ₄ in sequence; where, values of H₁, H₂,..., H_{K4} may be continuous, or, values of H₁, H₂,..., H_{K4} may be discontinuous, such as values 1, 2, 4. Without loss of generality, it is assumed here that indices of the SSB index lists of the fourth list groups and fifth list groups are numbered starting from 1.

In some embodiments, the fourth list groups and fifth list groups may be mapped to the K list groups in various orders. For example, the K₃ fourth list groups and the K₄ fifth list groups may be mapped to the K list groups in an order of "the indices of the SSB index list first and then list group type indices", or in an order of "list group type indices first and then the indices of the SSB index list". Wherein, the list group type indices may be used to determine types of the list groups, such as whether a list group is a fourth list group or a fifth list group.

In some embodiments, when mapping is performed in the order of "the indices of the SSB index list first and then list group type indices", mapping may be performed in an incremental or decremental order of the indices of the SSB index list. When the indices of the SSB index list are identical, mapping may be performed in an incremental or decremental order of the list group type indices, such as mapping to the fourth list groups first and then the fifth list groups, or mapping to the fifth list groups first and then the fourth list groups.

In some embodiments, when mapping is performed in the order of "list group type indices first and then the indices of the SSB index list", the mapping may be performed in an incremental or decremental order of the list group type indices, such as mapping the fourth list groups first and then the fifth list groups, or mapping the fifth list groups first and then the fourth list groups. For list groups of the same type, the mapping may be performed in an incremental or decremental order of the indices of the SSB index list.

In some embodiments, the K list groups configured by the first configuration information may include K sixth list groups, or the K list groups may be K sixth list groups. In the sixth list groups, whether a cell index and an SSB index in an SSB index list corresponding to the cell index belong to a serving cell or a non-serving cell may be indicated by the cell index and/or whether an SSB parameter is configured for the cell index. In other words, the terminal equipment may determine whether an SSB index and a cell index belong to a serving cell or a non-serving cell according to the cell index and/or whether an SSB parameter is configured for the cell index.

FIG. 16a is yet further another schematic diagram of the K list groups of the embodiment of this disclosure. As shown in FIG. 16a, the K list groups are K sixth list groups, which are denoted by SSBIndexList-V and CellIndexList-V.

FIG. 16b is yet further still another schematic diagram of the K list groups of the embodiment of this disclosure. In some embodiments, as shown in FIG. 16b, the sixth list groups include SSB indices and cell indices of a serving cell and/or a non-serving cell. In a *k-th* (0≤k≤K) sixth list group, whether a cell index and an SSB index to which the cell index corresponds belong to a serving cell or a non-serving cell may be indicated according to the cell index and/or whether an SSB parameter is configured for the cell index.

For example, in a *k-th* sixth list group, if an *i-th* cell index is equal to 0, the *i-th* cell index and an *i-th* SSB index in the SSB index list belong to a serving cell defined for the *k-th* sixth list group (SSBIndexList-V and/or CellIndexList-V), if the *i-th* cell index is greater than 0 and no SSB parameter is configured for the *i-th* cell index, the *i-th* cell index and the *i-th* SSB index in the SSB index list belong to a serving cell; and if the *i-th* cell index is greater than 0 and an SSB parameter is configured for the *i-th* cell index, the *i-th* cell index and the *i-th* SSB index in the SSB index list belong to a non-serving cell; where, 1≤ i ≤Iₖ, and Iₖ is the number of cell indices in the *k-th* sixth list group.

In some embodiments, that 'an SSB parameter is configured for the *i-th* cell index' may refer to that the *i-th* cell index, the SSB parameter and a PCI are configured in a radio resource control information element (RRC IE), and that 'no SSB parameter is configured for the *i-th* cell index' may refer to that the *i-th* cell index and a PCI are configured in an RRC IE. However, this disclosure is not limited thereto, and 'an SSB parameter is configured for the *i-th* cell index' and 'no SSB parameter is configured for the *i-th* cell index' may also be other contents.

In some embodiments, the RRC IE may be SSB-MTC-AdditionalPCI. Table 4a is a schematic table of a format of SSB-MTC-AdditionalPCI in the embodiment of this disclosure. As shown in Table 4a, for cell indices in CellIndexList-V with a value c and c>0, there exists SSB-MTC-AdditionalPCI associated therewith. For example, additionalPCIIndex in SSB-MTC-AdditionalPCI is equal to c. SSB-MTC-AdditionalPCI may further include SSB parameters (such as periodicity, ssb-PositionsInBurst, ss-PBCH-BlockPower) and a PCI (additionalPCI).

In some embodiments, whether the SSB parameters are configured is optional. For example, if SSB-MTC-AdditionalPCI associated with cell index c does not include an SSB parameter, the terminal equipment may learn that cell index c belongs to a serving cell, and the terminal equipment may learn a serving cell according to the PCI, thereby obtaining an SSB of the serving cell via configuration of the serving cell (not via SSB-MTC-AdditionalPCI); and if SSB-MTC-AdditionalPCI associated with cell index c includes an SSB parameter, the terminal equipment may learn that cell index c belongs to a non-serving cell, thereby obtaining an SSB of the non-serving cell via SSB-MTC-AdditionalPCI.

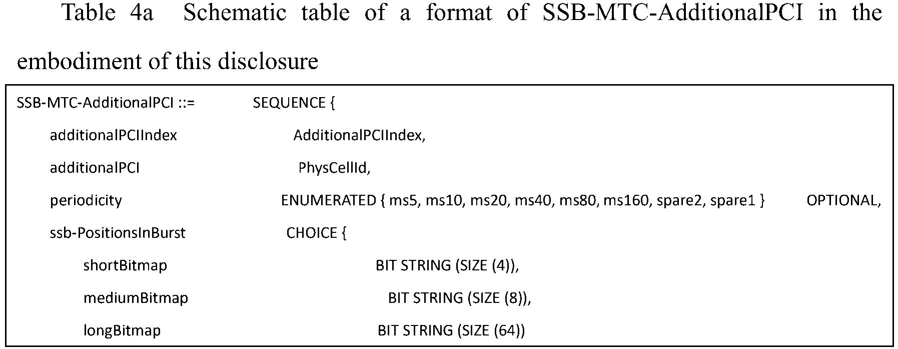

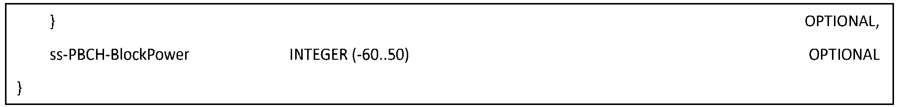

In some embodiments, in the first list groups or the second list groups or the fifth list groups, the cell index of the serving cell may be greater than or equal to a fourth threshold and less than a third threshold, wherein for the first list groups, the second list groups and the fifth list groups, their respective fourth thresholds may be identical or different, and their respective third thresholds may be identical or different. For example, as shown in FIGs. 8, 10 and 15, the fourth threshold may be equal to 0, and the third threshold may be equal to N₁.

In some embodiments, the cell index of the non-serving cell in the first list groups may be greater than or equal to the third threshold and less than a fifth threshold. For example, as shown in FIG. 8, the third threshold may be equal to N₁, and the fifth threshold may be equal to N₁+N₂.

In some embodiments, the cell index of the non-serving cell in the third list groups may be greater than or equal to a sixth threshold and less than a seventh threshold. For example, as shown in FIG. 11, the sixth threshold may be equal to 0, and the seventh threshold may be equal to N₃.

In some embodiments, in the fourth list groups, the cell index of the non-serving cell may be greater than or equal to an eighth threshold and less than or equal to a ninth threshold. For example, as shown in FIG. 14, the eighth threshold may be equal to 1, and the ninth threshold may be equal to N₄.

In some embodiments, a non-zero cell index in the sixth list groups may be greater than or equal to a tenth threshold and less than or equal to an eleventh threshold. For example, as shown in FIG. 16b, the tenth threshold may be equal to 1, and the eleventh threshold may be equal to N₅.

In some embodiments, the third threshold may be greater than 1. For example, when the third threshold (N₁) is greater than 1, the number of non-negative cell indices satisfying a condition of being less than the third threshold is greater than 1. Hence, in case of carrier aggregation (CA), the terminal equipment may be configured with more than one cell indices less than the third threshold, that is, the terminal equipment may be configured to perform SSB-based measurement on more than one serving cells. Therefore, based on reported measurement results, the network device may instruct the terminal equipment to be handed over from one serving cell to another. In carrier aggregation, multiple serving cells are equivalent to multiple component carriers (CCs).

In some embodiments, the third threshold may be a maximum number of serving cells that the terminal equipment may be configured with. For example, in case of carrier aggregation, the terminal equipment may be configured with at most 32 serving cells. Therefore, the third threshold may be equal to 32, corresponding to N₁=32 in FIGs. 8, 10 and 15. Or, the third threshold may also be the number of serving cells that the terminal equipment may be configured with. For example, in case of carrier aggregation, the third threshold is the number of serving cells that the terminal equipment is currently configured with.

In some embodiments, in the cell index list, the cell index of the serving cell may be an index ServCellIndex of the configured serving cell. For example, in case of carrier aggregation, the terminal equipment may be configured with multiple serving cells and indices ServCellIndex of the serving cells. In a case where the terminal equipment is configured with K first list groups, the index of the serving cell in the first list groups is the index ServCellIndex of the serving cell in carrier aggregation. Therefore, the terminal equipment may determine a serving cell according to the index of the serving cell in the first list groups. Wherein, reference may be made to relevant technologies for a definition of ServCellIndex, such as the existing standard TS 38.331-h20. However, this disclosure is not limited thereto, and the cell index of the serving cell may also be other parameters.

In some embodiments, in the cell index list, the cell index of the non-serving cell may be a configured index additionalPCIIndex of the non-serving cell. For example, additionalPCIIndex is a configured index of the non-serving cell. Reference may be made to relevant technologies for an IE format of additionalPCIIndex, such as Standard TS 38.331-h20. However, this disclosure is not limited thereto, and the cell index of the non-serving cell may also be other parameters.

Table 5 is another schematic table of the format of SSB-MTC-AdditionalPCI in the embodiment of this disclosure. In some embodiments, as shown in Table 5, at least one SSB-MTC-AdditionalPCI with the following format may be configured for the terminal equipment. For a non-serving cell with a cell index c, c is the additionalPCIIndex in SSB-MTC-AdditionalPCI, that is, additionalPCIIndex may always be equal to c.

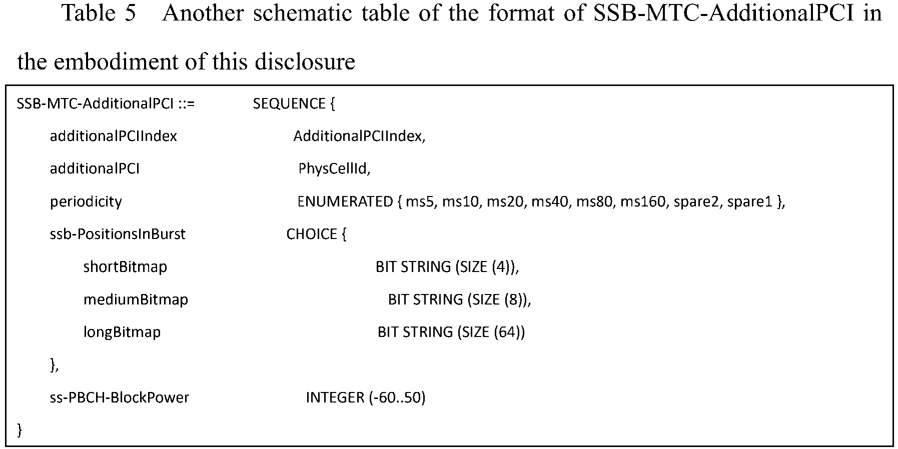

In some embodiments, the cell index of the non-serving cell may be a sum of the configured index additionalPCIIndex of the non-serving cell and an offset. For example, as shown in FIG. 8, a value of the cell index c of the non-serving cell satisfies N₁≤c≤N₁+N₂-1, thereby being distinguished from the serving cell. A value of additionalPClIndex may start from 0, such as greater than or equal to 0 and less than or equal to N₂-1. Or, the value of additionalPCIIndex may also start from 1, such as greater than or equal to 1 and less than or equal to N₂. In other words, c may differ from additionalPCIIndex by an offset.

In some embodiments, the terminal equipment may determine a PCI and SSB parameters associated with the cell index according to the cell indices in the cell index list in the list group. For example, the SSB parameters include periodicity, ssb-PositionsInBurst, and ss-PBCH-BlockPower. Reference may be made to relevant technologies for definitions of these parameters, such as the existing Standard TS 38.331-h20.

For a serving cell with cell index c, the PCI and SSB parameters are, for example, a PCI and SSB parameters of a serving cell with an index ServCellIndex of c. For a non-serving cell with cell index c, a PCI and SSB parameters thereof are, for example, a PCI and SSB parameters of a non-serving cell with index additionalPCIIndex of c or a difference (*c-offset*) between c and an offset; where, *offset* denotes the offset. Wherein, the PCI and SSB parameters of the non-serving cell may be included in SSB-MTC-AdditionalPCI.

In some embodiments, after the terminal equipment determines the SSB parameters associated with the cell index according to the cell indices in the cell index list, it may further determine SSB parameters associated with SSB indices according to the SSB parameters and the SSB indices in the SSB index list corresponding to the cell indices. Thus, the terminal equipment may perform SSB measurements according to the SSB parameters associated with the SSB indices.

In some embodiments, the terminal equipment may further receive a first index, the first index being used to indicate a center frequency of SSBs of an inter-frequency cell. For example, the first index may indicate a frequency in a group of frequencies. By configuring indices of frequencies instead of the frequencies themselves, an amount of data that need to be transmitted may be reduced.

For example, a configured SSB-MTC-AdditionalPCI includes information of a non-serving cell, including an index, a PCI, and SSB parameters. In SSB-MTC-AdditionalPCI of the inter-frequency cell, center frequency information of SSBs may be added. In configuring the center frequency, an absolute frequency value is not directly configured, but a frequency index (first index) is configured.

Table 6 is a further schematic table of the format of SSB-MTC-AdditionalPCI in the embodiment of this disclosure. In some embodiments, as shown in Table 6, in SSB-MTC-AdditionalPCI in the following format, a frequency in a group of absolute frequencies is indicated by the first index ssbFreqIndex; where, ssbFreqIndex is an optional parameter, for example, ssbFreqIndex may only be present in SSB-MTC-AdditionalPCI in the inter-frequency cell; however, this disclosure is not limited thereto, and the center frequency may also be indicated by other means.

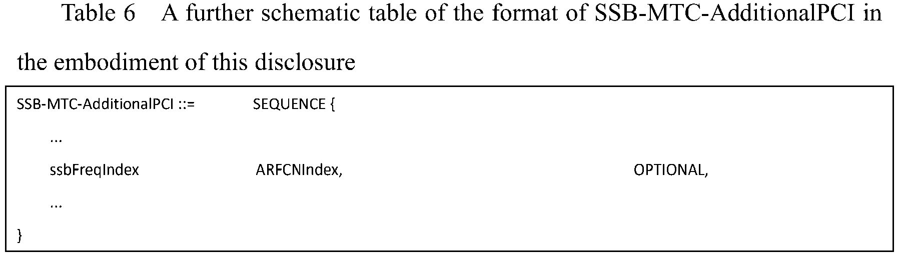

In some embodiments, the first configuration information may be included in a measurement configuration IE. Table 7 is a schematic table of a format of the measurement configuration IE in the embodiment of this disclosure. In some embodiments, as shown in Table 7, the measurement configuration IE (CSI-MeasConfig) in the following format may include one or more CSI-SSB-ResourceSet. A CSI-SSB-ResourceSet includes the first configuration information, i.e. SSBIndexList-k and CellIndexList-k; where, 1≤k≤K. The first configuration information may be included in existing CSI-MeasConfig, or it may also be included in newly defined CSI-MeasConfig (such as CSI-MeasConfig2); however, this disclosure is not limited thereto, and the first configuration information may also be included in other IEs.

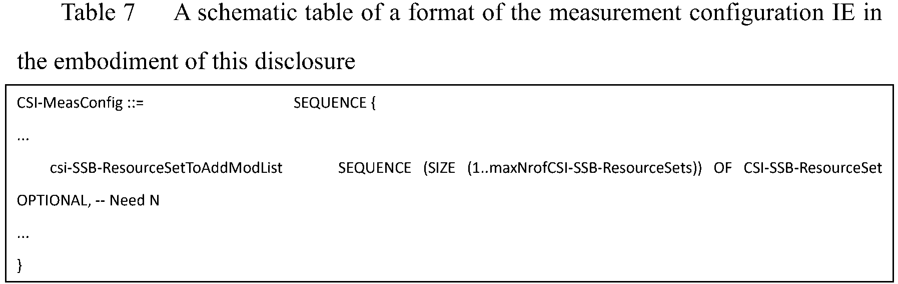

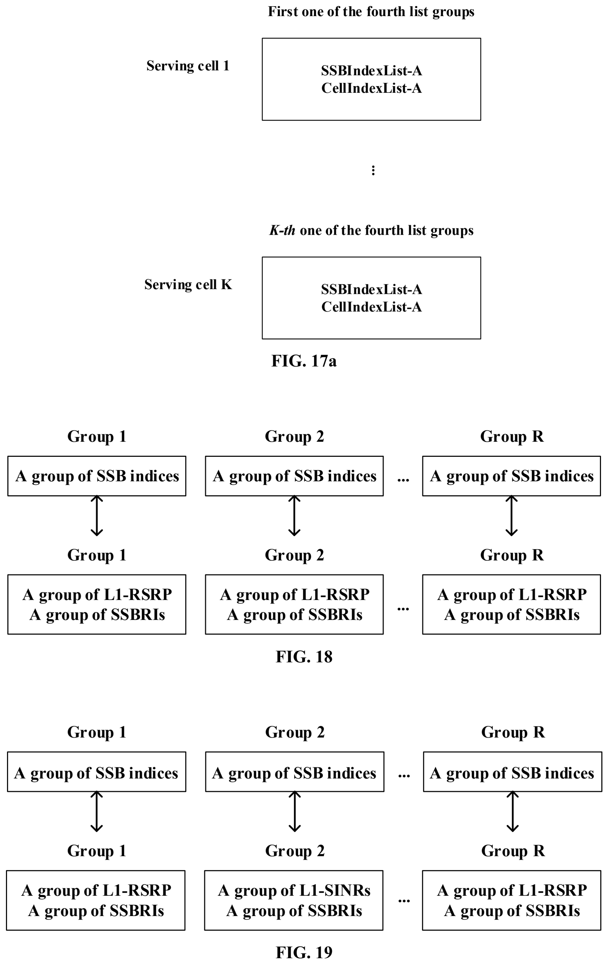

In some embodiments, the first configuration information may be configured per cell. FIG. 17 is a schematic diagram of a list group configured per cell in the embodiment of this disclosure. As shown in FIG. 17, the K list groups are configured per cell, one cell may be configured with one or more list groups, and the numbers of list groups configured for different cells may be different or identical. For example, as shown in FIG. 17, cells (Cell 1,..., Cell C) may be C serving cells of the terminal equipment. Cell c (1≤c≤C) may be configured with G_{c} (G_{c}≥1) list groups by CSI-SSB-ResourceSet in CSI-Measconfig. The terminal equipment may measure G_{c} groups of SSBs, so as to be handed over from Cell c to other serving cells or non-serving cells according to measurement results. Wherein, 'the first configuration information is configured per cell' is equivalent to 'the first configuration information is cell-specific'.

In some embodiments, the first configuration information may be configured per terminal equipment, in other words, the K list groups are configured per terminal equipment. For example, a terminal equipment is configured with one or more list groups. Wherein, 'the first configuration information is configured per terminal equipment' is equivalent to 'the first configuration information is UE-specific'.

In some embodiments, the first configuration information is configured for a Pcell or an SpCell. For example, the first configuration information (or measurement configuration) may only be configured for a Pcell or an SpCell. In other words, it is limited to that the K list groups may be configured only for a Pcell or an SpCell.

In some embodiments, the terminal equipment is configured with K serving cells, and the first configuration information configures a fourth list group for one serving cell (i.e. one serving cell is configured with one fourth list group).

FIG. 17a is another schematic diagram of the K list groups in the embodiment of this disclosure. In some embodiments, as shown in FIG. 17a, the terminal equipment is configured with K serving cells, and the first configuration information configures a fourth list group for each serving cell (i.e. no fifth list group is configured), thereby configuring K fourth list groups for the terminal equipment. A definition of the fourth list group is as described above, and one fourth list group may indicate SSB indices and cell indices of a serving cell and at least one non-serving cell. In this way, the terminal equipment may measure at least one serving cell and at least one non-serving cell.

In some embodiments, as shown in FIG. 3, the information processing method may further include:
303: transmitting R groups of reporting information for R groups of SSBs, wherein R≥1, a group of reporting information includes a group of L1-RSRP and a group of SSBRIs, or a group of L1-SINRs and a group of SSBRIs.

Thus, the terminal equipment transmits one or more groups of reporting information for one or more groups of SSBs, thereby achieving flexible measurement reporting and facilitating flexible cell handover.

In some embodiments, types of the reporting information of the groups in the R groups of reporting information may be identical, for example, all the R groups of reporting information report L1-RSRP, or all the R groups of reporting information report L1-SINRs. Or, the types of the reporting information of R groups of reporting information may also be different, for example, the R groups of reporting information may include a first group of reporting information and/or a second group of reporting information, wherein the first group of reporting information reports L1-RSRP, and the second group of reporting information reports L1-SINRs.

FIG. 18 is a schematic diagram of the R groups of reporting information in the embodiment of this disclosure. In some embodiments, as shown in FIG. 18, the terminal equipment transmits R groups of reporting information for R groups of SSBs (SSB indices). One time of reporting includes R groups of reporting information, and one group of reporting information includes one group of L1-RSRP and one group of SSBRIs. Here, the L1-RSRP in FIG. 18 may be replaced with an L1-SINR, that is, one group of reporting information includes one group of L1-SINRs and one group of SSBRIs.

FIG. 19 is another schematic diagram of the R groups of reporting information in the embodiment of this disclosure. In some embodiments, as shown in FIG. 19, one time of reporting may include L1-RSRP and an L1-SINR. For example, the terminal equipment may report the L1-RSRP for a first group of SSBs and report the L1-SINR for a second group of SSBs. For another example, the terminal equipment may report the L1-RSRP for a first group of SSBs belonging to a group of intra-frequency cells, and report the L1-SINR for a second group of SSBs belonging to a group of inter-frequency cells, etc.

In some embodiments, reporting the L1-RSRP or L1-SINR by the terminal equipment may be configured per group. In other words, types of reporting information included in the same group of reporting information are identical, for example, reporting information included in the same group of reporting information is all L1-RSRP or all L1-SINRs. However, this disclosure is not limited thereto, and for the same group of reporting information, types of reporting information may also be different. For example, the same group of reporting information includes the L1-RSRP and L1-SINR.

In some embodiments, in a group of reporting information, the number of L1-RSRP may be equal to the number of SSBRIs, or the number of L1-SINRs may be equal to the number of SSBRIs. Taking L1-RSRP as an example, for an *r-th* (1≤r≤R) group of reporting information, L1-RSRP is obtained based on measurement of an *r-th* group of SSBs, and an SSBRI corresponding to L1-RSRP is used to indicate an SSB in the *r-th* group of SSBs based upon which the L1-RSRP is obtained. The number of SSBRIs is equal to the number of L1-RSRP, and the SSBRIs are in a one-to-one correspondence with the L1-RSRP. Here, the L1-RSRP may be replaced with L1-SINRs.

In some embodiments, the *r-th* group of SSBs may include M1 SSBs, and an *r-th* group of reporting information for the *r-th* group of SSBs may include M2 pieces of L1-RSRP or L1-SINRs; where, M2≤M1, and 1≤r≤R. For example, the terminal equipment measures the M1 SSBs of the *r-th* group, and selects M2 SSBs (cells) with highest L1-RSRP or a highest L1-SINR in the group of SSBs (cells) to report. Therefore, the number of reported L1-RSRP or L1-SINRs may be less than the number of the SSBs. However, this disclosure is not limited thereto, and the number of reported L1-RSRP or L1-SINRs may also be equal to the number of the SSBs.

In some embodiments, the R groups of SSBs may be determined in various ways. For example, the R groups of SSBs may be determined according to the first configuration information. Hence, there is no need for additional signaling to indicate the R groups of SSBs.

In some embodiments, in a case where the first configuration information configures K groups of SSBs, the R groups of SSBs are the K groups SSBs, that is, R=K. This is equivalent to implicitly instructing the terminal equipment to report R (R=K) groups of measurement results. In other words, when the terminal equipment is configured with K groups of SSBs, the terminal equipment will report K groups of reporting information for the K groups of SSBs.

In some embodiments, in the case where the first configuration information configures K₁ second list groups and K₂ third list groups, the R groups of SSBs may be determined according to the indices of the SSB index list, wherein an *r-th* (r=1,2,..., R) group of SSBs may include SSBs indicated by SSB indices in an SSB index list with an index r in the second list groups (referred to as SSBs in an SSB index list) and/or SSBs indicated by SSB indices in an SSB index list with an index r in the third list groups; where, 1≤r≤R, 0≤K₁≤K, 0≤K₂≤K, and K₁+K₂=K.

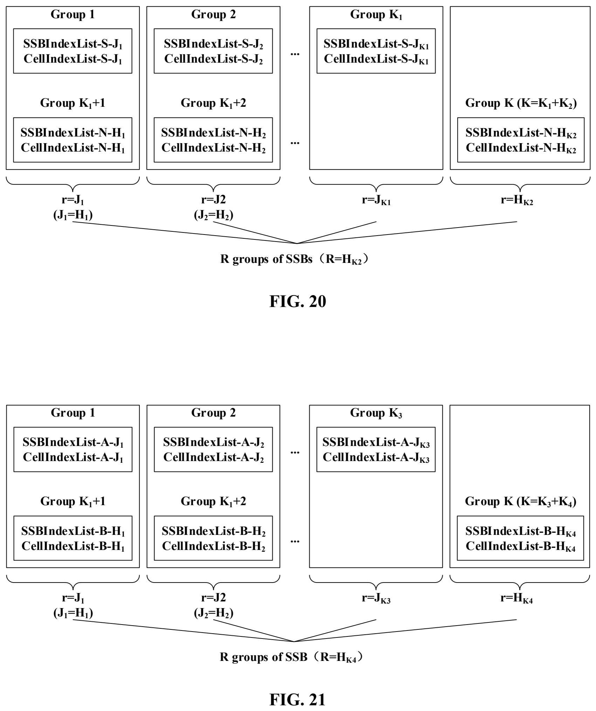

FIG. 20 is a schematic diagram of the R groups of SSBs in the embodiment of this disclosure. In some embodiments, as shown in FIG. 20, the first configuration information configures K₁ second list groups and K₂ third list groups. According to the indices of the SSB index list, the *r-th* group of SSBs may include SSBs in SSBIndexList-S, or may include SSBs in SSBIndexList-N, or may include SSBs in SSBIndexList-S and SSBs in SSBIndexList-N. For example, if SSBIndexList-S and SSBIndexList-N have identical indices, SSBs included in SSBIndexList-S and SSBIndexList-N belong to the same group of SSBs. Without loss of generality, it is assumed here that the indices of the SSB index list are all numbered starting from 1. As indices of an SSB index list are identical to indices of a cell index list in a list group, the "indices of an SSB index list" may also be equivalently replaced with "indices of a cell index list".

As shown in FIG. 20, for the SSB index list in the second list group, its indices (or suffixes) are J₁, J₂,..., J_{K1}, for example, the indices 1, 2, 3. For the SSB index list in the third list group, its indices are H₁, H₂,..., H_{K2}, for example, the indices are 1, 2, 4. In this case, the terminal equipment may transmit reporting information for the R (R=4) groups of SSBs. A first group of SSBs includes, for example, SSBs in SSBIndexList-S-1 and SSBIndexList-N-1, a second group of SSBs includes, for example, SSBs in SSBIndexList-S-2 and SSBIndexList-N-2, a third group of SSBs includes, for example, SSBs in SSBIndexList-S-3, and a fourth group of SSBs includes, for example, SSBs in SSBIndexList-N-4.

In some embodiments, in the case where the first configuration information configures K₃ fourth list groups and K₄ fifth list groups, the R groups of SSBs may be determined according to the indices of the SSB index list, wherein an *r-th* (r=1,2,..., R) group of SSBs may include SSBs in an SSB index list with an index r in the fourth list groups and/or SSBs in the SSB index list with an index r in the fifth list groups; where, 1≤r≤R, 0≤K₃≤K, 0≤K₄≤K, K₃+K₄=K.

FIG. 21 is another schematic diagram of the R groups of SSBs in the embodiment of this disclosure. In some embodiments, as shown in FIG. 21, the first configuration information configures K₃ fourth list groups and K₄ fifth list groups. According to the indices of the SSB index list, the *r-th* group of SSBs may include SSBs in SSBIndexList-A, or may include SSBs in SSBIndexList-B, or may include SSBs in SSBIndexList-A and SSBs in SSBIndexList-B. More specifically, if SSBIndexList-A and SSBIndexList-B have identical indices, SSBs included in SSBIndexList-A and SSBIndexList-B belong to the same group of SSBs. Without loss of generality, it is assumed here that the indices of the SSB index list are all numbered starting from 1. As indices of an SSB index list are identical to indices of a cell index list in a list group, the "indices of an SSB index list" may also be equivalently replaced with "indices of a cell index list".

In some embodiments, the R groups of SSBs may be determined according to whether the SSB indices included in the first configuration information belong to an intra-frequency cell or an inter-frequency cell. For example, in the R groups of SSBs, SSB indices of the same groups of SSBs belong to an intra-frequency cell.

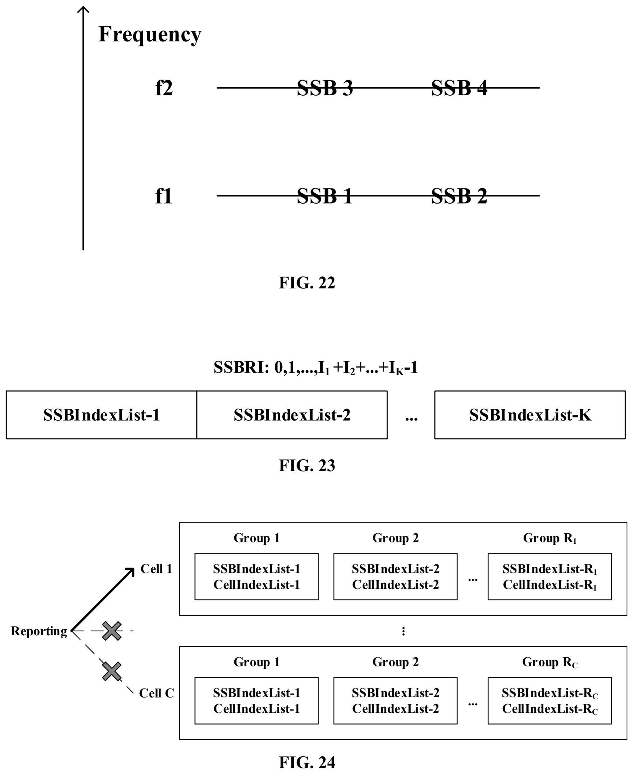

FIG. 22 is a further schematic diagram of the R groups of SSBs in the embodiment of this disclosure. In some embodiments, as shown in FIG. 22, for all the SSBs configured by the first configuration information, the terminal equipment may divide them into R groups of SSBs according to whether they belong to an intra-frequency cell or an inter-frequency cell. For example, within the same group of SSBs, SSB indices belong to an intra-frequency cell, and for SSBs in different groups, SSB indices belong to an inter-frequency cell. For example, as shown in FIG. 22, according to whether the SSB indices belong to an intra-frequency cell or an inter-frequency cell, four SSBs configured by the first configuration information are divided into two groups. A first group of SSBs includes SSB 1 and SSB 2, and a second group of SSBs includes SSB 3 and SSB 4. Wherein, SSB indices (SSB 1 and SSB 2) belong to an intra-frequency cell, and SSB indices (SSB 3 and SSB 4) belong to an intra-frequency cell, and the first group of SSB indices (SSB 1 and SSB 2) and the second group of SSB indices (SSB 3 and SSB 4) belong to an inter-frequency cell.

In some embodiments, in the case where the terminal equipment is configured with K serving cells and the first configuration information configures a fourth list group for each serving cell, the R groups of SSBs are SSBs included in the fourth list groups configured for the K serving cells, i.e. R=K.

For example, the terminal equipment is configured with K serving cells, and the first configuration information configures a fourth list group for each serving cell (i.e. no fifth list group is configured), hence, the terminal equipment is configured with K fourth list groups. The R groups of SSBs are SSBs in the SSB index list in the K fourth list groups; where, R=K. In other words, an *r-th* (r=1,2,..., R) group of SSBs includes SSBs in the SSB index list in the *r-th* fourth list group. A definition of the fourth list groups is as described above, and one fourth list group may indicate SSB indices and cell indices of a serving cell and at least one non-serving cell. In this way, the terminal equipment is able to report measurement results of at least one serving cell and at least one non-serving cell.

In some embodiments, the terminal equipment may receive second configuration information, the second configuration information configuring the R groups of SSBs, the R groups of SSB being different from the K groups of SSBs. For example, the R groups of SSBs may be re-division of the K groups of SSBs configured by the first configuration information, or the R groups of SSBs may be a subset of the K groups of SSBs. The number of SSBs included in the R groups of SSBs may be equal to the number of SSBs included in the K groups of SSBs, or the number of SSBs included in the R groups of SSBs may be less than the number of SSBs included in the K groups of SSBs; where, R may be equal to K, or R may be greater than K, or R may be less than K. For example, when K=1, R>1; or, when K>1, R>1, and R≠K, etc.

In some embodiments, the terminal equipment may receive the first configuration information and/or the second configuration information. In the case where the first configuration information configures the K groups of SSBs, the terminal equipment may perform measurement for the K groups of SSBs. And in a case where the second configuration information configures the R groups of SSBs, the terminal equipment may perform reporting for the R groups of SSBs.

In some embodiments, the second configuration information may configure the R groups of SSBs by configuring R groups of SSBRIs. For example, as an SSBRI may uniquely identify any SSB in the K (K≥1) groups of SSBs, the second configuration information may configure the R groups of SSBRIs, so that the terminal equipment may determine R groups of SSB indices; however, this disclosure is not limited thereto, and the second configuration information may also configure the R groups of SSBs by other means.

In some embodiments, in the R groups of SSBs, SSB indices of the same group of SSBs belong to an intra-frequency cell, and/or, SSB indices of different groups of SSBs belong to an inter-frequency cell. For example, no matter in which method the R groups of SSBs are obtained, SSB indices (SSBs) in an r-th group of SSBs belong to an intra-frequency cell, and SSB indices in an *r₁-th* group of SSBs and SSB indices in an *r₂-th* group of SSBs belong to an inter-frequency cell; where, r₁≠r_{2∘}

In some embodiments, an SSBRI may be used to identify an SSB index. For example, the SSBRI may be used to identify an SSB index in the K SSB index lists configured by the first configuration information, or the SSBRI may be used to identify an SSB index in an SSB index list configured by the first configuration information. A value of the SSBRI may start from 0, or may start from other values.

In some embodiments, an SSBRI with a value of s (s≥0) may denote an *(s+1)-th* SSB index in the first SSB index list. The first SSB index list may be obtained by cascading K SSB index lists included in the K list groups configured by the first configuration information. That is, K cascaded SSB index lists are globally indexed, so that one SSBRI may uniquely identify one SSB index. Hence, the terminal equipment may notify the network device of an SSB intended or preferred by itself by reporting the SSBRI, and the network device may notify the terminal equipment of SSB measurement results to be reported by indicating or configuring the SSBRI.

FIG. 23 is a schematic diagram of the SSBRI in the embodiment of this disclosure. As shown in FIG. 23, for the configured K SSB index lists, they may be cascaded into a first SSB index list, such as cascading in an ascending order of the indices of the list groups. However, this disclosure is not limited thereto, and the K SSB index lists may also be cascaded in other orders.

In some embodiments, Iₖ denotes the number of cell indices in the *k-th* list group, and s denotes the value of the SSBRI, a value range of s being 0≤s≤I₁+I₂+...+I_{K-1}. In a case where the K SSB index lists are configured per terminal equipment, the SSBRI may uniquely identify an SSB within a terminal equipment; and in a case where the K SSB index lists are configured per cell, the SSBRI may uniquely identify an SSB within a cell. However, this disclosure is not limited thereto, and the value of the SSBRI may also be in other value ranges.

In some embodiments, an SSBRI with a value of s (s≥0) may denote an *(s+1)-th* SSB index in a second SSB index list, which may be an SSB index list in the first configuration information. For example, although multiple (K>1) SSB index lists are configured for an SSBRI, it may only uniquely identify an SSB index in an SSB index list. In other words, the SSBRI is able to uniquely identify an SSB in a list group.

In some embodiments, the SSBRI with a value of s may denote an *(s+1)-th* SSB index in a third SSB index list, which may be obtained by cascading the SSB index lists with which the *r-th* group of SSBs is associated; where, s≥0, and 1≤r≤R. For example, as shown in FIG. 20 or FIG. 21, the *r-th* group of SSBs is associated with at least one SSB index list, that is, the SSB index of the *r-th* group of SSBs belongs to at least one SSB index list. The SSBRI is indexed in each group of SSBs in the R groups of SSBs, thereby uniquely identifying an SSB within each group of SSBs.

In some embodiments, the 'SSBRI' may be equivalently replaced with 'an SSBRI and cell index'. For example, in the case where the SSBRI may uniquely identify SSBs within a cell, if the terminal equipment transmits reporting information for list groups configured for multiple cells, it may additionally report cell indices to distinguish different cells.

In some embodiments, the 'SSBRI' may be equivalently replaced with 'an SSBRI, a list group index', or 'an SSBRI, a list group index and a cell index'. For example, in the case where the SSBRI may uniquely identify SSBs within a list group, if the terminal equipment transmits reporting information for a list group configured for a cell, it needs to additionally report list group indices to distinguish different list groups. For another example, in the case where the SSBRI may uniquely identify SSBs within a list group, if the terminal equipment transmits reporting information for list groups configured for multiple cells, it needs to additionally report list group indices and cell indices to distinguish different list groups and different cells.

In some embodiments, the 'SSBRI' may be equivalently replaced with 'an SSBRI, an SSB group index', or 'an SSBRI, an SSB group index and a cell index'. Here, an SSB group denotes a group of SSBs in the R groups of SSBs, hence, the SSB group index may denote the *r-th* group of SSBs in the R groups of SSBs. For example, in the case where the SSBRI may uniquely identify SSBs within an SSB group, if the terminal equipment transmits reporting information for R groups of SSBs configured for a cell, it needs to additionally report SSB group indices to distinguish different SSB groups. For another example, in the case where the SSBRI may uniquely identify SSBs within an SSB group, if the terminal equipment transmits reporting information for list groups configured for multiple cells, it needs to additionally report SSB group indices and cell indices to distinguish different SSB groups and different cells.

In some embodiments, the 'SSBRI' may be equivalently replaced with 'an SSB index and a cell index'. For example, the SSB indices and cell indices in the first configuration information may also be directly used to uniquely identify an SSB of a cell.

In some embodiments, the R groups of SSBs may be configured per cell. FIG. 24 is a schematic diagram of the R groups of SSBs configured per cell of the embodiment of this disclosure. As shown in FIG. 24, the R groups of SSBs are configured per cell, a cell may be configured with one or more groups of SSBs, and numbers of groups of SSBs configured for different cells may be different or identical. For example, as shown in FIG. 24, cells (Cell 1,..., Cell C) may be C serving cells of the terminal equipment. Cell c (1≤c≤C) may be configured with R_{c} (R_{c}≥1) groups of SSBs. The terminal equipment may report measurement results of the R_{c} groups of SSBs for Cell c, so as to be handed over from Cell c to other serving cells or non-serving cell according to the measurement results. Wherein, the 'R groups of SSBs are configured per cell' is equivalent to 'configuration of the R groups of SSBs is cell-specific'. The R groups of SSBs may be implicitly configured by the first configuration information or explicitly configured by the second configuration information. However, this disclosure is not limited thereto, and the R groups of SSBs may also be configured per terminal equipment.

In some embodiments, the reporting information may be associated with list groups configured for one or more cells. For example, in a case where the reporting information is associated with a list group configured for a cell, the terminal equipment may transmit the reporting information for R groups of SSBs configured for a cell. As shown in FIG. 24, the first configuration information (e.g. CSI-SSB-ResourceSet) configures the R groups of SSBs per cell. For example, Cell 1 is configured with R₁ (R=R₁) list groups by CSI-SSB-ResourceSet, and CSI-SSB-ResourceSet is associated with report of L1-RSRP and/or an L1-SINR. In other words, a report is associated with a CSI-SSB-ResourceSet, and the terminal equipment reports for the R₁ groups of SSBs configured for Cell 1. For other cells than Cell 1, as list groups configured for the other cells are not associated with the report, the report does not include reporting information for the list groups configured for the other cells. In a case where the other cells are not configured with list groups, there is naturally no need to include corresponding reporting information in the report.

For another example, in the case where the reporting information is associated with list groups configured for multiple cells, the terminal equipment may transmit the reporting information for R groups of SSBs configured for the multiple cells. For example, the first configuration information configures the R groups of SSBs for the multiple cells, and the terminal equipment reports for the R groups of SSBs configured for the multiple cells. For other cells than the multiple groups, as list groups configured for the other cells are not associated with the report, the report does not include reporting information for the list groups configured for the other cells. In the case where the other cells are not configured with list groups, there is naturally no need to include corresponding reporting information in the report.

In some embodiments, the L1-RSRP and/or L1-SINR in the reporting information may be quantized L1-RSRP and/or L1-SINR. Wherein, the L1-RSRP and/or L1-SINR may be quantized in various ways. For example, the L1-RSRP and/or L1-SINR may be quantized per group; or, quantization may be performed according to a type of the reporting information, such as separately quantizing the L1-RSRP and L1-SINR, or quantizing the L1-RSRP and L1-SINR jointly.

Quantization of the L1-RSRP and/or L1-SINR shall be exemplarily explained below.

In some embodiments, the L1-RSRP and/or L1-SINR may be quantified per group. For example, following operations are performed on an *r-th* group of L1-RSRP or L1-SINRs: quantizing L1-RSRP or an L1-SINR into B₁ bits, and quantizing remaining L1-RSRP or L1-SINRs as differential L1-RSRP or differential L1-SINRs into B₂ bits; where, B₂<B₁, and 1≤r≤R. Wherein, for different groups, B₁ may be identical or different, and B₂ may be identical or different.

In some embodiments, the L1-RSRP or L1-SINR may be largest L1-RSRP or L1-SINR, in other words, in an *r-th* group of reporting information, largest L1-RSRP or L1-SINR is quantized into B₁ bits. However, this disclosure is not limited thereto, and it may also be that other L1-RSRP or L1-SINRs in the *r-th* group is/are quantified into B₁ bits.

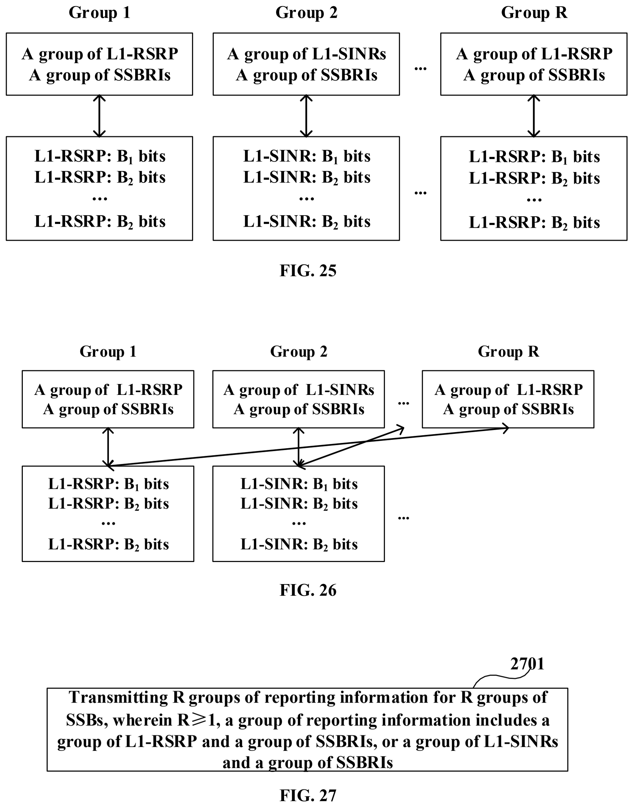

FIG. 25 is a schematic diagram of a quantization mode of the embodiment of this disclosure. In some embodiments, as shown in FIG. 25, the terminal equipment quantizes the L1-RSRP or L1-SINR per group. Following description shall be given by taking reporting a group of L1-RSRP as an example; however, it should be understood that the following contents are also applicable to reporting a group of L1-SINRs. For a group of L1-RSRP that need to be reported, largest L1-RSRP may be quantized into B₁ bits (e.g. 7 bits), and other L1-RSRP within the group are quantized into B₂ bits (e.g. 4 bits) in a differential manner. That is, B₂ bits are used to indicate a difference between the other L1-RSRP and the largest L1-RSRP. Reference may be made to relevant technologies for a specific quantization mode and quantified values, such as subsections 5.2.1.4.3 and 5.2.1.4.4 of the existing Standard TS 38.214-h30.

In some embodiments, in the R groups of reporting information, the SSBRIs and quantized L1-RSRP or L1-SINRs may be arranged in various ways. For example, the R groups of reporting information may be arranged in an order of "the SSBRIs first and then the L1-RSRP and/or L1-SINRs", that is, in the R groups of reporting information, the SSBRIs are arranged first and then the L1-RSRP and/or L1-SINRs are arranged. However, this disclosure is not limited thereto, and the R groups of reporting information may also be arranged in an order of "the L1-RSRP and/or L1-SINRs first and then the SSBRIs".

In some embodiments, the SSBRIs may be arranged in an incremental order of the group indices of the R groups of reporting information, or, the SSBRIs may be arranged in a decremental order of the group indices of the R groups of reporting information, or, the SSBRIs may be arranged in other orders.

In some embodiments, in a group of SSBRIs, the SSBRIs may be arranged in an incremental order of the SSBRIs, or the SSBRIs may be arranged in a decremental order of the SSBRIs, or the SSBRI may be arranged in other orders.

In some embodiments, the L1-RSRP and/or L1-SINRs may be arranged in an order of SSBRIs corresponding to the L1-RSRP and/or L1-SINRs. Hence, an SSB based upon which the L1-RSRP and/or L1-SINRs is/are obtained may be determined in a simple manner.

In some embodiments, in an *r-th* (1≤r≤R) group of SSBRIs, L1-RSRP or an L1-SINR to which a first SSBRI corresponds may be quantized into B₁ bits, and L1-RSRP or L1-SINRs to which remaining SSBRIs correspond may be quantized into B₂ bits.

Table 8 is a schematic table of the arrangement order of "SSBRIs first and then the L1-RSRP and/or L1-SINRs" in the embodiment of this disclosure, in which the arrangement order is exemplarily shown by taking the L1-RSRP as an example. As shown in Table 8, in the R groups of reporting information, the SSBRIs are arranged in an incremental order of the group indices of the R groups of reporting information, and the L1-RSRP is arranged in an order of SSBRIs to which the L1-RSRP corresponds. In the *r-th* (1≤r≤R) group of SSBRIs, L1-RSRP to which a first SSBRI corresponds is quantized into B₁ bits, and L1-RSRP to which remaining SSBRIs correspond is quantized into B₂ bits.

**Table 8 A schematic table of the arrangement order of "SSBRIs first and then the L1-RSRP and/or L1-SINRs"**

| |
|---|
| SSBRI #1 in Group 1 |
| **SSBRI** #2 in Group 1 |
| ... |
| SSBRI #O₁ in Group 1 |
| ... |
| SSBRI #1 in Group R |
| SSBRI #2 in Group R |
| ... |
| SSBRI #O_{R} in Group R |
| ... |
| RSRP of SSBRI #1 in Group 1 |
| Differential RSRP of SSBRI #2 in Group 1 |
| ... |
| Differential RSRP of SSBRI #O₁ in Group 1 |
| ... |
| RSRP of SSBRI #1 in Group R |
| Differential RSRP of SSBRI #2 in Group R |
| ... |
| Differential RSRP of SSBRI #O_{R} in Group R |

In some embodiments, quantization may be performed according to the type of the reporting information. For example, the L1-RSRP and L1-SINRs are quantized separately. For another example, the L1-RSRP and L1-SINRs are quantized jointly.

In some embodiments, in a case where the R groups of reporting information include R₁ groups of L1-RSRP and R₂ groups of L1-SINRs (0<R₁<R, 0<R₂<R, R₁+R₂=R), following operations may be respectively performed on the R₁ groups of L1-RSRP and R₂ groups of L1-SINRs: for example, for the R₁ groups of L1-RSRP, one piece of L1-RSRP is quantized into B₁ bits, and remaining L1-RSRP is quantized as differential L1-RSRP into B₂ bits; where, B₂<B₁. For the R₂ groups of L1-SINRs, one L1-SINR is quantized into B₁ bits, and remaining L1-SINRs are quantized as differential L1-SINRs into B₂ bits; where, B₂<B₁. Wherein, the number B₁ of quantized bits of one piece of L1-RSRP may be identical or different from the number B₁ of quantized bits of one L1-SINR, and the number B₂ of quantized bits of remaining L1-RSRP taken as differential L1-RSRP may be identical or different from the number B₂ of quantized bits of remaining L1-SINRs taken as differential L1-SINRs.

In some embodiments, for the R₁ groups of L1-RSRP, the one piece of L1-RSRP quantized into B₁ bits may be the largest L1-RSRP, in other words, the largest L1-RSRP in the R₁ groups of L1-RSRP is quantized into B₁ bits; however, this disclosure is not limited thereto, and other L1-RSRP in the R₁ groups of L1-RSRP may also be quantized into B₁ bits. For the R₂ groups of L1-SINRs, the L1-SINR quantified into B₁ bits may be the largest L1-SINR, in other words, the largest L1-SINR in the R₂ groups of L1-SINRs is quantified into B₁ bits; however, this disclosure is not limited thereto, and other L1-SINRs in the R₂ groups of L1-SINRs may also be quantized into B₁ bits.

FIG. 26 is another schematic diagram of the quantization mode of the embodiment of this disclosure. In some embodiments, as shown in FIG. 26, in a case where one time of report includes L1-RSRP and L1-SINRs, the terminal equipment quantizes the L1-RSRP and L1-SINRs separately. For example, the terminal equipment quantizes all the L1-RSRP, quantizes largest L1-RSRP into B₁ bits, and quantizes other L1-RSRP into B₂ bits. The terminal equipment quantizes all the L1-SINR, quantizes a largest L1-SINR into B₁ bits, and quantizes other L1-SINRs into B₂ bits.

In some embodiments, in the R groups of reporting information, the SSBRIs and quantized L1-RSRP or L1-SINRs may be arranged in various ways. For example, the R groups of reporting information are arranged in an order of "the SSBRIs first and then the L1-RSRP and/or L1-SINRs", that is, in the R groups of reporting information, the SSBRIs are arranged first and then the L1-RSRP and/or L1-SINRs are arranged. However, this disclosure is not limited thereto, and the R groups of reporting information may also be arranged in an order of "the L1-RSRP and/or L1-SINRs first and then the SSBRIs".

In some embodiments, the SSBRIs are arranged in an order of "SSBRIs to which the L1-RSRP corresponds first and then SSBRIs to which the L1-SINRs correspond". Or, the SSBRIs may be arranged in an order of "SSBRIs to which the L1-SINRs correspond first and then SSBRIs to which the L1-RSRP corresponds".

In some embodiments, in the SSBRIs to which the L1-RSRP corresponds, the SSBRIs may be arranged in an incremental order of the SSBRIs, or in a decremental order of the SSBRIs, or, the SSBRIs may also be arranged in other orders. In the SSBRIs to which the L1-SINRs correspond, the SSBRIs may be arranged in an incremental order of the SSBRIs, or in a decremental order of the SSBRIs, or, the SSBRIs may also be arranged in other orders.

In some embodiments, the L1-RSRP and/or the L1-SINRs is/are arranged in an order of SSBRIs to which it/they correspond(s).

In some embodiments, in the SSBRIs to which the L1-RSRP corresponds, L1-RSRP to which a first SSBRI corresponds is quantized into B₁ bits, and L1-RSRP to which remaining SSBRIs correspond is quantized into B₂ bits; and/or, in the SSBRIs to which the L1-SINRs correspond, an L1-SINR to which a first SSBRI corresponds is quantized into B₁ bits, and an L1-SINR to which remaining SSBRIs correspond is quantized into B₂ bits.

Table 9 is another schematic table of the arrangement order of "the SSBRIs first and then the L1-RSRP and/or L1-SINRs". As shown in Table 9, in the R groups of reporting information, the SSBRIs are arranged in an order of "the SSBRIs to which the L1-RSRP corresponds first and then the SSBRIs to which the L1-SINRs correspond". In the SSBRIs to which the L1-SINRs correspond, L1-RSRP of a first SSBRI is quantized into B₁ bits, and L1-RSRP of remaining SSBRIs is quantized into B₂ bits. The L1-RSRP and/or the L1-SINRs are arranged in an order of SSBRIs corresponding thereto.

**Table 9 Another schematic table of the arrangement order of "the SSBRIs first and then the L1-RSRP and/or L1-SINRs"**

| |
|---|
| SSBRI #1 to which the RSRP corresponds |
| SSBRI #2 to which the RSRP corresponds |
| ... |
| SSBRI #O_{RSRP} to which the RSRP corresponds |
| SSBRI #1 to which the SINRs correspond |
| SSBRI #2 to which the SINRs correspond |
| ... |
| SSBRI #O_{SINR} to which the SINRs correspond |
| RSRP of SSBRI #1 to which RSRP corresponds |
| Differential RSRP of SSBRI #2 to which RSRP corresponds |
| ... |
| Differential RSRP of SSBRI #O_{RSRP} to which RSRP corresponds |
| SINR of SSBRI #1 to which SINR |
| Differential SINR of SSBRI #2 to which SINR corresponds |
| ... |
| Differential SINR of SSBRI #O_{SINR} to which SINR corresponds |

In some embodiments, in a case where the R groups of reporting information include R₁ groups of L1-RSRP and R₂ groups of L1-SINRs (0<R₁<R, 0<R₂<R, R₁+R₂=R), the following operations may be performed on the R₁ groups of L1-RSRP and R₂ groups of L1-SINRs: one piece of L1-RSRP or an L1-SINR is quantized into B₁ bits, and remaining L1-RSRP and L1-SINRs are quantized as differential L1-RSRP and differential L1-SINRs into B₂ bits; where, B₂<B₁.

For example, one piece of L1-RSRP in the R₁ groups of L1-RSRP is quantized into B₁ bits, and remaining L1-RSRP in the R₁ groups of L1-RSRP and remaining L1-SINRs in the R₂ groups of L1-SINRs are quantized as differential L1-RSRP and differential L1-SINRs into B₂ bits.

For another example, one L1-SINR in the R₂ groups of L1-SINRs is quantized into B₁ bits, and remaining L1-SINRs in the R₂ group of L1-SINRs and remaining L1-RSRP in the R₁ groups of L1-RSRP are quantized as differential L1-SINRs and differential L1-RSRPinto B₂ bits.

In some embodiments, for the R₁ groups of L1-RSRP and the R₂ groups of L1-SINRs, the L1-RSRP or L1-SINR quantified into B₁ bits may be largest L1-RSRP or a largest L1-SINR. For example, in a case where one time of reporting includes the L1-RSRP and L1-RSRP, the largest one in the largest L1-RSRP, or the largest L1-SINR, or the largest L1-RSRP and the largest L1-SINR, is quantized into B₁ bits, and other L1-RSRP and L1-SINRs are quantized into B₂ bits. However, this disclosure is not limited thereto, and it may also be that other L1-RSRP or L1-SINRs in the R₁ groups of L1-RSRP and the R₂ group of L1-SINRs are quantified into B₁ bits.

In some embodiments, in the R groups of reporting information, the SSBRIs and quantized L1-RSRP or L1-SINRs may be arranged in various ways. For example, the R groups of reporting information are arranged in an order of "the SSBRIs first and then the L1-RSRP and/or L1-SINRs", that is, in the R groups of reporting information, the SSBRIs are arranged first and then the L1-RSRP and/or L1-SINRs are arranged. However, this disclosure is not limited thereto, and the R groups of reporting information may also be arranged in an order of "the L1-RSRP and/or L1-SINRs first and then the SSBRIs".

In some embodiments, the SSBRIs may be arranged in an incremental order of the SSBRIs, or in a decremental order of the SSBRIs, or, the SSBRIs may also be arranged in other orders.

In some embodiments, the L1-RSRP and/or the L1-SINRs is/are arranged in an order of SSBRIs to which it/they correspond(s).

In some embodiments, L1-RSRP or an L1-SINR to which a first SSBRI corresponds is quantized into B₁ bits, and L1-RSRP and L1-SINRs to which remaining SSBRIs correspond are quantized into B₂ bits.

Table 10 is a further schematic table of the arrangement order of "the SSBRIs first and then the L1-RSRP and/or L1-SINRs". As shown in Table 10, in the R groups of reporting information, a first SSBRI (SSBRI #1) may correspond to the largest L1-RSRP, and for remaining SSBRIs, some of them (such as SSBRI #2) correspond to the L1-SINRs, and some (such as SSBRI #O) correspond to the L1-RSRP.

**Table 10 A further schematic table of the arrangement order of "the SSBRIs first and then the L1-RSRP and/or L1-SINRs"**

| |
|---|
| SSBRI #1 |
| SSBRI #2 |
| ... |
| SSBRI #O |
| RSRP of SSBRI #1 |
| Differential SINR of SSBRI #2 |
| ... |
| Differential RSRP of SSBRI #O |

In some embodiments, in a case where the R groups of reporting information include R₁ groups of L1-RSRP or R₂ groups of L1-SINRs, the following operations may be performed on the R₁ groups of L1-RSRP or R₁ groups of L1-SINRs: one piece of L1-RSRP or an L1-SINR is quantized into B₁ bits, and remaining L1-RSRP or L1-SINRs are quantized as differential L1-RSRP or differential L1-SINRs into B₂ bits; where, B₂<B₁.

For example, in the case where the R groups of reporting information include the R groups of L1-RSRP, one piece of L1-RSRP in the R groups of L1-RSRP is quantized into B₁ bits, and remaining L1-RSRP is quantized as differential L1-RSRP into B₂ bits; where, B₂<B₁.

For another example, in the case where the R groups of reporting information include R groups of L1-SINRs, one L1-SINR in the R groups of L1-SINRs is quantized into B₁ bits, and remaining L1-SINRs are quantized as differential L1-SINRs into B₂ bits; where, B₂<B₁.

In some embodiments, for the R groups of L1-RSRP, the one piece of L1-RSRP quantized into B₁ bits may be the largest L1-RSRP. For example, in a case where one time of reporting only includes L1-RSRP, the terminal equipment quantizes all the L1-RSRP, quantizes the largest L1-RSRP into B₁ bits, and quantizes other L1-RSRP into B₂ bits. However, this disclosure is not limited thereto, and other L1-RSRP in the R groups of L1-RSRP may also be quantized into B₁ bits. Here, the L1-RSRP may be replaced with an L1-SINR.

In some embodiments, in the R groups of reporting information, the SSBRIs and quantized L1-RSRP or L1-SINRs may be arranged in various ways. For example, the R groups of reporting information may be arranged in an order of "the SSBRIs first and then the L1-RSRP or L1-SINRs". However, this disclosure is not limited thereto, and the R groups of reporting information may also be arranged in an order of "the L1-RSRP or L1-SINRs first and then the SSBRIs".

In some embodiments, the SSBRIs may be arranged in an incremental order of the SSBRIs, or in a decremental order of the SSBRIs, or, the SSBRIs may also be arranged in other orders.

In some embodiments, the L1-RSRP or the L1-SINRs is/are arranged in an order of SSBRIs to which it/they correspond(s).

In some embodiments, L1-RSRP or an L1-SINR to which a first SSBRI corresponds is quantized into B₁ bits, and L1-RSRP or L1-SINRs to which remaining SSBRIs correspond is/are quantized into B₂ bits.

Table 11 is still another schematic table of the arrangement order of "the SSBRIs first and then the L1-RSRP and/or L1-SINRs" in the embodiment of this disclosure, in which an arrangement order is shown by taking R groups of L1-RSRP as an example. As shown in Table 11, in the R groups of reporting information, L1-RSRP to which a first SSBRI (SSBRI #1) corresponds is quantized into B₁ bits, and remaining L1-RSRP is quantized into B₂ bits.

**Table 11 Still another schematic table of the arrangement order of "the SSBRIs first and then the L1-RSRP and/or L1-SINRs"**

| |
|---|
| SSBRI #1 |
| SSBRI #2 |
| ... |
| SSBRI #O |
| RSRP of SSBRI #1 |
| Differential RSRP of SSBRI #2 |
| ... |
| Differential RSRP of SSBRI #O |

In some embodiments, the SSBRIs may be sequentially arranged per group of the R groups of reporting information (or the R groups of SSBs), wherein groups where the SSBRIs corresponding to the L1-RSRP or L1-SINRs quantized into B₁ bits rank first, and remaining groups are arranged in an incremental order of group indices.

Table 11a is yet another schematic table of the arrangement order of "the SSBRIs first and then the L1-RSRP and/or L1-SINRs" in the embodiment of this disclosure, in which an arrangement order is shown by taking R groups of L1-RSRP as an example. As shown in Table 11a, L1-RSRP to which a first SSBRI (such as SSBRI #1 in group r₁) corresponds is quantized into B₁ bits, and remaining L1-RSRP is quantized into B₂ bits. Groups (such as group r₂,..., group r_{R}) other than a group where the first SSBRI is located (such as group r₁) are arranged in an incremental order of group indices (such as r₂,..., r_{R}); where, 1≤r₁, r₂, ..., r_{R}≤R.

**Table 11a Yet another schematic table of the arrangement order of "the SSBRIs first and then the L1-RSRP and/or L1-SINRs"**

| |
|---|
| SSBRI #1 in Group f₁ |
| SSBRI #2 in Group f₁ |
| ... |
| SSBRI #Or₁ in Group r₁ |
| ... |
| SSBRI #1 in Group r_{R} |
| SSBRI #2 in Group r_{R} |
| ... |
| SSBRI #Or_{R} in Group r_{R} |
| ... |
| RSRP of SSBRI #1 in Group r₁ |
| Differential RSRP of SSBRI #2 in Group r₁ |
| ... |
| Differential RSRP of SSBRI #Or₁ in Group r₁ |
| ... |
| Differential RSRP of SSBRI #1 in Group r_{R} |
| Differential RSRP of SSBRI #2 in Group r_{R} |
| ... |
| Differential RSRP of SSBRI #Or_{R} in Group r_{R} |

In some embodiments, the L1-RSRP or the L1-SINRs is/are arranged in an order of SSBRIs to which it/they correspond(s).

In some embodiments, the terminal equipment may transmit indication information, the indication information indicating a group in the R groups of SSBs to which the SSBRIs corresponding to the L1 SRSP or L1-SINRs quantized into B₁ bits belong. For example, the terminal equipment transmits R groups of reporting information and indication information. Table 12 is yet still another schematic table of the arrangement order of "the SSBRIs first and then the L1-RSRP and/or L1-SINRs". As shown in Table 12, L1-RSRP to which a first SSBRI corresponds is quantized into B₁ bits (for example, L1-RSRP to which an SSBRI in the R groups of reporting information corresponds is quantized into B₁ bits, hence, this SSBRI is the first SSBRI in Table 12), and L1-RSRP to which remaining SSBRIs correspond is quantized into B₂ bits; the SSBRIs are sequentially arranged per group of the R groups of reporting information (or the R groups of SSBs); a group where the SSBRIs corresponding to the L1-RSRP quantized into B₁ bits rank first, and remaining groups are arranged in an incremental order of the group indices; the L1-RSRP is arranged in an order of the SSBRIs to which the L1-RSRP corresponds; the indication information indicates a group in the R groups of SSBs to which the first SSBRI belongs, i.e. indicating a group index (e.g. r₁) of the R groups of reporting information; and it is assumed that the numbers of SSBRIs (L1-RSRP) included in the groups of reporting information are identical. In this way, an SSBRI may uniquely identify an SSB in each group of SSBs, hence, the SSBRIs may be indexed in each group of SSBs (the third SSB index list) in the R groups of SSBs. Compared to global indexing in the first SSB index list, the SSBRIs indexed in the third SSB index list needs fewer bits, thus saving reporting overhead. Wherein, when r₁=1, in the R groups of reporting information, the SSBRIs are arranged in an incremental order of the group indices.

**Table 12 Yet still another schematic table of the arrangement order of "the SSBRIs first and then the L1-RSRP and/or L1-SINRs"**

| Indication information |
|---|
| SSBRI #1 in Group r₁ |
| SSBRI #2 in Group r₁ |
| ... |
| SSBRI #O in Group r₁ |
| ... |
| SSBRI #1 in Group r_{R} |
| SSBRI #2 in Group r_{R} |
| ... |
| SSBRI #O in Group r_{R} |
| ... |
| RSRP of SSBRI #1 in Group r₁ |
| Differential RSRP of SSBRI #2 in Group r₁ |
| ... |
| Differential RSRP of SSBRI #O in Group r₁ |
| ... |
| Differential RSRP of SSBRI #1 in Group r_{R} |
| Differential RSRP of SSBRI #2 in Group r_{R} |
| ... |
| Differential RSRP of SSBRI #O in Group r_{R} |

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It can be seen from the above embodiment that the terminal equipment receives the first configuration information, the first configuration information including one or more list groups, and one list group including an SSB index list and a cell index list. Hence, the terminal equipment may perform SSB measurement according to the first configuration information, thereby achieving flexible measurement configurations, which is helpful to flexible cell handover.

### Embodiment of a second aspect

The embodiment of this disclosure provides an information processing method, applicable to a terminal equipment side, with contents identical to those in the embodiment of the first aspect being not going to be described herein any further.

FIG. 27 is a schematic diagram of the information processing method of the embodiment of this disclosure. As shown in FIG. 27, the method includes:
2701: transmitting R groups of reporting information for R groups of SSBs, wherein R≥1, a group of reporting information includes a group of L1-RSRP and a group of SSBRIs, or a group of L1-SINRs and a group of SSBRIs.

In the above embodiment, the terminal equipment transmits one or more groups of reporting information for one or more groups of SSBs, each group of reporting information including one group of L1-RSRP and one group of SSBRIs, or one group of L1-SINRs and one group of SSBRIs, thereby achieving flexible measurement reporting, which is helpful to flexible cell handover.

It should be noted that FIG. 27 only schematically illustrates the embodiment of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 27.

In some embodiments, in a group of reporting information, the number of L1-RSRP is equal to the number of SSBRIs, or the number of L1-SINRs is equal to the number of SSBRIs.

In some embodiments, the R groups of reporting information include a first group of reporting information and/or a second group of reporting information, the first group of reporting information including a group of L1-RSRP and a group of SSBRIs, and the second group of reporting information including a group of L1-SINRs and a group of SSBRIs.

In some embodiments, an *r-th* group of SSBs includes M1 SSBs, and an *r-th* group of reporting information for the *r-th* group of SSBs includes M2 pieces of L1-RSRP or L1-SINRs; where, M2≤M1, and 1≤r≤R.

In some embodiments, the terminal equipment may receive first configuration information, the first configuration information configuring K groups of SSBs. The first configuration information includes K list groups, each of which including an SSB index list and a cell index list; where, K≥1.

In some embodiments, the K list groups include K first list groups. In a *k-th* first list group, if an *i-th* cell index in the cell index list is less than a third threshold, the *i-th* cell index and an *i-th* SSB index in the SSB index list belong to a serving cell, and if the *i-th* cell index in the cell index list is greater than or equal to the third threshold, the *i-th* cell index and the *i-th* SSB index in the SSB index list belong to a non-serving cell; where, 1≤k≤K, 1≤i≤Iₖ, Iₖ being the number of the cell indices in the *k-th* first list group.

In some embodiments, the K list groups include K₁ second list groups and K₂ third list groups, the second list groups including SSB index lists and cell index lists of the serving cell, and the third list groups including SSB index lists and cell index lists of the non-serving cell; where, 0≤K₁≤K, 0≤K₂≤K, and K₁+K₂=K.

In some embodiments, indices of the SSB index lists in the second list groups and indices of the SSB index lists in the third list groups are independently numbered.

In some embodiments, the K list groups include K₃ fourth list groups and K₄ fifth list groups. In a *k₃-th* fourth list group, if an *i-th* cell index is equal to 0, the *i-th* cell index and an *i-th* SSB index in the SSB index list belong to a serving cell defined for the *k₃-th* fourth list group. If the *i-th* cell index is greater than 0, the *i-th* cell index and the *i-th* SSB index in the SSB index list belong to a non-serving cell. The fifth list groups include SSB index lists and the cell index lists of the serving cell; where, 1≤ k₃≤K₃, 1≤i≤I*ₖ₃*, I*ₖ₃* being the number of cell indices in the *k₃-th* fourth list group, and 0≤K₃≤K, 0≤K₄≤K, K₃+K₄=K.

In some embodiments, indices of the SSB index lists in the fourth list groups and indices of the SSB index lists in the fifth list groups are independently numbered.

In some embodiments, the R groups of SSBs are determined according to the first configuration information.

In some embodiments, the R groups of SSBs are the K groups of SSBs.

In some embodiments, in the case where the first configuration information configures K₁ second list groups and K₂ third list groups, the R groups of SSBs are determined according to indices of the SSB index list, wherein the *r-th* group of SSBs includes SSBs in an SSB index list with an index r in the second list groups and/or SSBs in an SSB index list with an index r in the third list groups, where, 1≤r≤R.

In some embodiments, in a case where the first configuration information configures K₃ fourth list groups and K₄ fifth list groups, the R groups of SSBs are determined according to indices of the SSB index list, wherein the *r-th* group of SSBs includes SSBs in an SSB index list with an index r in the fourth list groups and/or SSBs in an SSB index list with an index r in the fifth list groups, 1 ≤r≤R.

In some embodiments, the R groups of SSBs are determined according to whether the SSB indices included in the first configuration information belong to an intra-frequency cell or an inter-frequency cell, wherein in the R groups of SSBs, SSB indices of the same group of SSBs belong to an intra-frequency cell.

In some embodiments, the terminal equipment receives second configuration information, the second configuration information configuring the R groups of SSBs.

In some embodiments, the second configuration information configures the R groups of SSBs by configuring R groups of SSBRIs.

In some embodiments, in the R groups of SSBs, SSB indices of the same group of SSBs belong to an intra-frequency cell, and/or SSB indices of different groups of SSBs belong to an inter-frequency cell.

In some embodiments, an SSBRI with a value of s denotes an *(s+1)-th* SSB index in the first SSB index list, and the first SSB index list is obtained by cascading K SSB index lists included in the K list groups; where, s≥0.

In some embodiments, an SSBRI with a value of s denotes an *(s+1)-th* SSB index in a second SSB index list, the second SSB index list being an SSB index list in the first configuration information; where, s ≥0.

In some embodiments, the SSBRI with a value of s denotes an *(s+1)-th* SSB index in a third SSB index list, the third SSB index list being obtained by cascading SSB index lists with which the *r-th* group of SSBs is associated; where, s≥0, and 1≤ r≤R.

In some embodiments, the R groups of SSBs are configured per cell.

In some embodiments, the reporting information is associated with list groups configured for one or more cells.

In some embodiments, the terminal equipment performs the following operations on the *r-th* group of L1-RSRP or L1-SINRs: quantizing L1-RSRP or an L1-SINR into B₁ bits, and quantizing remaining L1-RSRP or L1-SINRs as differential L1-RSRP or differential L1-SINRs into B₂ bits; where, B₂<B₁, and 1≤r≤R.

In some embodiments, the R groups of reporting information are arranged in an order of "the SSBRIs first and then the L1-RSRP and/or Ll-SINRs".

In some embodiments, the SSBRIs are arranged in an incremental order of the group indices of the R groups of reporting information.

In some embodiments, the L1-RSRP and/or L1-SINRs is/are arranged in an order of SSBRIs to which it/they correspond(s).

In some embodiments, in an *r-th* group of SSBRIs, L1-RSRP or an L1-SINR to which a first SSBRI corresponds is quantized into B₁ bits, and L1-RSRP or L1-SINRs to which remaining SSBRIs correspond is/are quantized into B₂ bits.

In some embodiments, in a case where the R groups of reporting information include R₁ groups of L1-RSRP and R₂ groups of L1-SINRs, the terminal equipment performs following operations respectively on the R₁ groups of L1-RSRP and R₂ groups of L1-SINRs: one piece of L1-RSRP or an L1-SINR is quantized into B₁ bits, and remaining L1-RSRP or L1-SINRs is/are quantized as differential L1-RSRP or differential L1-SINRs into B₂ bits; where, B₂<B₁, 0<R₁<R, 0<R₂<R, R₁+R₂=R.

In some embodiments, the R groups of reporting information are arranged in an order of "the SSBRIs first and then the L1-RSRP and/or Ll-SINRs".

In some embodiments, the SSBRIs are arranged in an order of "SSBRIs to which the L1-RSRP corresponds first and then SSBRIs to which the SINRs correspond".

In some embodiments, the L1-RSRP and/or L1-SINRs is/are arranged in an order of SSBRIs to which it/they correspond(s).

In some embodiments, in the SSBRIs to which the L1-RSRP corresponds, L1-RSRP to which a first SSBRI corresponds is quantized into B₁ bits, and L1-RSRP to which remaining SSBRIs correspond is quantized into B₂ bits; and/or, in the SSBRIs to which the L1-SINRs correspond, an L1-SINR to which a first SSBRI corresponds is quantized into B₁ bits, and L1-SINRs to which remaining SSBRIs correspond are quantized into B₂ bits.

In some embodiments, in a case where the R groups of reporting information include R₁ groups of L1-RSRP or R₂ groups of L1-SINRs, the terminal equipment performs the following operations respectively on the R₁ groups of L1-RSRP or R₂ groups of L1-SINRs: one piece of L1-RSRP or an L1-SINR is quantized into B₁ bits, and remaining L1-RSRP or L1-SINRs are quantized as differential L1-RSRP or differential L1-SINRs into B₂ bits; where, B₂<B₁.

In some embodiments, in a case where the R groups of reporting information include R₁ groups of L1-RSRP and R₂ groups of L1-SINRs, the terminal equipment performs the following operations respectively on the R₁ groups of L1-RSRP and R₂ groups of L1-SINRs: one piece of L1-RSRP or an L1-SINR is quantized into B₁ bits, and remaining L1-RSRP and L1-SINRs is/are quantized as differential L1-RSRP and differential L1-SINRs into B₂ bits; where, B₂<B₁, 0<R₁<R, 0<R₂<R, R₁+R₂=R.

In some embodiments, the R groups of reporting information are arranged in an order of "the SSBRIs first and then the L1-RSRP and/or SINRs".

In some embodiments, the L1-RSRP and/or L1-SINRs is/are arranged in an order of SSBRIs to which it/they correspond(s).

In some embodiments, L1-RSRP or an L1-SINR to which a first SSBRI corresponds is quantized into B₁ bits, and L1-RSRP and/or L1-SINRs to which remaining SSBRIs correspond is/are quantized into B₂ bits.

In some embodiments, largest L1-RSRP or a largest L1-SINR is quantified into B₁ bits.

In some embodiments, in the R groups of reporting information, the SSBRIs may be sequentially arranged per group of the R groups of reporting information (or the R groups of SSBs), wherein groups where the SSBRIs corresponding to the L1-RSRP or L1-SINRs quantized into B₁ bits rank first, and remaining groups are arranged in an incremental order of group indices.

In some embodiments, the terminal equipment may transmit indication information, the indication information indicating a group in the R groups of SSBs to which the SSBRIs corresponding to the L1 SRSP or L1-SINRs quantized into B₁ bits belong.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It can be seen from the above embodiment that the terminal equipment transmits one or more groups of reporting information for one or more groups of SSBs, each group of reporting information including one group of L1-RSRP and one group of SSBRIs, or one group of L1-SINRs and one group of SSBRIs, thereby achieving flexible measurement reporting, which is helpful to flexible cell handover.

### Embodiment of a third aspect

The embodiment of this disclosure provides an information processing method, applicable to a network device side, with contents identical to those in the embodiments of the first and second aspects being not going to be described herein any further.

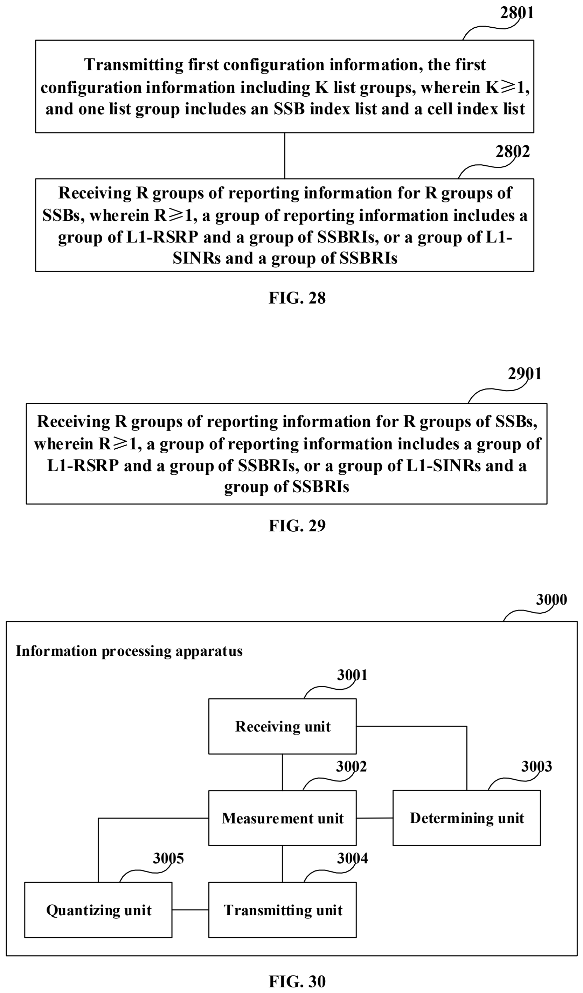

FIG. 28 is a schematic diagram of the information processing method of the embodiment of this disclosure. As shown in FIG. 28, the method includes:
2801: transmitting first configuration information, the first configuration information including K list groups, wherein K≥1, and one list group includes an SSB index list and a cell index list.

In some embodiments, the number of SSB indices included in the SSB index list is equal to the number of cell indices included in the cell index list.

In some embodiments, the number of SSB indices included in the K list groups is less than or equal to a first threshold, and/or the number of different cell indices included in the K list groups is less than or equal to a second threshold, wherein the second threshold is less than or equal to the first threshold.

In some embodiments, the K list groups include K first list groups, in which cell indices in the cell index list indicate whether the cell indices and the SSB indices in the SSB index list corresponding to the cell indices belong to a serving cell or a non-serving cell.

In some embodiments, the K list groups include K first list groups. In a *k-th* first list group, if an *i-th* cell index in the cell index list is less than a third threshold, the *i-th* cell index and an *i-th* SSB index in the SSB index list belong to a serving cell; and if the *i-th* cell index in the cell index list is greater than or equal to the third threshold, the *i-th* cell index and the *i-th* SSB index in the SSB index list belong to a non-serving cell; where, 1≤k≤K, 1≤i≤Iₖ, and Iₖ is the number of cell indices in the *k-th* first list group.

In some embodiments, the K list groups include K₁ second list groups and K₂ third list groups; where, 0≤K₁≤K, 0≤K₂≤K, and K₁+K₂=K. Whether the cell indices and the SSB indices in the SSB index lists corresponding to the cell indices belong to a serving cell or a non-serving cell is indicated by the list groups that include the cell indices and are the second list groups or the third list groups.

In some embodiments, the K list groups include K₁ second list groups and K₂ third list groups; where, 0≤K₁≤K, 0≤K₂≤K, and K₁+K₂=K. The second list groups include SSB index lists and cell index lists of a serving cell, and the third list groups include SSB index lists and cell index lists of a non-serving cell.

In some embodiments, the indices of the SSB index lists in the second list groups and the indices of the SSB index lists in the third list groups are independently numbered.

In some embodiments, the K₁ second list groups and K₂ third list groups are mapped to the K list groups in an order of "the indices of the SSB index lists first and then list group type indices", or in an order of "list group type indices first and then the indices of the SSB index lists".

In some embodiments, the K list groups include K₃ fourth list groups and K₄ fifth list groups; where, 0≤K₃≤K, 0≤K₄≤K, and K₃+K₄=K. Whether the cell indices and the SSB indices in the SSB index lists corresponding to the cell indices belong to a serving cell or a non-serving cell is indicated by the cell indices and/or the list groups that include the cell indices and are the fourth list groups or the fifth list groups.

In some embodiments, the K list groups include K₃ fourth list groups and K₄ fifth list groups; where, 0≤K₃≤K, 0≤K₄≤K, and K₃+K₄=K. In a *k-th* fourth list group, if an *i-th* cell index is equal to 0, the *i-th* cell index and an *i-th* SSB index in the SSB index list belong to a serving cell defined for the K₃ fourth list groups; and if the *i-th* cell index is greater than 0, the *i-th* cell index and the *i-th* SSB index in the SSB index list belong to a non-serving cell, and the fifth list groups include an SSB index list and a cell index list of the serving cell; where, 1≤k₃≤K₃, 1≤i≤Iₖ₃, and Iₖ₃ is the number of cell indices in the K₃ fourth list groups.

In some embodiments, the indices of the SSB index lists in the fourth list groups and the indices of the SSB index lists in the fifth list group are independently numbered.

In some embodiments, the K₃ fourth list groups and K₄ fifth list groups are mapped to the K list groups in an order of "the indices of the SSB index lists first and then list group type indices", or in an order of "list group type indices first and then the indices of the SSB index lists".

In some embodiments, the K list groups include K sixth list groups. In the sixth list groups, whether cell indices and the SSB indices in the SSB index lists corresponding to the cell indices belong to a serving cell or a non-serving cell is indicated by the cell indices and/or whether SSB parameters are configured for the cell indices.

In some embodiments, the K list groups include K sixth list groups. In a *k-th* sixth list group, if an *i-th* cell index is equal to 0, the *i-th* cell index and an *i-th* SSB index in the SSB index list belong to a serving cell defined for the K sixth list groups; if the *i-th* cell index is greater than 0 and no SSB parameter is configured for the *i-th* cell index, the *i-th* cell index and the *i-th* SSB index in the SSB index list belong to a serving cell; and if the *i-th* cell index is greater than 0 and an SSB parameter is configured for the *i-th* cell index, the *i-th* cell index and the *i-th* SSB index in the SSB index list belong to a non-serving cell; where, 1≤k≤K, 1≤i≤Iₖ, and Iₖ is the number of cell indices in the K sixth list groups.

In some embodiments, that 'an SSB parameter is configured for the *i-th* cell index' refers to that the *i-th* cell index, an SSB parameter and a PCI are configured in an RRC IE, and that 'no SSB parameter is configured for the *i-th* cell index' refers to that the *i-th* cell index and a PCI are configured in an RRC IE.

In some embodiments, in the first list groups or the second list groups or the fifth list groups, the cell indices of the serving cell are greater than or equal to a fourth threshold and less than the third threshold; and/or,
in the first list groups, the cell indices of the non-serving cell are greater than or equal to the third threshold and less than a fifth threshold; and/or,
in the third list groups, the cell indices of the non-serving cell are greater than or equal to a sixth threshold and less than a seventh threshold; and/or,
in the fourth list groups, the cell indices of the non-serving cell are greater than or equal to an eighth threshold and less than or equal to a ninth threshold.

In some embodiments, the third threshold is greater than 1.

In some embodiments, the third threshold is a maximum number of serving cells that the terminal equipment may be configured with, or, the third threshold is the number of serving cells that the terminal equipment may be configured with.

In some embodiments, in the cell index lists, the cell index of the serving cell is a configured index ServCellIndex of the serving cell.

In some embodiments, in the cell index lists, the cell index of the non-serving cell is a configured index additionalPCIIndex of the non-serving cell, or the cell index of the non-serving cell is a sum of the configured index additionalPCIIndex of the non-serving cell and an offset.

In some embodiments, the network device further transmits a first index, the first index being used to indicate a center frequency of SSBs of an inter-frequency cell, wherein the first index indicates a frequency in a group of frequencies.

In some embodiments, the first configuration information is included in a measurement configuration IE.

In some embodiments, the first configuration information is configured per cell, or, the first configuration information is configured per terminal equipment.

In some embodiments, the first configuration information is configured for a Pcell or an SpCell.

In some embodiments, the terminal equipment is configured with K serving cells, and the first configuration information configures a fourth list group for one of the serving cells.

In some embodiments, the K groups of SSBs configured by the first configuration information are SSBs measured by the terminal equipment.

In some embodiments, as shown in FIG. 28, the method further includes:
2802: receiving R groups of reporting information for R groups of SSBs, wherein R≥1, a group of reporting information includes a group of L1-RSRP and a group of SSBRIs, or a group of L1-SINRs and a group of SSBRIs.

In some embodiments, in a group of reporting information, the number of L1-RSRP is equal to the number of SSBRIs, or the number of L1-SINRs is equal to the number of SSBRIs.

In some embodiments, the R groups of reporting information include a first group of reporting information and/or a second group of reporting information, the first group of reporting information including a group of L1-RSRP and a group of SSBRIs, and the second group of reporting information including a group of L1-SINRs and a group of SSBRIs.

In some embodiments, an *r-th* group of SSBs includes M1 SSBs, and an *r-th* group of reporting information for the *r-th* group of SSBs includes M2 pieces of L1-RSRP or L1-SINRs; where, M2≤M1, and 1≤r≤R.

In some embodiments, the R groups of SSBs are determined according to the first configuration information.

In some embodiments, in the case where the first configuration information configures K groups of SSBs, the R groups of SSBs are the K groups of SSBs.

In some embodiments, in the case where the first configuration information configures K₁ second list groups and K₂ third list groups, the R groups of SSBs are determined according to the indices of the SSB index list, wherein an *r-th* group of SSBs includes SSBs in an SSB index list with an index r in the second list groups and/or SSBs in an SSB index list with an index r in the third list groups; where, 1≤r ≤R, 0≤K₁≤K, 0≤K₂≤K, and K₁+K₂=K.

In some embodiments, in the case where the first configuration information configures K₃ fourth list groups and K₄ fifth list groups, the R groups of SSBs are determined according to the indices of the SSB index list, wherein an *r-th* group of SSBs includes SSBs in an SSB index list with an index r in the fourth list groups and/or SSBs in an SSB index list with an index r in the fifth list groups; where, 1≤r ≤R, 0≤K₃≤K, 0≤K₄≤K, and K₃+K₄=K.

In some embodiments, the R groups of SSBs are determined according to whether the SSB indices included in the first configuration information belong to an intra-frequency cell or an inter-frequency cell, wherein in the R groups of SSBs, SSB indices of the same group of SSBs belong to an intra-frequency cell.

In some embodiments, in a case where the terminal equipment is configured with K serving cells and the first configuration information configures a fourth list group for one of the serving cells, the R groups of SSBs are SSBs included in fourth list groups configured for the K serving cells.

In some embodiments, the network device may transmit second configuration information, the second configuration information configuring the R groups of SSBs.

In some embodiments, the second configuration information configures the R groups of SSBs by configuring the R groups of SSBRIs.

In some embodiments, in the R groups of SSBs, SSB indices of the same group of SSBs belong to an intra-frequency cell, and/or SSB indices of different groups of SSBs belong to an inter-frequency cell.

In some embodiments, an SSBRI with a value of s denotes an *(s+1)-th* SSB index in a first SSB index list, which may be obtained by cascading K SSB index lists included in the K list groups; where, s≥0.

In some embodiments, the SSBRI with a value of s denotes an *(s+1)-th* SSB index in a second SSB index list, which is an SSB index list in the first configuration information; where, s≥0.

In some embodiments, the SSBRI with a value of s denotes an *(s+1)-th* SSB index in a third SSB index list, which is obtained by cascading SSB index lists associated with an *r-th* group of SSBs; where, s≥0, and 1≤r≤R_{∘}

In some embodiments, the R groups of SSBs are configured per cell.

In some embodiments, the reporting information is associated with list groups configured for one or more cells.

It should be noted that FIG. 28 only schematically illustrates the embodiment of this disclosure; however, this disclosure is not limited thereto. For example, an order of execution of the steps may be appropriately adjusted, and furthermore, some other operations may be added, or some operations therein may be reduced. And appropriate variants may be made by those skilled in the art according to the above contents, without being limited to what is contained in FIG. 28.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It can be seen from the above embodiment that the network device transmits the first configuration information, which includes one or more list groups, each list group including an SSB index list and a cell index list. Hence, the terminal equipment may perform SSB measurement according to the first configuration information, thereby achieving flexible measurement configuration, which is helpful to flexible cell handover.

### Embodiment of a fourth aspect

The embodiment of this disclosure provides an information processing method, applicable to a network device side, with contents identical to those in the embodiments of the first, second and third aspects being not going to be described herein any further.

FIG. 29 is a schematic diagram of the information processing method of the embodiment of this disclosure. As shown in FIG. 29, the method includes:
2901: receiving R groups of reporting information for R groups of SSBs, wherein R≥1, a group of reporting information includes a group of L1-RSRP and a group of SSBRIs, or a group of L1-SINRs and a group of SSBRIs.

In some embodiments, in a group of reporting information, the number of L1-RSRP is equal to the number of SSBRIs, or the number of L1-SINRs is equal to the number of SSBRIs.

In some embodiments, the R groups of reporting information include a first group of reporting information and/or a second group of reporting information, the first group of reporting information including a group of L1-RSRP and a group of SSBRIs, and the second group of reporting information including a group of L1-SINRs and a group of SSBRIs.

In some embodiments, an *r-th* group of SSBs includes M1 SSBs, and an *r-th* group of reporting information for the *r-th* group of SSBs includes M2 pieces of L1-RSRP or L1-SINRs; where, M2≤M1, and 1≤r≤R.

In some embodiments, the network device transmits first configuration information, the first configuration information configuring K groups of SSBs. The first configuration information includes K list groups, one of which including an SSB index list and a cell index list; where, K≥1.

In some embodiments, the K list groups include K first list groups. In a *k-th* first list group, if an *i-th* cell index in the cell index list is less than a third threshold, the *i-th* cell index and an *i-th* SSB index in the SSB index list belong to a serving cell; and if the *i-th* cell index in the cell index list is greater than or equal to the third threshold, the *i-th* cell index and the *i-th* SSB index in the SSB index list belong to a non-serving cell; where, 1≤k≤K, 1≤i≤Iₖ, and Iₖ is the number of cell indices in the *k-th* first list group.

In some embodiments, the K list groups include K₁ second list groups and K₂ third list groups. The second list groups include SSB index lists and cell index lists of a serving cell, and the third list groups include SSB index lists and cell index lists of a non-serving cell; where, 0≤K₁≤K, 0≤K₂≤K, and K₁+K₂=K.

In some embodiments, indices of the SSB index lists in the second list groups and indices of the SSB index lists in the third list groups are independently numbered.

In some embodiments, the K list groups include K₃ fourth list groups and K₄ fifth list groups. In a *k₃-th* fourth list group, if an *i-th* cell index is equal to 0, the *i-th* cell index and an *i-th* SSB index in the SSB index list belong to a serving cell defined for the *k₃-th* fourth list group. If the *i-th* cell index is greater than 0, the *i-th* cell index and the *i-th* SSB index in the SSB index list belong to a non-serving cell. The fifth list groups include SSB index lists and the cell index lists of the serving cell; where, 1≤ k₃≤K₃, 1≤i≤I_{*k*3}, I*ₖ₃* being the number of cell indices in the *k₃-th* fourth list group, and 0≤K₃≤K, 0≤K₄≤K, K₃+K₄=K.

In some embodiments, indices of the SSB index lists in the fourth list groups and indices of the SSB index lists in the fifth list groups are independently numbered.

In some embodiments, the R groups of SSBs are determined according to the first configuration information.

In some embodiments, the R groups of SSBs are the K groups of SSBs.

In some embodiments, in the case where the first configuration information configures K₁ second list groups and K₂ third list groups, the R groups of SSBs are determined according to indices of the SSB index list, wherein the *r-th* group of SSBs includes SSBs in an SSB index list with an index r in the second list groups and/or SSBs in an SSB index list with an index r in the third list groups; where, 1≤r≤R.

In some embodiments, in the case where the first configuration information configures K₃ fourth list groups and K₄ fifth list groups, the R groups of SSBs are determined according to indices of the SSB index list, wherein the *r-th* group of SSBs includes SSBs in an SSB index list with an index r in the fourth list groups and/or SSBs in an SSB index list with an index r in the fifth list groups; where, 1≤r≤R.

In some embodiments, the R groups of SSBs are determined according to whether the SSB indices included in the first configuration information belong to an intra-frequency cell or an inter-frequency cell, wherein in the R groups of SSBs, SSB indices of the same group of SSBs belong to an intra-frequency cell.

In some embodiments, the network device transmits second configuration information, the second configuration information configuring the R groups of SSBs.

In some embodiments, the second configuration information configures the R groups of SSBs by configuring R groups of SSBRIs.

In some embodiments, in the R groups of SSBs, SSB indices of the same group of SSBs belong to an intra-frequency cell, and/or SSB indices of different groups of SSBs belong to an inter-frequency cell.

In some embodiments, an SSBRI with a value of s denotes an *(s+1)-th* SSB index in the first SSB index list, and the first SSB index list is obtained by cascading K SSB index lists included in the K list groups; where, s≥0.

In some embodiments, an SSBRI with a value of s denotes an *(s+1)-th* SSB index in a second SSB index list, the second SSB index list being an SSB index list in the first configuration information; where, s≥0.

In some embodiments, the SSBRI with a value of s denotes an *(s+1)-th* SSB index in a third SSB index list, the third SSB index list being obtained by cascading SSB index lists with which the *r-th* group of SSBs is associated; where, s≥0, and 1≤ r≤R.

In some embodiments, the R groups of SSBs are configured per cell.

In some embodiments, the reporting information is associated with list groups configured for one or more cells.

It should be noted that FIG. 29 only schematically illustrates the embodiment of this disclosure; however, this disclosure is not limited thereto. For example, an order of execution of the steps may be appropriately adjusted, and furthermore, some other operations may be added, or some operations therein may be reduced. And appropriate variants may be made by those skilled in the art according to the above contents, without being limited to what is contained in FIG. 29.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It can be seen from the above embodiment that the network device receives one or more groups of reporting information for one or more groups of SSBs, each group of reporting information including one group of L1-RSRP and one group of SSBRIs, or one group of L1-SINRs and one group of SSBRIs, thereby achieving flexible measurement reporting, which is helpful to flexible cell handover.

### Embodiment of a fifth aspect

The embodiment of this disclosure provides an information processing apparatus. The apparatus may be, for example, a terminal equipment, or one or some components or assemblies configured in the terminal equipment. Contents in this embodiment identical to those in the embodiment of the first aspect shall not be described herein any further.

FIG. 30 is a schematic diagram of the information processing apparatus of the embodiment of this disclosure. As shown in FIG. 30, the information processing apparatus 3000 includes:
a receiving unit 3001 configured to receive first configuration information, the first configuration information including K list groups, wherein K≥1, and one list group includes an SSB index list and a cell index list; and
a measurement unit 3002 configured to perform SSB measurement according to the first configuration information.

In some embodiments, the number of SSB indices included in the SSB index list is equal to the number of cell indices included in the cell index list.

In some embodiments, the number of SSB indices included in the K list groups is be less than or equal to a first threshold, and/or the number of different cell indices included in the K list groups is less than or equal to a second threshold, the second threshold being less than or equal to the first threshold.

In some embodiments, the K list groups include K first list groups. In the first list groups, cell indices in the cell index list indicate that the cell indices and SSB indices in the SSB index list corresponding to the cell indices belong to a serving cell or a non-serving cell.

In some embodiments, the K list groups include K first list groups. In a *k-th* first list group, if an *i-th* cell index in the cell index list is less than a third threshold, the *i-th* cell index and an *i-th* SSB index in the SSB index list belong to a serving cell; and if the *i-th* cell index in the cell index list is greater than or equal to the third threshold N₁, the *i-th* cell index and the *i-th* SSB index in the SSB index list belong to a non-serving cell; where, 1≤k≤K, 1≤i≤Iₖ, and Iₖ is the number of cell indices in the *k-th* first list group.

In some embodiments, the K list groups include K₁ second list groups and K₂ third list groups; where, 0≤K₁≤K, 0≤K₂≤K, and K₁+K₂=K. Whether the cell indices and the SSB indices in the SSB index lists corresponding to the cell indices belong to a serving cell or a non-serving cell is indicated by the list groups that include the cell indices and are the second list groups or the third list groups.

In some embodiments, the K list groups include K₁ second list groups and K₂ third list groups; where, 0≤K₁≤K, 0≤K₂≤K, and K₁+K₂=K. The second list groups include SSB index lists and cell index lists of a serving cell, and the third list groups include SSB index lists and cell index lists of a non-serving cell.

In some embodiments, the indices of the SSB index lists in the second list groups and the indices of the SSB index lists in the third list groups are independently numbered.

In some embodiments, the K₁ second list groups and K₂ third list groups are mapped to the K list groups in an order of "the indices of the SSB index lists first and then list group type indices", or in an order of "list group type indices first and then the indices of the SSB index lists".

In some embodiments, the K list groups include K₃ fourth list groups and K₄ fifth list groups; where, 0≤K₃≤K, 0≤K₄≤K, and K₃+K₄=K. Whether the cell indices and the SSB indices in the SSB index lists corresponding to the cell indices belong to a serving cell or a non-serving cell is indicated by the cell indices and/or the list groups that include the cell indices and are the fourth list groups or the fifth list groups.

In some embodiments, the K list groups include K₃ fourth list groups and K₄ fifth list groups; where, 0≤K₃≤K, 0≤K₄≤K, and K₃+K₄=K. In a *k-th* fourth list group, if an *i-th* cell index is equal to 0, the *i-th* cell index and an *i-th* SSB index in the SSB index list belong to a serving cell defined for the K₃ fourth list groups; and if the *i-th* cell index is greater than 0, the *i-th* cell index and the *i-th* SSB index in the SSB index list belong to a non-serving cell, and the fifth list groups include an SSB index list and a cell index list of the serving cell; where, 1≤k₃≤K₃, 1≤i≤Iₖ₃, and Iₖ₃ is the number of cell indices in the K₃ fourth list groups.

In some embodiments, the indices of the SSB index lists in the fourth list groups and the indices of the SSB index lists in the fifth list group are independently numbered.

In some embodiments, the K₃ fourth list groups and K₄ fifth list groups are mapped to the K list groups in an order of "the indices of the SSB index lists first and then list group type indices", or in an order of "list group type indices first and then the indices of the SSB index lists".

In some embodiments, the K list groups include K sixth list groups. In the sixth list groups, whether cell indices and the SSB indices in the SSB index lists corresponding to the cell indices belong to a serving cell or a non-serving cell is indicated by the cell indices and/or whether SSB parameters are configured for the cell indices.

In some embodiments, the K list groups include K sixth list groups. In a *k-th* sixth list group, if an *i-th* cell index is equal to 0, the *i-th* cell index and an *i-th* SSB index in the SSB index list belong to a serving cell defined for the K sixth list groups; if the *i-th* cell index is greater than 0 and no SSB parameter is configured for the *i-th* cell index, the *i-th* cell index and the *i-th* SSB index in the SSB index list belong to a serving cell; and if the *i-th* cell index is greater than 0 and an SSB parameter is configured for the *i-th* cell index, the *i-th* cell index and the *i-th* SSB index in the SSB index list belong to a non-serving cell; where, 1≤k≤K, 1≤i≤Iₖ, and Iₖ is the number of cell indices in the K sixth list groups.

In some embodiments, that 'an SSB parameter is configured for the *i-th* cell index' refers to that the *i-th* cell index, an SSB parameter and a PCI are configured in an RRC IE, and that 'no SSB parameter is configured for the *i-th* cell index' refers to that the *i-th* cell index and a PCI are configured in an RRC IE.

In some embodiments, in the first list groups or the second list groups or the fifth list groups, the cell indices of the serving cell are greater than or equal to a fourth threshold and less than the third threshold; and/or,
in the first list groups, the cell indices of the non-serving cell are greater than or equal to the third threshold and less than a fifth threshold; and/or,
in the third list groups, the cell indices of the non-serving cell are greater than or equal to a sixth threshold and less than a seventh threshold; and/or,
in the fourth list groups, the cell indices of the non-serving cell are greater than or equal to an eighth threshold and less than or equal to a ninth threshold.

In some embodiments, the third threshold is greater than 1.

In some embodiments, the third threshold is a maximum number of serving cells that the terminal equipment may be configured with, or, the third threshold is the number of serving cells that the terminal equipment may be configured with.

In some embodiments, in the cell index lists, the cell index of the serving cell is a configured index ServCellIndex of the serving cell.

In some embodiments, in the cell index lists, the cell index of the non-serving cell is a configured index additionalPCIIndex of the non-serving cell, or the cell index of the non-serving cell is a sum of the configured index additionalPCIIndex of the non-serving cell and an offset.

In some embodiments, the apparatus 3000 further includes:
a determining unit 3003 configured to determine a PCI and an SSB parameter associated with the cell indices according to the cell indices in the cell index list.

In some embodiments, the determining unit 3003 determines an SSB parameter associated with the SSB indices according to the SSB parameter and SSB indices in the SSB index list corresponding to the cell indices, and the measurement unit 3002 performs SSB measurement according to the SSB parameter associated with the SSB indices.

In some embodiments, the receiving unit 3001 further receives a first index, the first index being used to indicate a center frequency of SSBs of an inter-frequency cell. The first index indicates a frequency in a group of frequencies.

In some embodiments, the first configuration information is included in a measurement configuration IE.

In some embodiments, the first configuration information is configured per cell, or the first configuration information is configured per terminal equipment.

In some embodiments, the first configuration information is configured for a Pcell or an SpCell.

In some embodiments, the terminal equipment is configured with K serving cells, and the first configuration information configures a fourth list group for one serving cell.

In some embodiments, the terminal equipment is configured with K serving cells, and the first configuration information is to configure one fourth list group for one serving cell.

In some embodiments, the measurement unit 3002 measures K groups of SSBs configured by the first configuration information.

In some embodiments, the apparatus 3000 further includes:
a transmitting unit 3004 configured to transmit R groups of reporting information for R groups of SSBs, wherein R≥1, a group of reporting information includes a group of L1-RSRP and a group of SSBRIs, or a group of L1-SINRs and a group of SSBRIs.

In some embodiments, the number of L1-RSRP in a group of reporting information is equal to the number of SSBRIs, or the number of L1-SINRs is equal to the number of SSBRIs.

In some embodiments, the R groups of reporting information include a first group of reporting information and/or a second group of reporting information, wherein the first group of reporting information includes a group of L1-RSRP and a group of SSBRIs, and the second group of reporting information includes a group of L1-SINRs and a group of SSBRIs.

In some embodiments, an *r-th* group of SSBs includes M1 SSBs, and an *r-th* group of reporting information for the *r-th* group of SSBs includes M2 pieces of L1-RSRP or L1-SINRs; where, M2≤M1, and 1≤r≤R.

In some embodiments, the R groups of SSBs are determined according to the first configuration information.

In some embodiments, in the case where the first configuration information configures the K groups of SSBs, the R groups of SSBs are the K group of SSBs.

In some embodiments, in the case where the first configuration information configures K₁ second list groups and K₂ third list groups, the R groups of SSBs is determined according to the indices of the SSB index list, wherein an *r-th* group of SSBs includes SSBs in an SSB index list with an index r in the second list groups and/or SSBs in an SSB index list with an index r in the third list groups; where, 1≤r ≤R, 0≤K₁≤K, 0≤K₂≤K, and K₁+K₂=K.

In some embodiments, in the case where the first configuration information configures K₃ fourth list groups and K₄ fifth list groups, the R groups of SSBs is determined according to the indices of the SSB index list, wherein an *r-th* group of SSBs includes SSBs in an SSB index list with an index r in the fourth list groups and/or SSBs in the SSB index list with an index r in the fifth list groups; where, 1≤r ≤R, 0≤K₃≤K, 0≤K₄≤K, K₃+K₄=K.

In some embodiments, the R groups of SSBs are determined according to whether the SSB indices included in the first configuration information belong to an intra-frequency cell or an inter-frequency cell, wherein in the R groups of SSBs, SSB indices of the same group of SSBs belong to an intra-frequency cell.

In some embodiments, in the case where the terminal equipment is configured with K serving cells and the first configuration information configures a fourth list group for one of the serving cells, the R groups of SSBs are SSBs included in the fourth list groups configured for the K serving cells.

In some embodiments, the receiving unit 3001 further receives second configuration information, the second configuration information configuring the R groups of SSBs.

In some embodiments, the second configuration information configures the R groups of SSBs by configuring R groups of SSBRIs.

In some embodiments, in the R groups of SSBs, SSB indices of the same group of SSBs belong to an intra-frequency cell, and/or SSB indices of different groups of SSBs belong to an inter-frequency cell.

In some embodiments, an SSBRI with a value of s denotes an *(s+1)-th* SSB index in a first SSB index list, the first SSB index list being obtained by cascading K SSB index lists included in the K list group, where, s ≥0.

In some embodiments, an SSBRI with a value of s denotes an *(s+1)-th* SSB index in a second SSB index list, the second SSB index list being an SSB index list in the first configuration information, where, s≥0.

In some embodiments, an SSBRI with a value of s denotes an *(s+1)-th* SSB index in a third SSB index list, the third SSB index list being obtained by cascading SSB index lists with which an *r-th* group of SSBs is associated, where, s≥0, and 1 ≤r≤R.

In some embodiments, the R groups of SSBs are configured per cell.

In some embodiments, the reporting information is associated with list groups configured for one or more cells.

In some embodiments, the apparatus 3000 further includes:
a quantization unit 3005 configured to perform the following operations on the *r-th* group of L1-RSRP or L1-SINRs: quantizing a piece of L1-RSRP or an L1-SINR into B₁ bits, and quantizing remaining L1-RSRP or L1-SINRs as differential L1-RSRP or differential L1-SINRs into B₂ bits, where, B₂<B₁, and 1≤r≤R.

In some embodiments, the R groups of reporting information are arranged in an order of "the SSBRIs first and then the L1-RSRP and/or L1-SINRs".

In some embodiments, the SSBRIs are arranged in an incremental order of the group indices of the R groups of reporting information.

In some embodiments, the L1-RSRP and/or the L1-SINRs is/are arranged in an order of SSBRIs to which it/they correspond(s).

In some embodiments, in an *r-th* group of SSBRIs, L1-RSRP or an L1-SINR to which a first SSBRI corresponds is quantized into B₁ bits, and L1-RSRP or L1-SINRs to which remaining SSBRIs correspond is/are quantized into B₂ bits.

In some embodiments, the quantization unit 3005 performs the following operations respectively on R₁ groups of L1-RSRP and R₂ groups of L1-SINRs in a case where the R groups of reporting information include the R₁ groups of L1-RSRP and R₂ groups of L1-SINRs: one piece of L1-RSRP or an L1-SINR is quantized into B₁ bits, and remaining L1-RSRP or L1-SINRs are quantized as differential L1-RSRP or differential L1-SINRs into B₂ bits; where, B₂<B₁, 0<R₁<R, 0<R₂<R, R₁+R₂=R.

In some embodiments, the R groups of reporting information are arranged in an order of "the SSBRIs first and then the L1-RSRP and/or L1-SINRs".

In some embodiments, the SSBRIs are arranged in an order of "SSBRIs to which the L1-RSRP corresponds first and then SSBRIs to which the L1-SINRs correspond".

In some embodiments, the L1-RSRP and/or L1-SINRs are arranged in an order of SSBRIs corresponding to the L1-RSRP and/or L1-SINRs.

In some embodiments, in the SSBRIs to which the L1-RSRP corresponds, L1-RSRP to which a first SSBRI corresponds is quantized into B₁ bits, and L1-RSRP to which remaining SSBRIs correspond is quantized into B₂ bits; and/or, in the SSBRIs to which the L1-SINRs correspond, an L1-SINR to which a first SSBRI corresponds is quantized into B₁ bits, and L1-SINRs to which remaining SSBRIs correspond are quantized into B₂ bits.

In some embodiments, the quantization unit 3005 performs the following operations on the R groups of L1-RSRP or L1-SINRs in the case where the R groups of reporting information include R₁ groups of L1-RSRP or L1-SINRs: quantizing one piece of L1-RSRP or an L1-SINR into B₁ bits, and quantizing remaining L1-RSRP or L1-SINRs as differential L1-RSRP or differential L1-SINRs into B₂ bits; where, B₂<B₁.

In some embodiments, the quantization unit 3005 performs the following operations on the R₁ groups of L1-RSRP and R₂ groups of L1-SINRs in a case where the R groups of reporting information include the R₁ groups of L1-RSRP and R₂ groups of L1-SINRs: quantizing one piece of L1-RSRP or an L1-SINR into B₁ bits, and quantizing remaining L1-RSRP or L1-SINRs as differential L1-RSRP or differential L1-SINRs into B₂ bits; where, B₂<B₁, 0<R₁<R, 0<R₂<R, R₁+R₂=R.

In some embodiments, the R groups of reporting information are arranged in an order of "the SSBRIs first and then the L1-RSRP and/or Ll-SINRs".

In some embodiments, the L1-RSRP and/or the L1-SINRs is/are arranged in an order of SSBRIs to which it/they correspond(s).

In some embodiments, L1-RSRP or an L1-SINR to which a first SSBRI corresponds is quantized into B₁ bits, and L1-RSRP or L1-SINRs to which remaining SSBRIs correspond is/are quantized into B₂ bits.

In some embodiments, largest L1-RSRP or a largest L1-SINR is quantified into B₁ bits.

In some embodiments, in the R groups of reporting information, the SSBRIs may be sequentially arranged per group of the R groups of reporting information (or the R groups of SSBs), wherein groups where the SSBRIs corresponding to the L1-RSRP or L1-SINRs quantized into B₁ bits rank first, and remaining groups are arranged in an incremental order of group indices.

In some embodiments, the transmitting unit 3004 transmits indication information, wherein the indication information indicates a group in the R groups of SSBs to which the SSBRIs corresponding to the L1 SRSP or L1-SINRs quantized into B₁ bits belong.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the information processing apparatus 3000 may further include other components or modules, and reference may be made to related techniques for particulars of these components or modules.

Furthermore, for the sake of simplicity, connection relationships between the components or modules or signal profiles thereof are only illustrated in FIG. 30. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

It can be seen from the above embodiment that the terminal equipment receives the first configuration information, the first configuration information including one or more list groups, and one list group including an SSB index list and a cell index list. Hence, the terminal equipment may perform SSB measurement according to the first configuration information, thereby achieving flexible measurement configurations, which is helpful to flexible cell handover.

### Embodiment of a sixth aspect

The embodiment of this disclosure provides an information processing apparatus. The apparatus may be, for example, a terminal equipment, or one or some components or assemblies configured in the terminal equipment. Contents in this embodiment identical to those in the embodiment of the second aspect shall not be described herein any further.

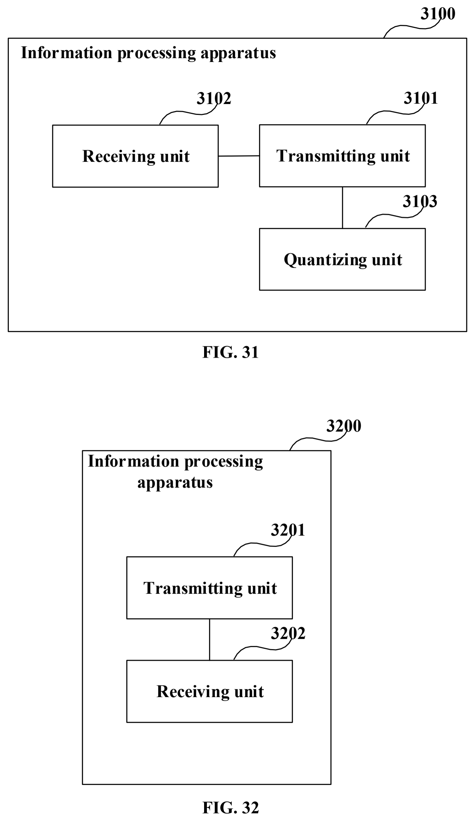

FIG. 31 is a schematic diagram of the information processing apparatus of the embodiment of this disclosure. As shown in FIG. 31, the information processing apparatus 3100 includes:
a transmitting unit 3101 configured to transmit R groups of reporting information for R groups of SSBs, wherein R≥1, a group of reporting information includes a group of L1-RSRP and a group of SSBRIs, or a group of L1-SINRs and a group of SSBRIs.

In some embodiments, in a group of reporting information, the number of L1-RSRP is equal to the number of SSBRIs, or the number of L1-SINRs is equal to the number of SSBRIs.

In some embodiments, the R groups of reporting information include a first group of reporting information and/or a second group of reporting information, the first group of reporting information including a group of L1-RSRP and a group of SSBRIs, and the second group of reporting information including a group of L1-SINRs and a group of SSBRIs.

In some embodiments, an *r-th* group of SSBs includes M1 SSBs, and an *r-th* group of reporting information for the *r-th* group of SSBs includes M2 pieces of L1-RSRP or L1-SINRs; where, M2≤M1, 1≤r≤R.

In some embodiments, the apparatus 3100 further includes:
a receiving unit 3102 configured to receive first configuration information, the first configuration information configuring K groups of SSBs, and the first configuration information including K list groups, wherein one list group includes an SSB index list and a cell index list; where, K≥1.

In some embodiments, the K list groups include K first list groups. In a *k-th* first list group, if an *i-th* cell index in the cell index list is less than a third threshold, the *i-th* cell index and an *i-th* SSB index in the SSB index list belong to a serving cell, and if the *i-th* cell index in the cell index list is greater than or equal to the third threshold, the *i-th* cell index and the *i-th* SSB index in the SSB index list belong to a non-serving cell; where, 1≤k≤K, 1≤i≤Iₖ, Iₖ being the number of the cell indices in the *k-th* first list group.

In some embodiments, the K list groups include K₁ second list groups and K₂ third list groups, the second list groups including SSB index lists and cell index lists of the serving cell, and the third list groups including SSB index lists and cell index lists of the non-serving cell; where, 0≤K₁≤K, 0≤K₂≤K, and K₁+K₂=K.

In some embodiments, indices of the SSB index lists in the second list groups and indices of the SSB index lists in the third list groups are independently numbered.

In some embodiments, the K list groups include K₃ fourth list groups and K₄ fifth list groups. In a *k₃-th* fourth list group, if an *i-th* cell index is equal to 0, the *i-th* cell index and an *i-th* SSB index in the SSB index list belong to a serving cell defined for the *k₃-th* fourth list group. If the *i-th* cell index is greater than 0, the *i-th* cell index and the *i-th* SSB index in the SSB index list belong to a non-serving cell. The fifth list groups include SSB index lists and the cell index lists of the serving cell; where, 1≤ k₃≤K₃, 1≤*i*≤I*ₖ₃,* I*ₖ₃* being the number of cell indices in the *k₃-th* fourth list group, and 0≤K₃≤K, 0≤K₄≤K, K₃+K₄=K.

In some embodiments, indices of the SSB index lists in the fourth list groups and indices of the SSB index lists in the fifth list groups are independently numbered.

In some embodiments, the R groups of SSBs are determined according to the first configuration information.

In some embodiments, the R groups of SSBs are the K groups of SSBs.

In some embodiments, in the case where the first configuration information configures K₁ second list groups and K₂ third list groups, the R groups of SSBs are determined according to indices of the SSB index list, wherein the *r-th* group of SSBs includes SSBs in an SSB index list with an index r in the second list groups and/or SSBs in an SSB index list with an index r in the third list groups, where, 1≤r≤R.

In some embodiments, in a case where the first configuration information configures K₃ fourth list groups and K₄ fifth list groups, the R groups of SSBs are determined according to indices of the SSB index list, wherein the *r-th* group of SSBs includes SSBs in an SSB index list with an index r in the fourth list groups and/or SSBs in an SSB index list with an index r in the fifth list groups, 1≤r≤R.

In some embodiments, the R groups of SSBs are determined according to whether the SSB indices included in the first configuration information belong to an intra-frequency cell or an inter-frequency cell, wherein in the R groups of SSBs, SSB indices of the same group of SSBs belong to an intra-frequency cell.

In some embodiments, the receiving unit 3102 further receives second configuration information, the second configuration information configuring the R groups of SSBs.

In some embodiments, the second configuration information configures the R groups of SSBs by configuring R groups of SSBRIs.

In some embodiments, in the R groups of SSBs, SSB indices of the same group of SSBs belong to an intra-frequency cell, and/or SSB indices of different groups of SSBs belong to an inter-frequency cell.

In some embodiments, an SSBRI with a value of s denotes an *(s+1)-th* SSB index in the first SSB index list, and the first SSB index list is obtained by cascading K SSB index lists included in the K list groups; where, s ≥0.

In some embodiments, an SSBRI with a value of s denotes an *(s+1)-th* SSB index in a second SSB index list, the second SSB index list being an SSB index list in the first configuration information; where, s≥0.

In some embodiments, the SSBRI with a value of s denotes an *(s+1)-th* SSB index in a third SSB index list, the third SSB index list being obtained by cascading SSB index lists with which the *r-th* group of SSBs is associated; where, s≥0, and 1≤ r≤R.

In some embodiments, the R groups of SSBs are configured per cell.

In some embodiments, the reporting information is associated with list groups configured for one or more cells.

In some embodiments, the apparatus 3100 further includes:
a quantization unit 3103 configured to perform the following operations on the *r-th* group of L1-RSRP or L1-SINRs: quantizing L1-RSRP or an L1-SINR into B₁ bits, and quantizing remaining L1-RSRP or L1-SINRs as differential L1-RSRP or differential L1-SINRs into B₂ bits; where, B₂<B₁, and 1≤r≤R.

In some embodiments, the R groups of reporting information are arranged in an order of "the SSBRIs first and then the L1-RSRP and/or Ll-SINRs".

In some embodiments, the SSBRIs are arranged in an incremental order of the group indices of the R groups of reporting information.

In some embodiments, the L1-RSRP and/or L1-SINRs is/are arranged in an order of SSBRIs to which it/they correspond(s).

In some embodiments, in an *r-th* group of SSBRIs, L1-RSRP or an L1-SINR to which a first SSBRI corresponds is quantized into B₁ bits, and L1-RSRP or L1-SINRs to which remaining SSBRIs correspond is/are quantized into B₂ bits.

In some embodiments, in a case where the R groups of reporting information include R₁ groups of L1-RSRP and R₂ groups of L1-SINRs, the quantization unit 3103 performs following operations respectively on the R₁ groups of L1-RSRP and R₂ groups of L1-SINRs: one piece of L1-RSRP or an L1-SINR is quantized into B₁ bits, and remaining L1-RSRP or L1-SINRs is/are quantized as differential L1-RSRP or differential L1-SINRs into B₂ bits; where, B₂<B₁, 0<R₁<R, 0<R₂<R, R₁+R₂=R.

In some embodiments, the R groups of reporting information are arranged in an order of "the SSBRIs first and then the L1-RSRP and/or Ll-SINRs".

In some embodiments, the SSBRIs are arranged in an order of "SSBRIs to which the L1-RSRP corresponds first and then SSBRIs to which the SINRs correspond".

In some embodiments, the L1-RSRP and/or L1-SINRs is/are arranged in an order of SSBRIs to which it/they correspond(s).

In some embodiments, in the SSBRIs to which the L1-RSRP corresponds, L1-RSRP to which a first SSBRI corresponds is quantized into B₁ bits, and L1-RSRP to which remaining SSBRIs correspond is quantized into B₂ bits; and/or, in the SSBRIs to which the L1-SINRs correspond, an L1-SINR to which a first SSBRI corresponds is quantized into B₁ bits, and L1-SINRs to which remaining SSBRIs correspond are quantized into B₂ bits.

In some embodiments, in a case where the R groups of reporting information include R groups of L1-RSRP or L1-SINRs, the quantization unit 3103 performs the following operations on the R groups of L1-RSRP or L1-SINRs: one piece of L1-RSRP or an L1-SINR is quantized into B₁ bits, and remaining L1-RSRP or L1-SINRs is/are quantized as differential L1-RSRP or differential L1-SINRs into B₂ bits; where, B₂<B₁.

In some embodiments, in a case where the R groups of reporting information include R₁ groups of L1-RSRP and R₂ groups of L1-SINRs, the quantization unit 3103 performs the following operations on the R₁ groups of L1-RSRP and R₂ groups of L1-SINRs: one piece of L1-RSRP or an L1-SINR is quantized into B₁ bits, and remaining L1-RSRP and L1-SINRs is/are quantized as differential L1-RSRP and differential L1-SINRs into B₂ bits; where, B₂<B₁, 0<R₁<R, 0<R₂<R, R₁+R₂=R.

In some embodiments, the R groups of reporting information are arranged in an order of "the SSBRIs first and then the L1-RSRP and/or SINRs".

In some embodiments, the L1-RSRP and/or L1-SINRs is/are arranged in an order of SSBRIs to which it/they correspond(s).

In some embodiments, L1-RSRP or an L1-SINR to which a first SSBRI corresponds is quantized into B₁ bits, and L1-RSRP and/or L1-SINRs to which remaining SSBRIs correspond is/are quantized into B₂ bits.

In some embodiments, largest L1-RSRP or a largest L1-SINR is quantified into B₁ bits.

In some embodiments, in the R groups of reporting information, the SSBRIs may be sequentially arranged per group of the R groups of reporting information (or the R groups of SSBs), wherein groups where the SSBRIs corresponding to the L1-RSRP or L1-SINRs quantized into B₁ bits rank first, and remaining groups are arranged in an incremental order of group indices.

In some embodiments, the transmitting unit 3101 may transmit indication information, the indication information indicating a group in the R groups of SSBs to which the SSBRIs corresponding to the L1 SRSP or L1-SINRs quantized into B₁ bits belong.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the information processing apparatus 3100 may further include other components or modules, and reference may be made to related techniques for particulars of these components or modules.

Furthermore, for the sake of simplicity, connection relationships between the components or modules or signal profiles thereof are only illustrated in FIG. 31. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

It can be seen from the above embodiment that the terminal equipment transmits one or more groups of reporting information for one or more groups of SSBs, each group of reporting information including one group of L1-RSRP and one group of SSBRIs, or one group of L1-SINRs and one group of SSBRIs, thereby achieving flexible measurement reporting, which is helpful to flexible cell handover.

### Embodiment of a seventh aspect

The embodiment of this disclosure provides an information processing apparatus. The apparatus may be, for example, a network device, or one or some components or assemblies configured in the network device. Contents in this embodiment identical to those in the embodiment of the third aspect shall not be described herein any further.

FIG. 32 is a schematic diagram of the information processing apparatus of the embodiment of this disclosure. As shown in FIG. 32, the information processing apparatus 3200 includes:
a transmitting unit 3201 configured to transmit first configuration information, the first configuration information including K list groups, wherein K≥1, and one list group includes an SSB index list and a cell index list.

In some embodiments, the number of SSB indices included in the SSB index list is equal to the number of cell indices included in the cell index list.

In some embodiments, the number of SSB indices included in the K list groups is less than or equal to a first threshold, and/or the number of different cell indices included in the K list groups is less than or equal to a second threshold, wherein the second threshold is less than or equal to the first threshold.

In some embodiments, the K list groups include K first list groups, in which cell indices in the cell index list indicate whether the cell indices and the SSB indices in the SSB index list corresponding to the cell indices belong to a serving cell or a non-serving cell.

In some embodiments, the K list groups include K first list groups. In a *k-th* first list group, if an *i-th* cell index in the cell index list is less than a third threshold, the *i-th* cell index and an *i-th* SSB index in the SSB index list belong to a serving cell; and if the *i-th* cell index in the cell index list is greater than or equal to the third threshold, the *i-th* cell index and the *i-th* SSB index in the SSB index list belong to a non-serving cell; where, 1≤k≤K, 1≤i≤Iₖ, and Iₖ is the number of cell indices in the *k-th* first list group.

In some embodiments, the K list groups include K₁ second list groups and K₂ third list groups; where, 0≤K₁≤K, 0≤K₂≤K, and K₁+K₂=K. Whether the cell indices and the SSB indices in the SSB index lists corresponding to the cell indices belong to a serving cell or a non-serving cell is indicated by the list groups that include the cell indices and are the second list groups or the third list groups.

In some embodiments, the K list groups include K₁ second list groups and K₂ third list groups; where, 0≤K₁≤K, 0≤K₂≤K, and K₁+K₂=K. The second list groups include SSB index lists and cell index lists of a serving cell, and the third list groups include SSB index lists and cell index lists of a non-serving cell.

In some embodiments, the indices of the SSB index lists in the second list groups and the indices of the SSB index lists in the third list groups are independently numbered.

In some embodiments, the K₁ second list groups and K₂ third list groups are mapped to the K list groups in an order of "the indices of the SSB index lists first and then list group type indices", or in an order of "list group type indices first and then the indices of the SSB index lists".

In some embodiments, the K list groups include K₃ fourth list groups and K₄ fifth list groups; where, 0≤K₃≤K, 0≤K₄≤K, and K₃+K₄=K. Whether the cell indices and the SSB indices in the SSB index lists corresponding to the cell indices belong to a serving cell or a non-serving cell is indicated by the cell indices and/or the list groups that include the cell indices and are the fourth list groups or the fifth list groups.

In some embodiments, the K list groups include K₃ fourth list groups and K₄ fifth list groups; where, 0≤K₃≤K, 0≤K₄≤K, and K₃+K₄=K. In a *k-th* fourth list group, if an *i-th* cell index is equal to 0, the *i-th* cell index and an *i-th* SSB index in the SSB index list belong to a serving cell defined for the K₃ fourth list groups; and if the *i-th* cell index is greater than 0, the *i-th* cell index and the *i-th* SSB index in the SSB index list belong to a non-serving cell, and the fifth list groups include an SSB index list and a cell index list of the serving cell; where, 1≤k₃≤K₃, 1≤i≤Iₖ₃, and Iₖ₃ is the number of cell indices in the K₃ fourth list groups.

In some embodiments, the indices of the SSB index lists in the fourth list groups and the indices of the SSB index lists in the fifth list group are independently numbered.

In some embodiments, the K₃ fourth list groups and K₄ fifth list groups are mapped to the K list groups in an order of "the indices of the SSB index lists first and then list group type indices", or in an order of "list group type indices first and then the indices of the SSB index lists".

In some embodiments, the K list groups include K sixth list groups. In the sixth list groups, whether cell indices and the SSB indices in the SSB index lists corresponding to the cell indices belong to a serving cell or a non-serving cell is indicated by the cell indices and/or whether SSB parameters are configured for the cell indices.

In some embodiments, the K list groups include K sixth list groups. In a *k-th* sixth list group, if an *i-th* cell index is equal to 0, the *i-th* cell index and an *i-th* SSB index in the SSB index list belong to a serving cell defined for the K sixth list groups; if the *i-th* cell index is greater than 0 and no SSB parameter is configured for the *i-th* cell index, the *i-th* cell index and the *i-th* SSB index in the SSB index list belong to a serving cell; and if the *i-th* cell index is greater than 0 and an SSB parameter is configured for the *i-th* cell index, the *i-th* cell index and the *i-th* SSB index in the SSB index list belong to a non-serving cell; where, 1≤k≤K, 1≤i≤Iₖ, and Iₖ is the number of cell indices in the K sixth list groups.

In some embodiments, that 'an SSB parameter is configured for the *i-th* cell index' refers to that the *i-th* cell index, an SSB parameter and a PCI are configured in an RRC IE, and that 'no SSB parameter is configured for the *i-th* cell index' refers to that the *i-th* cell index and a PCI are configured in an RRC IE.

In some embodiments, in the first list groups or the second list groups or the fifth list groups, the cell indices of the serving cell are greater than or equal to a fourth threshold and less than the third threshold; and/or,
in the first list groups, the cell indices of the non-serving cell are greater than or equal to the third threshold and less than a fifth threshold; and/or,
in the third list groups, the cell indices of the non-serving cell are greater than or equal to a sixth threshold and less than a seventh threshold; and/or,
in the fourth list groups, the cell indices of the non-serving cell are greater than or equal to an eighth threshold and less than or equal to a ninth threshold.

In some embodiments, the third threshold is greater than 1.

In some embodiments, the third threshold is a maximum number of serving cells that the terminal equipment may be configured with, or, the third threshold is the number of serving cells that the terminal equipment may be configured with.

In some embodiments, in the cell index lists, the cell index of the serving cell is a configured index ServCellIndex of the serving cell.

In some embodiments, in the cell index lists, the cell index of the non-serving cell is a configured index additionalPCIIndex of the non-serving cell, or the cell index of the non-serving cell is a sum of the configured index additionalPCIIndex of the non-serving cell and an offset.

In some embodiments, the transmitting unit further transmits a first index, the first index being used to indicate a center frequency of SSBs of an inter-frequency cell, wherein the first index indicates a frequency in a group of frequencies.

In some embodiments, the first configuration information is included in a measurement configuration IE.

In some embodiments, the first configuration information is configured per cell, or, the first configuration information is configured per terminal equipment.

In some embodiments, the first configuration information is configured for a Pcell or an SpCell.

In some embodiments, the terminal equipment is configured with K serving cells, and the first configuration information configures a fourth list group for one of the serving cells.

In some embodiments, the K groups of SSBs configured by the first configuration information are SSBs measured by the terminal equipment.

In some embodiments, the apparatus 3200 further includes:
a receiving unit 3202 configured to receive R groups of reporting information for R groups of SSBs, wherein R≥1, a group of reporting information includes a group of L1-RSRP and a group of SSBRIs, or a group of L1-SINRs and a group of SSBRIs.

In some embodiments, in a group of reporting information, the number of L1-RSRP is equal to the number of SSBRIs, or the number of L1-SINRs is equal to the number of SSBRIs.

In some embodiments, the R groups of reporting information include a first group of reporting information and/or a second group of reporting information, the first group of reporting information including a group of L1-RSRP and a group of SSBRIs, and the second group of reporting information including a group of L1-SINRs and a group of SSBRIs.

In some embodiments, an *r-th* group of SSBs includes M1 SSBs, and an *r-th* group of reporting information for the *r-th* group of SSBs includes M2 pieces of L1-RSRP or L1-SINRs; where, M2≤M1, and 1≤r<R.

In some embodiments, the R groups of SSBs are determined according to the first configuration information.

In some embodiments, in the case where the first configuration information configures K groups of SSBs, the R groups of SSBs are the K groups of SSBs.

In some embodiments, in the case where the first configuration information configures K₁ second list groups and K₂ third list groups, the R groups of SSBs are determined according to the indices of the SSB index list, wherein an *r-th* group of SSBs includes SSBs in an SSB index list with an index r in the second list groups and/or SSBs in an SSB index list with an index r in the third list groups; where, 1≤r ≤R, 0≤K₁≤K, 0≤K₂≤K, and K₁+K₂=K.

In some embodiments, in the case where the first configuration information configures K₃ fourth list groups and K₄ fifth list groups, the R groups of SSBs are determined according to the indices of the SSB index list, wherein an *r-th* group of SSBs includes SSBs in an SSB index list with an index r in the fourth list groups and/or SSBs in an SSB index list with an index r in the fifth list groups; where, 1≤r ≤R, 0≤K₃≤K, 0≤K₄≤K, and K₃+K₄=K.

In some embodiments, the R groups of SSBs are determined according to whether the SSB indices included in the first configuration information belong to an intra-frequency cell or an inter-frequency cell, wherein in the R groups of SSBs, SSB indices of the same group of SSBs belong to an intra-frequency cell.

In some embodiments, in a case where the terminal equipment is configured with K serving cells and the first configuration information configures a fourth list group for one of the serving cells, the R groups of SSBs are SSBs included in fourth list groups configured for the K serving cells.

In some embodiments, the transmitting unit 3201 further transmits second configuration information, the second configuration information configuring the R groups of SSBs.

In some embodiments, the second configuration information configures the R groups of SSBs by configuring the R groups of SSBRIs.

In some embodiments, in the R groups of SSBs, SSB indices of the same group of SSBs belong to an intra-frequency cell, and/or SSB indices of different groups of SSBs belong to an inter-frequency cell.

In some embodiments, an SSBRI with a value of s denotes an *(s+1)-th* SSB index in a first SSB index list, which may be obtained by cascading K SSB index lists included in the K list groups; where, s≥0.

In some embodiments, the SSBRI with a value of s denotes an *(s+1)-th* SSB index in a second SSB index list, which is an SSB index list in the first configuration information; where, s≥0.

In some embodiments, the SSBRI with a value of s denotes an *(s+1)-th* SSB index in a third SSB index list, which is obtained by cascading SSB index lists associated with an *r-th* group of SSBs; where, s≥0, and 1≤r≤R_{∘}

In some embodiments, the R groups of SSBs are configured per cell.

In some embodiments, the reporting information is associated with list groups configured for one or more cells.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the information processing apparatus 3200 may further include other components or modules, and reference may be made to related techniques for particulars of these components or modules.

Furthermore, for the sake of simplicity, connection relationships between the components or modules or signal profiles thereof are only illustrated in FIG. 32. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

It can be seen from the above embodiment that the network device transmits the first configuration information, which includes one or more list groups, each list group including an SSB index list and a cell index list. Hence, the terminal equipment may perform SSB measurement according to the first configuration information, thereby achieving flexible measurement configuration, which is helpful to flexible cell handover.

### Embodiment of an eighth aspect

The embodiment of this disclosure provides an information processing apparatus. The apparatus may be, for example, a network device, or one or some components or assemblies configured in the network device. Contents in this embodiment identical to those in the embodiment of the fourth aspect shall not be described herein any further.

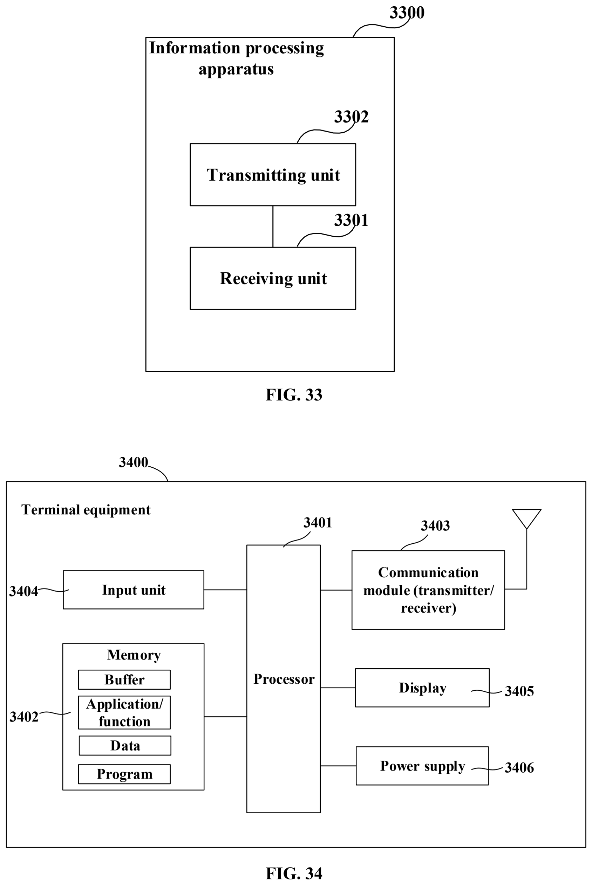

FIG. 33 is a schematic diagram of the information processing apparatus of the embodiment of this disclosure. As shown in FIG. 33, the information processing apparatus 3300 includes:
a receiving unit 3301 configured to receive R groups of reporting information for R groups of SSBs, wherein R≥1, a group of reporting information includes a group of L1-RSRP and a group of SSBRIs, or a group of L1-SINRs and a group of SSBRIs.

In some embodiments, in a group of reporting information, the number of L1-RSRP is equal to the number of SSBRIs, or the number of L1-SINRs is equal to the number of SSBRIs.

In some embodiments, the R groups of reporting information include a first group of reporting information and/or a second group of reporting information, the first group of reporting information including a group of L1-RSRP and a group of SSBRIs, and the second group of reporting information including a group of L1-SINRs and a group of SSBRIs.

In some embodiments, an *r-th* group of SSBs includes M1 SSBs, and an *r-th* group of reporting information for the *r-th* group of SSBs includes M2 pieces of L1-RSRP or L1-SINRs; where, M2≤M1, and 1≤r≤R.

In some embodiments, the apparatus 3300 further includes:
a transmitting unit 3302 configured to transmit first configuration information, the first configuration information configuring K groups of SSBs. The first configuration information includes K list groups, one of which including an SSB index list and a cell index list; where, K≥1.

In some embodiments, the K list groups include K first list groups. In a *k-th* first list group, if an *i-th* cell index in the cell index list is less than a third threshold, the *i-th* cell index and an *i-th* SSB index in the SSB index list belong to a serving cell; and if the *i-th* cell index in the cell index list is greater than or equal to the third threshold, the *i-th* cell index and the *i-th* SSB index in the SSB index list belong to a non-serving cell; where, 1≤k≤K, 1≤i≤Iₖ, and Iₖ is the number of cell indices in the *k-th* first list group.

In some embodiments, the K list groups include K₁ second list groups and K₂ third list groups. The second list groups include SSB index lists and cell index lists of a serving cell, and the third list groups include SSB index lists and cell index lists of a non-serving cell; where, 0≤K₁≤K, 0≤K₂≤K, and K₁+K₂=K.

In some embodiments, indices of the SSB index lists in the second list groups and indices of the SSB index lists in the third list groups are independently numbered.

In some embodiments, the K list groups include K₃ fourth list groups and K₄ fifth list groups. In a *k₃-th* fourth list group, if an *i-th* cell index is equal to 0, the *i-th* cell index and an *i-th* SSB index in the SSB index list belong to a serving cell defined for the *k₃-th* fourth list group. If the *i-th* cell index is greater than 0, the *i-th* cell index and the *i-th* SSB index in the SSB index list belong to a non-serving cell. The fifth list groups include SSB index lists and the cell index lists of the serving cell; where, 1 ≤ k₃≤K₃, 1≤i≤I*ₖ₃,* I*ₖ₃* being the number of cell indices in the *k₃-th* fourth list group, and 0≤K₃≤K, 0≤K₄≤K, K₃+K₄=K.

In some embodiments, indices of the SSB index lists in the fourth list groups and indices of the SSB index lists in the fifth list groups are independently numbered.

In some embodiments, the R groups of SSBs are determined according to the first configuration information.

In some embodiments, the R groups of SSBs are the K groups of SSBs.

In some embodiments, in the case where the first configuration information configures K₁ second list groups and K₂ third list groups, the R groups of SSBs are determined according to indices of the SSB index list, wherein the *r-th* group of SSBs includes SSBs in an SSB index list with an index r in the second list groups and/or SSBs in an SSB index list with an index r in the third list groups; where, 1 ≤r≤R.

In some embodiments, in the case where the first configuration information configures K₃ fourth list groups and K₄ fifth list groups, the R groups of SSBs are determined according to indices of the SSB index list, wherein the *r-th* group of SSBs includes SSBs in an SSB index list with an index r in the fourth list groups and/or SSBs in an SSB index list with an index r in the fifth list groups; where, 1≤r≤R.

In some embodiments, the R groups of SSBs are determined according to whether the SSB indices included in the first configuration information belong to an intra-frequency cell or an inter-frequency cell, wherein in the R groups of SSBs, SSB indices of the same group of SSBs belong to an intra-frequency cell.

In some embodiments, the transmitting unit transmits second configuration information, the second configuration information configuring the R groups of SSBs.

In some embodiments, the second configuration information configures the R groups of SSBs by configuring R groups of SSBRIs.

In some embodiments, in the R groups of SSBs, SSB indices of the same group of SSBs belong to an intra-frequency cell, and/or SSB indices of different groups of SSBs belong to an inter-frequency cell.

In some embodiments, an SSBRI with a value of s denotes an *(s+1)-th* SSB index in the first SSB index list, and the first SSB index list is obtained by cascading K SSB index lists included in the K list groups; where, s ≥0.

In some embodiments, an SSBRI with a value of s denotes an *(s+1)-th* SSB index in a second SSB index list, the second SSB index list being an SSB index list in the first configuration information; where, s≥0.

In some embodiments, the SSBRI with a value of s denotes an *(s+1)-th* SSB index in a third SSB index list, the third SSB index list being obtained by cascading SSB index lists with which the *r-th* group of SSBs is associated; where, s≥0, and 1≤ r≤R.

In some embodiments, the R groups of SSBs are configured per cell.

In some embodiments, the reporting information is associated with list groups configured for one or more cells.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the information processing apparatus 3300 may further include other components or modules, and reference may be made to related techniques for particulars of these components or modules.

Furthermore, for the sake of simplicity, connection relationships between the components or modules or signal profiles thereof are only illustrated in FIG. 33. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

It can be seen from the above embodiment that the network device receives one or more groups of reporting information for one or more groups of SSBs, each group of reporting information including one group of L1-RSRP and one group of SSBRIs, or one group of L1-SINRs and one group of SSBRIs, thereby achieving flexible measurement reporting, which is helpful to flexible cell handover.

### Embodiment of a ninth aspect

The embodiment of this disclosure provides a communication system, and reference may be made to FIG. 1, with contents identical to those in the embodiments of the first to the eighth aspects being not going to be described herein any further.

In some embodiments, the communication system 100 may at least include a network device and a terminal equipment, wherein the network device may be the network device described in the embodiment of the seventh or eighth aspect, and the terminal equipment may be the terminal equipment described in the embodiment of the fifth or sixth aspect.

For example, the network device transmits first configuration information, the first configuration information including K list groups, wherein K≥1, and one list group includes an SSB index list and a cell index list,
and the terminal equipment receives the first configuration information, and performs SSB measurement according to the first configuration information.

For another example, the terminal equipment transmits R groups of reporting information for R groups of SSBs, wherein R≥1, a group of reporting information includes a group of L1-RSRP and a group of SSBRIs, or a group of L1-SINRs and a group of SSBRIs,
and the network device receives the R groups of reporting information for R groups of SSBs.

The embodiment of this disclosure further provides a terminal equipment; however, this disclosure is not limited thereto, and it may also be another equipment.

FIG. 34 is a schematic diagram of the terminal equipment of the embodiment of this disclosure. As shown in FIG. 34, the terminal equipment 3400 may include a processor 3401 and a memory 3402, the memory 3402 storing data and a program and being coupled to the processor 3401. It should be noted that this figure is illustrative only, and other types of structures may also be used, so as to supplement or replace this structure and achieve a telecommunications function or other functions.

For example, the processor 3401 may be configured to execute a program to carry out the information processing method as described in the embodiment of the first or second aspect. For example, the processor 3401 may be configured to execute the following control: receiving first configuration information, the first configuration information including K list groups, wherein K≥1, and one list group includes an SSB index list and a cell index list; and performing SSB measurement according to the first configuration information. For another example, the processor 3401 may be configured to execute the following control: transmitting R groups of reporting information for R groups of SSBs, wherein R≥1, a group of reporting information includes a group of L1-RSRP and a group of SSBRIs, or a group of L1-SINRs and a group of SSBRIs.

As shown in FIG. 34, the terminal equipment 3400 may further include a communication module 3403, an input unit 3404, a display 3405, and a power supply 3406; wherein functions of the above components are similar to those in the related art, which shall not be described herein any further. It should be noted that the terminal equipment 3400 does not necessarily include all the parts shown in FIG. 34, and the above components are not necessary. Furthermore, the terminal equipment 3400 may include parts not shown in FIG. 34, and the related art may be referred to.

The embodiment of this disclosure further provides a network device, which may be, for example, a base station. However, this disclosure is not limited thereto, and it may also be another network device.

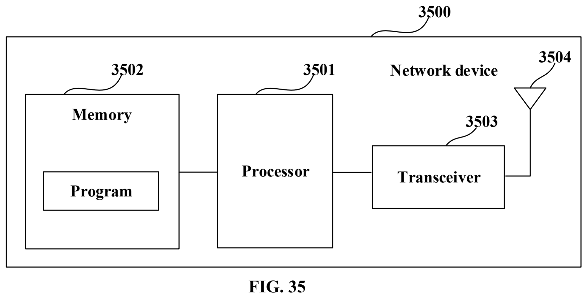

FIG. 35 is a schematic diagram of a structure of the network device of the embodiment of this disclosure. As shown in FIG. 35, the network device 3500 may include a processor 3501 (such as a central processing unit (CPU)) and a memory 3502, the memory 3502 being coupled to the processor 3501. Wherein, the memory 3520 may store various data, and furthermore, it may store a program for information processing, and execute the program under control of the processor 3501.

For example, the processor 3501 may be configured to execute a program to carry out the information processing method described in the embodiment of the third or fourth aspect. For example, the processor 3501 may be configured to execute the following control: transmitting first configuration information, the first configuration information including K list groups, wherein K≥1, and one list group includes an SSB index list and a cell index list. For another example, the processor 3501 may be configured to execute the following control: receiving R groups of reporting information for R groups of SSBs, wherein R≥1, a group of reporting information includes a group of L1-RSRP and a group of SSBRIs, or a group of L1-SINRs and a group of SSBRIs.

Furthermore, as shown in FIG. 35, the network device 3500 may include a transceiver 3504, and an antenna 3505, etc. Wherein, functions of the above components are similar to those in the related art, and shall not be described herein any further. It should be noted that the network device 3500 does not necessarily include all the parts shown in FIG. 35, and furthermore, the network device 3500 may include parts not shown in FIG. 35, and the related art may be referred to.

An embodiment of this disclosure provides a computer readable program code, which, when executed in a terminal equipment, will cause the terminal equipment to carry out the information processing method as described in the embodiment of the first or second aspect.

An embodiment of this disclosure provides a computer readable medium, including a computer readable program code, which will cause a terminal equipment to carry out the information processing method as described in the embodiment of the first or second aspect.

An embodiment of this disclosure provides a computer readable program code, which, when executed in a network device, will cause the network device to carry out the information processing method as described in the embodiment of the third or fourth aspect.

An embodiment of this disclosure provides a computer readable medium, including a computer readable program code, which will cause a network device to carry out the information processing method as described in the embodiment of the third or fourth aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

As to implementations containing the above embodiments, following supplements are further disclosed.

### Information processing apparatuses at terminal equipment sides

1. An information processing apparatus, configured in a terminal equipment, the information processing apparatus including:
   a receiving unit configured to receive first configuration information, the first configuration information including K list groups, wherein K≥1, and one list group includes an SSB index list and a cell index list; and
   a measurement unit configured to perform SSB measurement according to the first configuration information.
2. The apparatus according to supplement 1, wherein,
   the number of SSB indices included in the SSB index list is equal to the number of cell indices included in the cell index list.
3. The apparatus according to supplement 1, wherein,
   the number of SSB indices included in the K list groups is be less than or equal to a first threshold, and/or the number of different cell indices included in the K list groups is less than or equal to a second threshold, the second threshold being less than or equal to the first threshold.
4. The apparatus according to supplement 1, wherein,
   the K list groups include K first list groups, and in the first list groups, cell indices in the cell index list indicate that the cell indices and SSB indices in the SSB index list corresponding to the cell indices belong to a serving cell or a non-serving cell.
5. The apparatus according to supplement 1 or 4, wherein,
   the K list groups include K first list groups, and in a *k-th* first list group, if an *i-th* cell index in the cell index list is less than a third threshold, the *i-th* cell index and an *i-th* SSB index in the SSB index list belong to a serving cell; and if the *i-th* cell index in the cell index list is greater than or equal to the third threshold N₁, the *i-th* cell index and the *i-th* SSB index in the SSB index list belong to a non-serving cell; where, 1≤k≤K, 1≤i≤Iₖ, and Iₖ is the number of cell indices in the *k-th* first list group.
6. The apparatus according to supplement 1, wherein,
   the K list groups include K₁ second list groups and K₂ third list groups; where, 0≤K₁≤K, 0≤K₂≤K, and K₁+K₂=K; wherein whether the cell indices and the SSB indices in the SSB index lists corresponding to the cell indices belong to a serving cell or a non-serving cell is indicated by the list groups that include the cell indices and are the second list groups or the third list groups.
7. The apparatus according to supplement 1 or 6, wherein,
   the K list groups include K₁ second list groups and K₂ third list groups; where, 0≤K₁≤K, 0≤K₂≤K, and K₁+K₂=K; wherein the second list groups include SSB index lists and cell index lists of a serving cell, and the third list groups include SSB index lists and cell index lists of a non-serving cell.
7a. The apparatus according to supplement 7, wherein,
   the indices of the SSB index lists in the second list groups and the indices of the SSB index lists in the third list groups are independently numbered.
7b. The apparatus according to supplement 7a, wherein,
   the K₁ second list groups and K₂ third list groups are mapped to the K list groups in an order of "the indices of the SSB index lists first and then list group type indices", or in an order of "list group type indices first and then the indices of the SSB index lists".
8. The apparatus according to supplement 1, wherein,
   the K list groups include K₃ fourth list groups and K₄ fifth list groups; where, 0≤K₃≤K, 0≤K₄≤K, and K₃+K₄=K. Whether the cell indices and the SSB indices in the SSB index lists corresponding to the cell indices belong to a serving cell or a non-serving cell is indicated by the cell indices and/or the list groups that include the cell indices and are the fourth list groups or the fifth list groups.
9. The apparatus according to supplement 1 or 8, wherein,
   the K list groups include K₃ fourth list groups and K₄ fifth list groups; where, 0≤K₃≤K, 0≤K₄≤K, and K₃+K₄=K. In a *k-th* fourth list group, if an *i-th* cell index is equal to 0, the *i-th* cell index and an *i-th* SSB index in the SSB index list belong to a serving cell defined for the K₃ fourth list groups; and if the *i-th* cell index is greater than 0, the *i-th* cell index and the *i-th* SSB index in the SSB index list belong to a non-serving cell, and the fifth list groups include an SSB index list and a cell index list of the serving cell; where, 1≤k₃≤K₃, 1≤i≤Iₖ₃, and Iₖ₃ is the number of cell indices in the K₃ fourth list groups.
9a. The apparatus according to supplement 9, wherein,
   the indices of the SSB index lists in the fourth list groups and the indices of the SSB index lists in the fifth list group are independently numbered.
9b. The apparatus according to supplement 9a, wherein,
   the K₃ fourth list groups and K₄ fifth list groups are mapped to the K list groups in an order of "the indices of the SSB index lists first and then list group type indices", or in an order of "list group type indices first and then the indices of the SSB index lists".
9c. The apparatus according to supplement 1, wherein,
   the K list groups include K sixth list groups, and in the sixth list groups, whether cell indices and the SSB indices in the SSB index lists corresponding to the cell indices belong to a serving cell or a non-serving cell is indicated by the cell indices and/or whether SSB parameters are configured for the cell indices.
9d. The apparatus according to supplement 1 or 9c, wherein,
   the K list groups include K sixth list groups, and in a *k-th* sixth list group, if an *i-th* cell index is equal to 0, the *i-th* cell index and an *i-th* SSB index in the SSB index list belong to a serving cell defined for the K sixth list groups; if the *i-th* cell index is greater than 0 and no SSB parameter is configured for the *i-th* cell index, the *i-th* cell index and the *i-th* SSB index in the SSB index list belong to a serving cell; and if the *i-th* cell index is greater than 0 and an SSB parameter is configured for the *i-th* cell index, the *i-th* cell index and the *i-th* SSB index in the SSB index list belong to a non-serving cell; where, 1≤k≤K, 1≤i≤Iₖ, and Iₖ is the number of cell indices in the K sixth list groups.
9e. The apparatus according to supplement 9d, wherein,
   that 'an SSB parameter is configured for the *i-th* cell index' refers to that the *i-th* cell index, an SSB parameter and a PCI are configured in a radio resource control information element (RRC IE), and that 'no SSB parameter is configured for the *i-th* cell index' refers to that the *i-th* cell index and a PCI are configured in an RRC IE.
10. The apparatus according to any one of supplements 4-9, wherein,
   in the first list groups or the second list groups or the fifth list groups, the cell indices of the serving cell are greater than or equal to a fourth threshold and less than the third threshold; and/or,
   in the first list groups, the cell indices of the non-serving cell are greater than or equal to the third threshold and less than a fifth threshold; and/or,
   in the third list groups, the cell indices of the non-serving cell are greater than or equal to a sixth threshold and less than a seventh threshold; and/or,
   in the fourth list groups, the cell indices of the non-serving cell are greater than or equal to an eighth threshold and less than or equal to a ninth threshold.
11. The apparatus according to supplement 5, wherein,
   the third threshold is greater than 1.
12. The apparatus according to supplement 5, wherein,
   the third threshold is a maximum number of serving cells that the terminal equipment may be configured with, or, the third threshold is the number of serving cells that the terminal equipment may be configured with.
13. The apparatus according to supplement 1, wherein,
   in the cell index lists, the cell index of the serving cell is a configured index ServCellIndex of the serving cell.
14. The apparatus according to supplement 1, wherein,
   in the cell index lists, the cell index of the non-serving cell is a configured index additionalPCIIndex of the non-serving cell, or the cell index of the non-serving cell is a sum of the configured index additionalPCIIndex of the non-serving cell and an offset.
15. The apparatus according to supplement 1, wherein the apparatus further includes:
   a determining unit configured to determine a PCI and an SSB parameter associated with the cell indices according to the cell indices in the cell index list.
16. The apparatus according to supplement 15, wherein,
   the determining unit determines an SSB parameter associated with the SSB indices according to the SSB parameter and SSB indices in the SSB index list corresponding to the cell indices, and the measurement unit 3002 performs SSB measurement according to the SSB parameter associated with the SSB indices.
17. The apparatus according to supplement 1, wherein,
   the receiving unit further receives a first index, the first index being used to indicate a center frequency of SSBs of an inter-frequency cell, and he first index indicates a frequency in a group of frequencies.
18. The apparatus according to supplement 1, wherein,
   the first configuration information is included in a measurement configuration IE.
19. The apparatus according to supplement 1, wherein,
   the first configuration information is configured per cell, or the first configuration information is configured per terminal equipment.
19a. The apparatus according to supplement 1, wherein,
   the first configuration information is configured for a Pcell or an SpCell.
19b. The apparatus according to supplement 1 or 8 or 9, wherein,
   the terminal equipment is configured with K serving cells, and the first configuration information configures a fourth list group for one serving cell.
20. The apparatus according to supplement 1, wherein,
   the measurement unit measures K groups of SSBs configured by the first configuration information.
21. The apparatus according to supplement 1, wherein the apparatus further includes:
   a transmitting unit configured to transmit R groups of reporting information for R groups of SSBs, wherein R≥1, a group of reporting information includes a group of L1-RSRP and a group of SSBRIs, or a group of L1-SINRs and a group of SSBRIs.
22. The apparatus according to supplement 21, wherein,
   the number of L1-RSRP in a group of reporting information is equal to the number of SSBRIs, or the number of L1-SINRs is equal to the number of SSBRIs.
23. The apparatus according to supplement 21, wherein,
   the R groups of reporting information include a first group of reporting information and/or a second group of reporting information, wherein the first group of reporting information includes a group of L1-RSRP and a group of SSBRIs, and the second group of reporting information includes a group of L1-SINRs and a group of SSBRIs.
24. The apparatus according to supplement 21, wherein,
   an *r-th* group of SSBs includes M1 SSBs, and an *r-th* group of reporting information for the *r-th* group of SSBs includes M2 pieces of L1-RSRP or L1-SINRs; where, M2≤M1, and 1≤r≤R.
24a. The apparatus according to supplement 21, wherein,
   the R groups of SSBs are determined according to the first configuration information.
25. The apparatus according to supplement 24a, wherein,
   in the case where the first configuration information configures the K groups of SSBs, the R groups of SSBs are the K group of SSBs.
25a. The apparatus according to supplement 24a, wherein,
   in the case where the first configuration information configures K₁ second list groups and K₂ third list groups, the R groups of SSBs is determined according to the indices of the SSB index list, wherein an *r-th* group of SSBs includes SSBs in an SSB index list with an index r in the second list groups and/or SSBs in an SSB index list with an index r in the third list groups; where, 1≤r≤R, 0≤K₁≤K, 0≤K₂≤K, and K₁+K₂=K.
25b. The apparatus according to supplement 24a, wherein,
   in the case where the first configuration information configures K₃ fourth list groups and K₄ fifth list groups, the R groups of SSBs is determined according to the indices of the SSB index list, wherein an *r-th* group of SSBs includes SSBs in an SSB index list with an index r in the fourth list groups and/or SSBs in the SSB index list with an index r in the fifth list groups; where, 1≤r≤R, 0≤K₃≤K, 0≤K₄≤K, K₃+K₄=K.
25c. The apparatus according to supplement 24a, wherein,
   the R groups of SSBs are determined according to whether the SSB indices included in the first configuration information belong to an intra-frequency cell or an inter-frequency cell, wherein in the R groups of SSBs, SSB indices of the same group of SSBs belong to an intra-frequency cell.
25d. The apparatus according to supplement 24a, wherein,
   in the case where the terminal equipment is configured with K serving cells and the first configuration information configures a fourth list group for one of the serving cells, the R groups of SSBs are SSBs included in the fourth list groups configured for the K serving cells.
26. The apparatus according to supplement 21, wherein,
   the receiving unit further receives second configuration information, the second configuration information configuring the R groups of SSBs.
27. The apparatus according to supplement 26, wherein,
   the second configuration information configures the R groups of SSBs by configuring R groups of SSBRIs.
27a. The apparatus according to supplement 24a or 26, wherein,
   in the R groups of SSBs, SSB indices of the same group of SSBs belong to an intra-frequency cell, and/or SSB indices of different groups of SSBs belong to an inter-frequency cell.
28. The apparatus according to any of supplements 21-27, wherein,
   an SSBRI with a value of s denotes an *(s+1)-th* SSB index in a first SSB index list, the first SSB index list being obtained by cascading K SSB index lists included in the K list group, where, s≥0.
28a. The apparatus according to any of supplements 21-27, wherein,
   an SSBRI with a value of s denotes an *(s+1)-th* SSB index in a second SSB index list, the second SSB index list being an SSB index list in the first configuration information, where, s≥0.
29. The apparatus according to any of supplements 21-27, wherein,
   an SSBRI with a value of s denotes an *(s+1)-th* SSB index in a third SSB index list, the third SSB index list being obtained by cascading SSB index lists with which an *r-th* group of SSBs is associated, where, s≥0, and 1≤r≤R.
30. The apparatus according to supplement 21, wherein,
   the R groups of SSBs are configured per cell.
31. The apparatus according to supplement 21 or 30, wherein,
   the reporting information is associated with list groups configured for one or more cells.
32. The apparatus according to supplement 21, wherein the apparatus further includes:
   a quantization unit configured to perform the following operations on the *r-th* group of L1-RSRP or L1-SINRs: quantizing a piece of L1-RSRP or an L1-SINR into B₁ bits, and quantizing remaining L1-RSRP or L1-SINRs as differential L1-RSRP or differential L1-SINRs into B₂ bits, where, B₂<B₁, and 1≤r≤R.
32a. The apparatus according to supplement 32, wherein,
   the R groups of reporting information are arranged in an order of "the SSBRIs first and then the L1-RSRP and/or L1-SINRs".
32aa. The apparatus according to supplement 32a, wherein,
   the SSBRIs are arranged in an incremental order of the group indices of the R groups of reporting information.
32ab. The apparatus according to supplement 32a, wherein,
   the L1-RSRP and/or the L1-SINRs is/are arranged in an order of SSBRIs to which it/they correspond(s).
32ac. The apparatus according to supplement 32a, wherein,
   in an *r-th* group of SSBRIs, L1-RSRP or an L1-SINR to which a first SSBRI corresponds is quantized into B₁ bits, and L1-RSRP or L1-SINRs to which remaining SSBRIs correspond is/are quantized into B₂ bits.
33. The apparatus according to supplement 21, wherein the apparatus further includes:
   a quantization unit configured to perform the following operations respectively on R₁ groups of L1-RSRP and R₂ groups of L1-SINRs in a case where the R groups of reporting information include the R₁ groups of L1-RSRP and R₂ groups of L1-SINRs: one piece of L1-RSRP or an L1-SINR is quantized into B₁ bits, and remaining L1-RSRP or L1-SINRs are quantized as differential L1-RSRP or differential L1-SINRs into B₂ bits; where, B₂<B₁, 0<R₁<R, 0<R₂<R, R₁+R₂=R.
33a. The apparatus according to supplement 33, wherein,
   the R groups of reporting information are arranged in an order of "the SSBRIs first and then the L1-RSRP and/or L1-SINRs".
33aa. The apparatus according to supplement 33a, wherein,
   the SSBRIs are arranged in an order of "SSBRIs to which the L1-RSRP corresponds first and then SSBRIs to which the L1-SINRs correspond".
33ab. The apparatus according to supplement 33a, wherein,
   the L1-RSRP and/or L1-SINRs are arranged in an order of SSBRIs corresponding to the L1-RSRP and/or L1-SINRs.
33ac. The apparatus according to supplement 33a, wherein,
   in the SSBRIs to which the L1-RSRP corresponds, L1-RSRP to which a first SSBRI corresponds is quantized into B₁ bits, and L1-RSRP to which remaining SSBRIs correspond is quantized into B₂ bits; and/or, in the SSBRIs to which the L1-SINRs correspond, an L1-SINR to which a first SSBRI corresponds is quantized into B₁ bits, and L1-SINRs to which remaining SSBRIs correspond are quantized into B₂ bits.
34. The apparatus according to supplement 21, wherein the apparatus further includes:
   a quantization unit configured to perform the following operations on the R groups of L1-RSRP or L1-SINRs in the case where the R groups of reporting information include R groups of L1-RSRP or L1-SINRs: quantizing one piece of L1-RSRP or an L1-SINR into B₁ bits, and quantizing remaining L1-RSRP or L1-SINRs as differential L1-RSRP or differential L1-SINRs into B₂ bits; where, B₂<B₁.
35. The apparatus according to supplement 21, wherein the apparatus further includes:
   a quantization unit configured to perform the following operations on the R₁ groups of L1-RSRP and R₂ groups of L1-SINRs in a case where the R groups of reporting information include the R₁ groups of L1-RSRP and R₂ groups of L1-SINRs: quantizing one piece of L1-RSRP or an L1-SINR into B₁ bits, and quantizing remaining L1-RSRP or L1-SINRs as differential L1-RSRP or differential L1-SINRs into B₂ bits; where, B₂<B₁, 0<R₁<R, 0<R₂<R, R₁+R₂=R.
35a. The apparatus according to supplement 34 or 35, wherein,
   the R groups of reporting information are arranged in an order of "the SSBRIs first and then the L1-RSRP and/or L1-SINRs".
35aa. The apparatus according to supplement 35a, wherein,
   the L1-RSRP and/or the L1-SINRs is/are arranged in an order of SSBRIs to which it/they correspond(s).
35ab. The apparatus according to supplement 35a, wherein,
   L1-RSRP or an L1-SINR to which a first SSBRI corresponds is quantized into B₁ bits, and L1-RSRP or L1-SINRs to which remaining SSBRIs correspond is/are quantized into B₂ bits.
35b. The apparatus according to any one of supplements 32-35ab, wherein,
   largest L1-RSRP or a largest L1-SINR is quantified into B₁ bits.
35c. The apparatus according to any one of supplements 34-35b, wherein,
   in the R groups of reporting information, the SSBRIs may be sequentially arranged per group of the R groups of reporting information (or the R groups of SSBs), wherein groups where the SSBRIs corresponding to the L1-RSRP or L1-SINRs quantized into B₁ bits rank first, and remaining groups are arranged in an incremental order of group indices.
35d. The apparatus according to any one of supplements 34-35c, wherein,
   the transmitting unit transmits indication information, wherein the indication information indicates a group in the R groups of SSBs to which the SSBRIs corresponding to the L1 SRSP or L1-SINRs quantized into B₁ bits belong.
36. An information processing apparatus, configured in a terminal equipment, the information processing apparatus including:
   a transmitting unit configured to transmit R groups of reporting information for R groups of SSBs, wherein R≥1, a group of reporting information includes a group of L1-RSRP and a group of SSBRIs, or a group of L1-SINRs and a group of SSBRIs.
37. The apparatus according to supplement 36, wherein,
   in a group of reporting information, the number of L1-RSRP is equal to the number of SSBRIs, or the number of L1-SINRs is equal to the number of SSBRIs.
38. The apparatus according to supplement 36, wherein,
   the R groups of reporting information include a first group of reporting information and/or a second group of reporting information, the first group of reporting information including a group of L1-RSRP and a group of SSBRIs, and the second group of reporting information including a group of L1-SINRs and a group of SSBRIs.
39. The apparatus according to supplement 36, wherein,
   an *r-th* group of SSBs includes M1 SSBs, and an *r-th* group of reporting information for the *r-th* group of SSBs includes M2 pieces of L1-RSRP or L1-SINRs; where, M2≤M1, 1≤r≤R.
40. The apparatus according to supplement 36, wherein the apparatus further includes:
   a receiving unit configured to receive first configuration information, the first configuration information configuring K groups of SSBs, and the first configuration information including K list groups, wherein one list group includes an SSB index list and a cell index list; where, K≥ 1.
41. The apparatus according to supplement 40, wherein,
   the K list groups include K first list groups, and in a *k-th* first list group, if an *i-th* cell index in the cell index list is less than a third threshold, the *i-th* cell index and an *i-th* SSB index in the SSB index list belong to a serving cell, and if the *i-th* cell index in the cell index list is greater than or equal to the third threshold, the *i-th* cell index and the *i-th* SSB index in the SSB index list belong to a non-serving cell; where, 1 ≤k ≤K, 1 ≤i≤Iₖ, Iₖ being the number of the cell indices in the *k-th* first list group.
42. The apparatus according to supplement 40, wherein,
   the K list groups include K₁ second list groups and K₂ third list groups, the second list groups including SSB index lists and cell index lists of the serving cell, and the third list groups including SSB index lists and cell index lists of the non-serving cell; where, 0≤K₁≤K, 0≤K₂≤K, and K₁+K₂=K.
43. The apparatus according to supplement 42, wherein,
   indices of the SSB index lists in the second list groups and indices of the SSB index lists in the third list groups are independently numbered.
44. The apparatus according to supplement 40, wherein,
   the K list groups include K₃ fourth list groups and K₄ fifth list groups. In a *k₃-th* fourth list group, if an *i-th* cell index is equal to 0, the *i-th* cell index and an *i-th* SSB index in the SSB index list belong to a serving cell defined for the *k₃-th* fourth list group. If the *i-th* cell index is greater than 0, the *i-th* cell index and the *i-th* SSB index in the SSB index list belong to a non-serving cell. The fifth list groups include SSB index lists and the cell index lists of the serving cell; where, 1≤k₃≤K₃, 1≤i≤I*ₖ₃*, I*ₖ₃* being the number of cell indices in the *k₃-th* fourth list group, and 0≤K₃≤K, 0≤K₄ ≤K, K₃+K₄=K.
45. The apparatus according to supplement 44, wherein,
   indices of the SSB index lists in the fourth list groups and indices of the SSB index lists in the fifth list groups are independently numbered.
46. The apparatus according to supplement 40, wherein,
   the R groups of SSBs are determined according to the first configuration information.
47. The apparatus according to supplement 46, wherein,
   the R groups of SSBs are the K groups of SSBs.
48. The apparatus according to supplement 46, wherein,
   in the case where the first configuration information configures K₁ second list groups and K₂ third list groups, the R groups of SSBs are determined according to indices of the SSB index list, wherein the *r-th* group of SSBs includes SSBs in an SSB index list with an index r in the second list groups and/or SSBs in an SSB index list with an index r in the third list groups, where, 1 ≤r≤R.
49. The apparatus according to supplement 46, wherein,
   in a case where the first configuration information configures K₃ fourth list groups and K₄ fifth list groups, the R groups of SSBs are determined according to indices of the SSB index list, wherein the *r-th* group of SSBs includes SSBs in an SSB index list with an index r in the fourth list groups and/or SSBs in an SSB index list with an index r in the fifth list groups, 1 ≤r≤R.
50. The apparatus according to supplement 46, wherein,
   the R groups of SSBs are determined according to whether the SSB indices included in the first configuration information belong to an intra-frequency cell or an inter-frequency cell, wherein in the R groups of SSBs, SSB indices of the same group of SSBs belong to an intra-frequency cell.
51. The apparatus according to supplement 40, wherein,
   the receiving unit further receives second configuration information, the second configuration information configuring the R groups of SSBs.
52. The apparatus according to supplement 51, wherein,
   the second configuration information configures the R groups of SSBs by configuring R groups of SSBRIs.
52a. The apparatus according to supplement 46 or 51, wherein,
   in the R groups of SSBs, SSB indices of the same group of SSBs belong to an intra-frequency cell, and/or SSB indices of different groups of SSBs belong to an inter-frequency cell.
53. The apparatus according to any one of supplements 40-52, wherein,
   an SSBRI with a value of s denotes an *(s+1)-th* SSB index in the first SSB index list, and the first SSB index list is obtained by cascading K SSB index lists included in the K list groups; where, s≥0.
54. The apparatus according to any one of supplements 40-52, wherein,
   an SSBRI with a value of s denotes an *(s+1)-th* SSB index in a second SSB index list, the second SSB index list being an SSB index list in the first configuration information; where, s≥0.
54a. The apparatus according to any one of supplements 40-52, wherein,
   the SSBRI with a value of s denotes an *(s+1)-th* SSB index in a third SSB index list, the third SSB index list being obtained by cascading SSB index lists with which the *r-th* group of SSBs is associated; where, s≥0, and 1≤r≤R.
55. The apparatus according to supplement 36, wherein,
   the R groups of SSBs are configured per cell.
56. The apparatus according to supplement 36 or 55, wherein,
   the reporting information is associated with list groups configured for one or more cells.
57. The apparatus according to supplement 36, wherein the apparatus further includes:
   a quantization unit configured to perform the following operations on the *r-th* group of L1-RSRP or L1-SINRs: quantizing L1-RSRP or an L1-SINR into B₁ bits, and quantizing remaining L1-RSRP or L1-SINRs as differential L1-RSRP or differential L1-SINRs into B₂ bits; where, B₂<B₁, and 1≤r≤R.
58. The apparatus according to supplement 57, wherein,
   the R groups of reporting information are arranged in an order of "the SSBRIs first and then the L1-RSRP and/or L1-SINRs".
59. The apparatus according to supplement 58, wherein,
   the SSBRIs are arranged in an incremental order of the group indices of the R groups of reporting information.
60. The apparatus according to supplement 58, wherein,
   the L1-RSRP and/or L1-SINRs is/are arranged in an order of SSBRIs to which it/they correspond(s).
61. The apparatus according to supplement 58, wherein,
   in an *r-th* group of SSBRIs, L1-RSRP or an L1-SINR to which a first SSBRI corresponds is quantized into B₁ bits, and L1-RSRP or L1-SINRs to which remaining SSBRIs correspond is/are quantized into B₂ bits.
62. The apparatus according to supplement 36, wherein the apparatus further includes:
   a quantizing unit configured to, in case where the R groups of reporting information include R₁ groups of L1-RSRP and R₂ groups of L1-SINRs, perform following operations respectively on the R₁ groups of L1-RSRP and R₂ groups of L1-SINRs: one piece of L1-RSRP or an L1-SINR is quantized into B₁ bits, and remaining L1-RSRP or L1-SINRs is/are quantized as differential L1-RSRP or differential L1-SINRs into B₂ bits; where, B₂<B₁, 0<R₁<R, 0<R₂<R, R₁+R₂=R.
63. The apparatus according to supplement 62, wherein,
   the R groups of reporting information are arranged in an order of "the SSBRIs first and then the L1-RSRP and/or L1-SINRs".
64. The apparatus according to supplement 63, wherein,
   the SSBRIs are arranged in an order of "SSBRIs to which the L1-RSRP corresponds first and then SSBRIs to which the SINRs correspond".
65. The apparatus according to supplement 63, wherein,
   the L1-RSRP and/or L1-SINRs is/are arranged in an order of SSBRIs to which it/they correspond(s).
66. The apparatus according to supplement 63, wherein,
   in the SSBRIs to which the L1-RSRP corresponds, L1-RSRP to which a first SSBRI corresponds is quantized into B₁ bits, and L1-RSRP to which remaining SSBRIs correspond is quantized into B₂ bits; and/or, in the SSBRIs to which the L1-SINRs correspond, an L1-SINR to which a first SSBRI corresponds is quantized into B₁ bits, and L1-SINRs to which remaining SSBRIs correspond are quantized into B₂ bits.
67. The apparatus according to supplement 36, wherein the apparatus further includes:
   a quantization unit configured to, in a case where the R groups of reporting information include R groups of L1-RSRP or L1-SINRs, perform the following operations on the R groups of L1-RSRP or L1-SINRs: one piece of L1-RSRP or an L1-SINR is quantized into B₁ bits, and remaining L1-RSRP or L1-SINRs is/are quantized as differential L1-RSRP or differential L1-SINRs into B₂ bits; where, B₂<B₁.
68. The apparatus according to supplement 36, wherein the apparatus further includes:
   a quantization unit configured to, in a case where the R groups of reporting information include R₁ groups of L1-RSRP and R₂ groups of L1-SINRs, perform the following operations on the R₁ groups of L1-RSRP and R₂ groups of L1-SINRs: one piece of L1-RSRP or an L1-SINR is quantized into B₁ bits, and remaining L1-RSRP and L1-SINRs is/are quantized as differential L1-RSRP and differential L1-SINRs into B₂ bits; where, B₂<B₁, 0<R₁<R, 0<R₂<R, R₁+R₂=R.
69. The apparatus according to supplement 67 or 68, wherein,
   the R groups of reporting information are arranged in an order of "the SSBRIs first and then the L1-RSRP and/or SINRs".
70. The apparatus according to supplement 69, wherein,
   the L1-RSRP and/or L1-SINRs is/are arranged in an order of SSBRIs to which it/they correspond(s).
71. The apparatus according to supplement 69, wherein,
   L1-RSRP or an L1-SINR to which a first SSBRI corresponds is quantized into B₁ bits, and L1-RSRP and/or L1-SINRs to which remaining SSBRIs correspond is/are quantized into B₂ bits.
72. The apparatus according to any one of supplements 57-71, wherein,
   largest L1-RSRP or a largest L1-SINR is quantified into B₁ bits.
73. The apparatus according to any one of supplements 67-72, wherein,
   in the R groups of reporting information, the SSBRIs are sequentially arranged per group of the R groups of reporting information (or the R groups of SSBs), wherein groups where the SSBRIs corresponding to the L1-RSRP or L1-SINRs quantized into B₁ bits rank first, and remaining groups are arranged in an incremental order of group indices.
74. The apparatus according to any one of supplements 67-73, wherein,
   the transmitting unit transmits indication information, the indication information indicating a group in the R groups of SSBs to which the SSBRIs corresponding to the L1 SRSP or L1-SINRs quantized into B₁ bits belong.

### Information processing methods at terminal equipment sides

1. An information processing method, applicable to a terminal equipment, the method including:
   receiving first configuration information, the first configuration information including K list groups, wherein K≥1, and one list group includes an SSB index list and a cell index list; and
   performing SSB measurement according to the first configuration information.
2. The method according to supplement 1, wherein,
   the number of SSB indices included in the SSB index list is equal to the number of cell indices included in the cell index list.
3. The method according to supplement 1, wherein,
   the number of SSB indices included in the K list groups is be less than or equal to a first threshold, and/or the number of different cell indices included in the K list groups is less than or equal to a second threshold, the second threshold being less than or equal to the first threshold.
4. The method according to supplement 1, wherein,
   the K list groups include K first list groups, and in the first list groups, cell indices in the cell index list indicate that the cell indices and SSB indices in the SSB index list corresponding to the cell indices belong to a serving cell or a non-serving cell.
5. The method according to supplement 1 or 4, wherein,
   the K list groups include K first list groups, and in a *k-th* first list group, if an *i-th* cell index in the cell index list is less than a third threshold, the *i-th* cell index and an *i-th* SSB index in the SSB index list belong to a serving cell; and if the *i-th* cell index in the cell index list is greater than or equal to the third threshold N₁, the *i-th* cell index and the *i-th* SSB index in the SSB index list belong to a non-serving cell; where, 1≤k≤K, 1≤i≤Iₖ, and Iₖ is the number of cell indices in the *k-th* first list group.
6. The method according to supplement 1, wherein,
   the K list groups include K₁ second list groups and K₂ third list groups; where, 0≤K₁≤K, 0≤K₂≤K, and K₁+K₂=K; wherein whether the cell indices and the SSB indices in the SSB index lists corresponding to the cell indices belong to a serving cell or a non-serving cell is indicated by the list groups that include the cell indices and are the second list groups or the third list groups.
7. The method according to supplement 1 or 6, wherein,
   the K list groups include K₁ second list groups and K₂ third list groups; where, 0≤K₁≤K, 0≤K₂≤K, and K₁+K₂=K; wherein the second list groups include SSB index lists and cell index lists of a serving cell, and the third list groups include SSB index lists and cell index lists of a non-serving cell.
7a. The method according to supplement 7, wherein,
   the indices of the SSB index lists in the second list groups and the indices of the SSB index lists in the third list groups are independently numbered.
7b. The method according to supplement 7a, wherein,
   the K₁ second list groups and K₂ third list groups are mapped to the K list groups in an order of "the indices of the SSB index lists first and then list group type indices", or in an order of "list group type indices first and then the indices of the SSB index lists".
8. The method according to supplement 1, wherein,
   the K list groups include K₃ fourth list groups and K₄ fifth list groups; where, 0≤K₃≤K, 0≤K₄≤K, and K₃+K₄=K. Whether the cell indices and the SSB indices in the SSB index lists corresponding to the cell indices belong to a serving cell or a non-serving cell is indicated by the cell indices and/or the list groups that include the cell indices and are the fourth list groups or the fifth list groups.
9. The method according to supplement 1 or 8, wherein,
   the K list groups include K₃ fourth list groups and K₄ fifth list groups; where, 0≤K₃≤K, 0≤K₄≤K, and K₃+K₄=K. In a *k-th* fourth list group, if an *i-th* cell index is equal to 0, the *i-th* cell index and an *i-th* SSB index in the SSB index list belong to a serving cell defined for the K₃ fourth list groups; and if the *i-th* cell index is greater than 0, the *i-th* cell index and the *i-th* SSB index in the SSB index list belong to a non-serving cell, and the fifth list groups include an SSB index list and a cell index list of the serving cell; where, 1≤k₃≤K₃, 1≤i≤Iₖ₃, and Iₖ₃ is the number of cell indices in the K₃ fourth list groups.
9a. The method according to supplement 9, wherein,
   the indices of the SSB index lists in the fourth list groups and the indices of the SSB index lists in the fifth list group are independently numbered.
9b. The method according to supplement 9a, wherein,
   the K₃ fourth list groups and K₄ fifth list groups are mapped to the K list groups in an order of "the indices of the SSB index lists first and then list group type indices", or in an order of "list group type indices first and then the indices of the SSB index lists".
9c. The method according to supplement 1, wherein,
   the K list groups include K sixth list groups, and in the sixth list groups, whether cell indices and the SSB indices in the SSB index lists corresponding to the cell indices belong to a serving cell or a non-serving cell is indicated by the cell indices and/or whether SSB parameters are configured for the cell indices.
9d. The method according to supplement 1 or 9c, wherein,
   the K list groups include K sixth list groups, and in a *k-th* sixth list group, if an *i-th* cell index is equal to 0, the *i-th* cell index and an *i-th* SSB index in the SSB index list belong to a serving cell defined for the K sixth list groups; if the *i-th* cell index is greater than 0 and no SSB parameter is configured for the *i-th* cell index, the *i-th* cell index and the *i-th* SSB index in the SSB index list belong to a serving cell; and if the *i-th* cell index is greater than 0 and an SSB parameter is configured for the *i-th* cell index, the *i-th* cell index and the *i-th* SSB index in the SSB index list belong to a non-serving cell; where, 1≤k≤K, 1≤i≤Iₖ, and Iₖ is the number of cell indices in the K sixth list groups.
9e. The method according to supplement 9d, wherein,
   that 'an SSB parameter is configured for the *i-th* cell index' refers to that the *i-th* cell index, an SSB parameter and a PCI are configured in a radio resource control information element (RRC IE), and that 'no SSB parameter is configured for the *i-th* cell index' refers to that the *i-th* cell index and a PCI are configured in an RRC IE.
10. The method according to any one of supplements 4-9, wherein,
   in the first list groups or the second list groups or the fifth list groups, the cell indices of the serving cell are greater than or equal to a fourth threshold and less than the third threshold; and/or,
   in the first list groups, the cell indices of the non-serving cell are greater than or equal to the third threshold and less than a fifth threshold; and/or,
   in the third list groups, the cell indices of the non-serving cell are greater than or equal to a sixth threshold and less than a seventh threshold; and/or,
   in the fourth list groups, the cell indices of the non-serving cell are greater than or equal to an eighth threshold and less than or equal to a ninth threshold.
11. The method according to supplement 5, wherein,
   the third threshold is greater than 1.
12. The method according to supplement 5, wherein,
   the third threshold is a maximum number of serving cells that the terminal equipment may be configured with, or, the third threshold is the number of serving cells that the terminal equipment may be configured with.
13. The method according to supplement 1, wherein,
   in the cell index lists, the cell index of the serving cell is a configured index ServCellIndex of the serving cell.
14. The method according to supplement 1, wherein,
   in the cell index lists, the cell index of the non-serving cell is a configured index additionalPCIIndex of the non-serving cell, or the cell index of the non-serving cell is a sum of the configured index additionalPCIIndex of the non-serving cell and an offset.
15. The method according to supplement 1, wherein the method further includes:
   determining a PCI and an SSB parameter associated with the cell indices according to the cell indices in the cell index list.
16. The method according to supplement 15, wherein the method further includes:
   determining an SSB parameter associated with the SSB indices according to the SSB parameter and SSB indices in the SSB index list corresponding to the cell indices, and the measurement unit 3002 performs SSB measurement according to the SSB parameter associated with the SSB indices.
17. The method according to supplement 1, wherein the method further includes:
   receiving a first index, the first index being used to indicate a center frequency of SSBs of an inter-frequency cell, and he first index indicates a frequency in a group of frequencies.
18. The method according to supplement 1, wherein,
   the first configuration information is included in a measurement configuration IE.
19. The method according to supplement 1, wherein,
   the first configuration information is configured per cell, or the first configuration information is configured per terminal equipment.
19a. The method according to supplement 1, wherein,
   the first configuration information is configured for a Pcell or an SpCell.
19b. The method according to supplement 1 or 8 or 9, wherein,
   the terminal equipment is configured with K serving cells, and the first configuration information configures a fourth list group for one serving cell.
20. The method according to supplement 1, wherein,
   the terminal equipment measures K groups of SSBs configured by the first configuration information.
21. The method according to supplement 1, wherein the method further includes:
   transmitting R groups of reporting information for R groups of SSBs, wherein R ≥1, a group of reporting information includes a group of L1-RSRP and a group of SSBRIs, or a group of L1-SINRs and a group of SSBRIs.
22. The method according to supplement 21, wherein,
   the number of L1-RSRP in a group of reporting information is equal to the number of SSBRIs, or the number of L1-SINRs is equal to the number of SSBRIs.
23. The method according to supplement 21, wherein,
   the R groups of reporting information include a first group of reporting information and/or a second group of reporting information, wherein the first group of reporting information includes a group of L1-RSRP and a group of SSBRIs, and the second group of reporting information includes a group of L1-SINRs and a group of SSBRIs.
24. The method according to supplement 21, wherein,
   an *r-th* group of SSBs includes M1 SSBs, and an *r-th* group of reporting information for the *r-th* group of SSBs includes M2 pieces of L1-RSRP or L1-SINRs; where, M2≤M1, and 1≤r≤R.
24a. The method according to supplement 21, wherein,
   the R groups of SSBs are determined according to the first configuration information.
25. The method according to supplement 24a, wherein,
   in the case where the first configuration information configures the K groups of SSBs, the R groups of SSBs are the K group of SSBs.
25a. The method according to supplement 24a, wherein,
   in the case where the first configuration information configures K₁ second list groups and K₂ third list groups, the R groups of SSBs is determined according to the indices of the SSB index list, wherein an *r-th* group of SSBs includes SSBs in an SSB index list with an index r in the second list groups and/or SSBs in an SSB index list with an index r in the third list groups; where, 1 ≤r≤R, 0≤K₁≤K, 0≤K₂≤K, and K₁+K₂=K.
25b. The method according to supplement 24a, wherein,
   in the case where the first configuration information configures K₃ fourth list groups and K₄ fifth list groups, the R groups of SSBs is determined according to the indices of the SSB index list, wherein an *r-th* group of SSBs includes SSBs in an SSB index list with an index r in the fourth list groups and/or SSBs in the SSB index list with an index r in the fifth list groups; where, 1≤r≤R, 0≤K₃≤K, K₃+K₄=K.
25c. The method according to supplement 24a, wherein,
   the R groups of SSBs are determined according to whether the SSB indices included in the first configuration information belong to an intra-frequency cell or an inter-frequency cell, wherein in the R groups of SSBs, SSB indices of the same group of SSBs belong to an intra-frequency cell.
25d. The method according to supplement 24a, wherein,
   in the case where the terminal equipment is configured with K serving cells and the first configuration information configures a fourth list group for one of the serving cells, the R groups of SSBs are SSBs included in the fourth list groups configured for the K serving cells.
26. The method according to supplement 21, wherein the method further includes:
   receiving second configuration information, the second configuration information configuring the R groups of SSBs.
27. The method according to supplement 26, wherein,
   the second configuration information configures the R groups of SSBs by configuring R groups of SSBRIs.
27a. The method according to supplement 24a or 26, wherein,
   in the R groups of SSBs, SSB indices of the same group of SSBs belong to an intra-frequency cell, and/or SSB indices of different groups of SSBs belong to an inter-frequency cell.
28. The method according to any of supplements 21-27, wherein,
   an SSBRI with a value of s denotes an *(s+1)-th* SSB index in a first SSB index list, the first SSB index list being obtained by cascading K SSB index lists included in the K list group, where, s≥0.
28a. The method according to any of supplements 21-27, wherein,
   an SSBRI with a value of s denotes an *(s+1)-th* SSB index in a second SSB index list, the second SSB index list being an SSB index list in the first configuration information, where, s ≥ 0.
29. The method according to any of supplements 21-27, wherein,
   an SSBRI with a value of s denotes an *(s+1)-th* SSB index in a third SSB index list, the third SSB index list being obtained by cascading SSB index lists with which an *r-th* group of SSBs is associated, where, s≥0, and 1≤r≤R.
30. The method according to supplement 21, wherein,
   the R groups of SSBs are configured per cell.
31. The method according to supplement 21 or 30, wherein,
   the reporting information is associated with list groups configured for one or more cells.
32. The method according to supplement 21, wherein the method further includes:
   performing the following operations on the *r-th* group of L1-RSRP or L1-SINRs: quantizing a piece of L1-RSRP or an L1-SINR into B₁ bits, and quantizing remaining L1-RSRP or L1-SINRs as differential L1-RSRP or differential L1-SINRs into B₂ bits, where, B₂<B₁, and 1≤r≤R.
32a. The method according to supplement 32, wherein,
   the R groups of reporting information are arranged in an order of "the SSBRIs first and then the L1-RSRP and/or L1-SINRs".
32aa. The method according to supplement 32a, wherein,
   the SSBRIs are arranged in an incremental order of the group indices of the R groups of reporting information.
32ab. The method according to supplement 32a, wherein,
   the L1-RSRP and/or the L1-SINRs is/are arranged in an order of SSBRIs to which it/they correspond(s).
32ac. The method according to supplement 32a, wherein,
   in an *r-th* group of SSBRIs, L1-RSRP or an L1-SINR to which a first SSBRI corresponds is quantized into B₁ bits, and L1-RSRP or L1-SINRs to which remaining SSBRIs correspond is/are quantized into B₂ bits.
33. The method according to supplement 21, wherein the method further includes:
   performing the following operations respectively on R₁ groups of L1-RSRP and R₂ groups of L1-SINRs in a case where the R groups of reporting information include the R₁ groups of L1-RSRP and R₂ groups of L1-SINRs: one piece of L1-RSRP or an L1-SINR is quantized into B₁ bits, and remaining L1-RSRP or L1-SINRs are quantized as differential L1-RSRP or differential L1-SINRs into B₂ bits; where, B₂<B₁, 0<R₁<R, 0<R₂<R, R₁+R₂=R.
33a. The method according to supplement 33, wherein,
   the R groups of reporting information are arranged in an order of "the SSBRIs first and then the L1-RSRP and/or L1-SINRs".
33aa. The method according to supplement 33a, wherein,
   the SSBRIs are arranged in an order of "SSBRIs to which the L1-RSRP corresponds first and then SSBRIs to which the L1-SINRs correspond".
33ab. The method according to supplement 33a, wherein,
   the L1-RSRP and/or L1-SINRs are arranged in an order of SSBRIs corresponding to the L1-RSRP and/or L1-SINRs.
33ac. The method according to supplement 33a, wherein,
   in the SSBRIs to which the L1-RSRP corresponds, L1-RSRP to which a first SSBRI corresponds is quantized into B₁ bits, and L1-RSRP to which remaining SSBRIs correspond is quantized into B₂ bits; and/or, in the SSBRIs to which the L1-SINRs correspond, an L1-SINR to which a first SSBRI corresponds is quantized into B₁ bits, and L1-SINRs to which remaining SSBRIs correspond are quantized into B₂ bits.
34. The method according to supplement 21, wherein the method further includes:
   performing the following operations on the R groups of L1-RSRP or L1-SINRs in the case where the R groups of reporting information include R groups of L1-RSRP or L1-SINRs: quantizing one piece of L1-RSRP or an L1-SINR into B₁ bits, and quantizing remaining L1-RSRP or L1-SINRs as differential L1-RSRP or differential L1-SINRs into B₂ bits; where, B₂<B₁.
35. The method according to supplement 21, wherein the method further includes:
   performing the following operations on the R₁ groups of L1-RSRP and R₂ groups of L1-SINRs in a case where the R groups of reporting information include the R₁ groups of L1-RSRP and R₂ groups of L1-SINRs: quantizing one piece of L1-RSRP or an L1-SINR into B₁ bits, and quantizing remaining L1-RSRP or L1-SINRs as differential L1-RSRP or differential L1-SINRs into B₂ bits; where, B₂<B₁, 0<R₁<R, 0<R₂<R, R₁+R₂=R.
35a. The method according to supplement 34 or 35, wherein,
   the R groups of reporting information are arranged in an order of "the SSBRIs first and then the L1-RSRP and/or L1-SINRs".
35aa. The method according to supplement 35a, wherein,
   the L1-RSRP and/or the L1-SINRs is/are arranged in an order of SSBRIs to which it/they correspond(s).
35ab. The method according to supplement 35a, wherein,
   L1-RSRP or an L1-SINR to which a first SSBRI corresponds is quantized into B₁ bits, and L1-RSRP or L1-SINRs to which remaining SSBRIs correspond is/are quantized into B₂ bits.
35b. The method according to any one of supplements 32-35ab, wherein,
   largest L1-RSRP or a largest L1-SINR is quantified into B₁ bits.
35c. The method according to any one of supplements 34-35b, wherein,
   in the R groups of reporting information, the SSBRIs may be sequentially arranged per group of the R groups of reporting information (or the R groups of SSBs), wherein groups where the SSBRIs corresponding to the L1-RSRP or L1-SINRs quantized into B₁ bits rank first, and remaining groups are arranged in an incremental order of group indices.
35d. The method according to any one of supplements 34-35c, wherein the method further includes:
   transmitting indication information, wherein the indication information indicates a group in the R groups of SSBs to which the SSBRIs corresponding to the L1 SRSP or L1-SINRs quantized into B₁ bits belong.
36. An information processing method, applicable to a terminal equipment, the method including:
   transmitting R groups of reporting information for R groups of SSBs, wherein R ≥1, a group of reporting information includes a group of L1-RSRP and a group of SSBRIs, or a group of L1-SINRs and a group of SSBRIs.
37. The method according to supplement 36, wherein,
   in a group of reporting information, the number of L1-RSRP is equal to the number of SSBRIs, or the number of L1-SINRs is equal to the number of SSBRIs.
38. The method according to supplement 36, wherein,
   the R groups of reporting information include a first group of reporting information and/or a second group of reporting information, the first group of reporting information including a group of L1-RSRP and a group of SSBRIs, and the second group of reporting information including a group of L1-SINRs and a group of SSBRIs.
39. The method according to supplement 36, wherein,
   an *r-th* group of SSBs includes M1 SSBs, and an *r-th* group of reporting information for the *r-th* group of SSBs includes M2 pieces of L1-RSRP or L1-SINRs; where, M2≤M1, 1≤r≤R.
40. The method according to supplement 36, wherein the method further includes:
   receiving first configuration information, the first configuration information configuring K groups of SSBs, and the first configuration information including K list groups, wherein one list group includes an SSB index list and a cell index list; where, K≥1.
41. The method according to supplement 40, wherein,
   the K list groups include K first list groups, and in a *k-th* first list group, if an *i-th* cell index in the cell index list is less than a third threshold, the *i-th* cell index and an *i-th* SSB index in the SSB index list belong to a serving cell, and if the *i-th* cell index in the cell index list is greater than or equal to the third threshold, the *i-th* cell index and the *i-th* SSB index in the SSB index list belong to a non-serving cell; where, 1≤k ≤K, 1≤i≤Iₖ, Iₖ being the number of the cell indices in the *k-th* first list group.
42. The method according to supplement 40, wherein,
   the K list groups include K₁ second list groups and K₂ third list groups, the second list groups including SSB index lists and cell index lists of the serving cell, and the third list groups including SSB index lists and cell index lists of the non-serving cell; where, 0≤K₁≤K, 0≤K₂≤K, and K₁+K₂=K.
43. The method according to supplement 42, wherein,
   indices of the SSB index lists in the second list groups and indices of the SSB index lists in the third list groups are independently numbered.
44. The method according to supplement 40, wherein,
   the K list groups include K₃ fourth list groups and K₄ fifth list groups. In a *k₃-th* fourth list group, if an *i-th* cell index is equal to 0, the *i-th* cell index and an *i-th* SSB index in the SSB index list belong to a serving cell defined for the *k₃-th* fourth list group. If the *i-th* cell index is greater than 0, the *i-th* cell index and the *i-th* SSB index in the SSB index list belong to a non-serving cell. The fifth list groups include SSB index lists and the cell index lists of the serving cell; where, 1≤k₃≤K₃, 1≤i≤I*ₖ₃,* I*ₖ₃* being the number of cell indices in the *k₃-th* fourth list group, and 0≤K₃≤K, 0≤K₄ ≤K, K₃+K₄=K.
45. The method according to supplement 44, wherein,
   indices of the SSB index lists in the fourth list groups and indices of the SSB index lists in the fifth list groups are independently numbered.
46. The method according to supplement 40, wherein,
   the R groups of SSBs are determined according to the first configuration information.
47. The method according to supplement 46, wherein,
   the R groups of SSBs are the K groups of SSBs.
48. The method according to supplement 46, wherein,
   in the case where the first configuration information configures K₁ second list groups and K₂ third list groups, the R groups of SSBs are determined according to indices of the SSB index list, wherein the *r-th* group of SSBs includes SSBs in an SSB index list with an index r in the second list groups and/or SSBs in an SSB index list with an index r in the third list groups, where, 1 ≤r≤R.
49. The method according to supplement 46, wherein,
   in a case where the first configuration information configures K₃ fourth list groups and K₄ fifth list groups, the R groups of SSBs are determined according to indices of the SSB index list, wherein the *r-th* group of SSBs includes SSBs in an SSB index list with an index r in the fourth list groups and/or SSBs in an SSB index list with an index r in the fifth list groups, 1 ≤r≤R.
50. The method according to supplement 46, wherein,
   the R groups of SSBs are determined according to whether the SSB indices included in the first configuration information belong to an intra-frequency cell or an inter-frequency cell, wherein in the R groups of SSBs, SSB indices of the same group of SSBs belong to an intra-frequency cell.
51. The method according to supplement 40, wherein the method further includes:
   receiving second configuration information, the second configuration information configuring the R groups of SSBs.
52. The method according to supplement 51, wherein,
   the second configuration information configures the R groups of SSBs by configuring R groups of SSBRIs.
52a. The method according to supplement 46 or 51, wherein,
   in the R groups of SSBs, SSB indices of the same group of SSBs belong to an intra-frequency cell, and/or SSB indices of different groups of SSBs belong to an inter-frequency cell.
53. The method according to any one of supplements 40-52, wherein,
   an SSBRI with a value of s denotes an *(s+1)-th* SSB index in the first SSB index list, and the first SSB index list is obtained by cascading K SSB index lists included in the K list groups; where, s≥0.
54. The method according to any one of supplements 40-52, wherein,
   an SSBRI with a value of s denotes an *(s+1)-th* SSB index in a second SSB index list, the second SSB index list being an SSB index list in the first configuration information; where, s≥0.
54a. The method according to any one of supplements 40-52, wherein,
   the SSBRI with a value of s denotes an *(s+1)-th* SSB index in a third SSB index list, the third SSB index list being obtained by cascading SSB index lists with which the *r-th* group of SSBs is associated; where, s≥0, and 1 ≤r≤R.
55. The method according to supplement 36, wherein,
   the R groups of SSBs are configured per cell.
56. The method according to supplement 36 or 55, wherein,
   the reporting information is associated with list groups configured for one or more cells.
57. The method according to supplement 36, wherein the method further includes:
   performing the following operations on the *r-th* group of L1-RSRP or L1-SINRs: quantizing L1-RSRP or an L1-SINR into B₁ bits, and quantizing remaining L1-RSRP or L1-SINRs as differential L1-RSRP or differential L1-SINRs into B₂ bits; where, B₂<B₁, and 1≤r≤R.
58. The method according to supplement 57, wherein,
   the R groups of reporting information are arranged in an order of "the SSBRIs first and then the L1-RSRP and/or L1-SINRs".
59. The method according to supplement 58, wherein,
   the SSBRIs are arranged in an incremental order of the group indices of the R groups of reporting information.
60. The method according to supplement 58, wherein,
   the L1-RSRP and/or L1-SINRs is/are arranged in an order of SSBRIs to which it/they correspond(s).
61. The method according to supplement 58, wherein,
   in an *r-th* group of SSBRIs, L1-RSRP or an L1-SINR to which a first SSBRI corresponds is quantized into B₁ bits, and L1-RSRP or L1-SINRs to which remaining SSBRIs correspond is/are quantized into B₂ bits.
62. The method according to supplement 36, wherein the method further includes:
   in case where the R groups of reporting information include R₁ groups of L1-RSRP and R₂ groups of L1-SINRs, performing following operations respectively on the R₁ groups of L1-RSRP and R₂ groups of L1-SINRs: one piece of L1-RSRP or an L1-SINR is quantized into B₁ bits, and remaining L1-RSRP or L1-SINRs is/are quantized as differential L1-RSRP or differential L1-SINRs into B₂ bits; where, B₂<B₁, 0<R₁<R, 0<R₂<R, R₁+R₂=R.
63. The method according to supplement 62, wherein,
   the R groups of reporting information are arranged in an order of "the SSBRIs first and then the L1-RSRP and/or L1-SINRs".
64. The method according to supplement 63, wherein,
   the SSBRIs are arranged in an order of "SSBRIs to which the L1-RSRP corresponds first and then SSBRIs to which the SINRs correspond".
65. The method according to supplement 63, wherein,
   the L1-RSRP and/or L1-SINRs is/are arranged in an order of SSBRIs to which it/they correspond(s).
66. The method according to supplement 63, wherein,
   in the SSBRIs to which the L1-RSRP corresponds, L1-RSRP to which a first SSBRI corresponds is quantized into B₁ bits, and L1-RSRP to which remaining SSBRIs correspond is quantized into B₂ bits; and/or, in the SSBRIs to which the L1-SINRs correspond, an L1-SINR to which a first SSBRI corresponds is quantized into B₁ bits, and L1-SINRs to which remaining SSBRIs correspond are quantized into B₂ bits.
67. The method according to supplement 36, wherein the method further includes:
   in a case where the R groups of reporting information include R groups of L1-RSRP or L1-SINRs, performing the following operations on the R groups of L1-RSRP or L1-SINRs: one piece of L1-RSRP or an L1-SINR is quantized into B₁ bits, and remaining L1-RSRP or L1-SINRs is/are quantized as differential L1-RSRP or differential L1-SINRs into B₂ bits; where, B₂<B₁.
68. The method according to supplement 36, wherein the method further includes:
   in a case where the R groups of reporting information include R₁ groups of L1-RSRP and R₂ groups of L1-SINRs, performing the following operations on the R₁ groups of L1-RSRP and R₂ groups of L1-SINRs: one piece of L1-RSRP or an L1-SINR is quantized into B₁ bits, and remaining L1-RSRP and L1-SINRs is/are quantized as differential L1-RSRP and differential L1-SINRs into B₂ bits; where, B₂<B₁, 0<R₁<R, 0<R₂<R, R₁+R₂=R.
69. The method according to supplement 67 or 68, wherein,
   the R groups of reporting information are arranged in an order of "the SSBRIs first and then the L1-RSRP and/or SINRs".
70. The method according to supplement 69, wherein,
   the L1-RSRP and/or L1-SINRs is/are arranged in an order of SSBRIs to which it/they correspond(s).
71. The method according to supplement 69, wherein,
   L1-RSRP or an L1-SINR to which a first SSBRI corresponds is quantized into B₁ bits, and L1-RSRP and/or L1-SINRs to which remaining SSBRIs correspond is/are quantized into B₂ bits.
72. The method according to any one of supplements 57-71, wherein,
   largest L1-RSRP or a largest L1-SINR is quantified into B₁ bits.
73. The method according to any one of supplements 67-72, wherein the method further includes:
   in the R groups of reporting information, arranging the SSBRIs sequentially per group of the R groups of reporting information (or the R groups of SSBs), wherein groups where the SSBRIs corresponding to the L1-RSRP or L1-SINRs quantized into B₁ bits rank first, and remaining groups are arranged in an incremental order of group indices.
74. The method according to any one of supplements 67-73, wherein the method further includes:
   transmitting indication information, the indication information indicating a group in the R groups of SSBs to which the SSBRIs corresponding to the L1 SRSP or L1-SINRs quantized into B₁ bits belong.

### Terminal equipment

1. A terminal equipment, including a memory and a processor, the memory storing a computer program, and the processor being configured to execute the computer program to carry out the methods as described in the supplements with respect to methods.

### Information processing apparatuses at network device sides

1. An information processing apparatus, configured in a network device, the information processing apparatus including:
   a transmitting unit configured to transmit first configuration information, the first configuration information including K list groups, wherein K≥1, and one list group includes an SSB index list and a cell index list.
2. The apparatus according to supplement 1, wherein,
   the number of SSB indices included in the SSB index list is equal to the number of cell indices included in the cell index list.
3. The apparatus according to supplement 1, wherein,
   the number of SSB indices included in the K list groups is less than or equal to a first threshold, and/or the number of different cell indices included in the K list groups is less than or equal to a second threshold, wherein the second threshold is less than or equal to the first threshold.
4. The apparatus according to supplement 1, wherein,
   the K list groups include K first list groups, in which cell indices in the cell index list indicate whether the cell indices and the SSB indices in the SSB index list corresponding to the cell indices belong to a serving cell or a non-serving cell.
5. The apparatus according to supplement 1 or 4, wherein,
   the K list groups include K first list groups. In a *k-th* first list group, if an *i-th* cell index in the cell index list is less than a third threshold, the *i-th* cell index and an *i-th* SSB index in the SSB index list belong to a serving cell; and if the *i-th* cell index in the cell index list is greater than or equal to the third threshold, the *i-th* cell index and the *i-th* SSB index in the SSB index list belong to a non-serving cell; where, 1≤k≤K, 1≤i≤Iₖ, and Iₖ is the number of cell indices in the *k-th* first list group.
6. The apparatus according to supplement 1, wherein,
   the K list groups include K₁ second list groups and K₂ third list groups; where, 0≤K₁≤K, 0≤K₂≤K, and K₁+K₂=K. Whether the cell indices and the SSB indices in the SSB index lists corresponding to the cell indices belong to a serving cell or a non-serving cell is indicated by the list groups that include the cell indices and are the second list groups or the third list groups.
7. The apparatus according to supplement 1 or 6, wherein,
   the K list groups include K₁ second list groups and K₂ third list groups; where, 0≤K₁≤K, 0≤K₂≤K, and K₁+K₂=K. The second list groups include SSB index lists and cell index lists of a serving cell, and the third list groups include SSB index lists and cell index lists of a non-serving cell.
7a. The apparatus according to supplement 7, wherein,
   the indices of the SSB index lists in the second list groups and the indices of the SSB index lists in the third list groups are independently numbered.
7b. The apparatus according to supplement 7a, wherein,
   the K₁ second list groups and K₂ third list groups are mapped to the K list groups in an order of "the indices of the SSB index lists first and then list group type indices", or in an order of "list group type indices first and then the indices of the SSB index lists".
8. The apparatus according to supplement 1, wherein,
   the K list groups include K₃ fourth list groups and K₄ fifth list groups; where, 0≤K₃≤K, 0≤K₄≤K, and K₃+K₄=K; wherein whether the cell indices and the SSB indices in the SSB index lists corresponding to the cell indices belong to a serving cell or a non-serving cell is indicated by the cell indices and/or the list groups that include the cell indices and are the fourth list groups or the fifth list groups.
9. The apparatus according to supplement 1 or 8, wherein,
   the K list groups include K₃ fourth list groups and K₄ fifth list groups; where, 0≤K₃≤K, 0≤K₄≤K, and K₃+K₄=K. In a *k-th* fourth list group, if an *i-th* cell index is equal to 0, the *i-th* cell index and an *i-th* SSB index in the SSB index list belong to a serving cell defined for the K₃ fourth list groups; and if the *i-th* cell index is greater than 0, the *i-th* cell index and the *i-th* SSB index in the SSB index list belong to a non-serving cell, and the fifth list groups include an SSB index list and a cell index list of the serving cell; where, 1≤k₃≤K₃, 1≤i≤Iₖ₃, and Iₖ₃ is the number of cell indices in the K₃ fourth list groups.
9a. The apparatus according to supplement 9, wherein,
   the indices of the SSB index lists in the fourth list groups and the indices of the SSB index lists in the fifth list group are independently numbered.
9b. The apparatus according to supplement 9a, wherein,
   the K₃ fourth list groups and K₄ fifth list groups are mapped to the K list groups in an order of "the indices of the SSB index lists first and then list group type indices", or in an order of "list group type indices first and then the indices of the SSB index lists".
9c. The apparatus according to supplement 1, wherein,
   the K list groups include K sixth list groups, and in the sixth list groups, whether cell indices and the SSB indices in the SSB index lists corresponding to the cell indices belong to a serving cell or a non-serving cell is indicated by the cell indices and/or whether SSB parameters are configured for the cell indices.
9d. The apparatus according to supplement 1 or 9c, wherein,
   the K list groups include K sixth list groups. In a *k-th* sixth list group, if an *i-th* cell index is equal to 0, the *i-th* cell index and an *i-th* SSB index in the SSB index list belong to a serving cell defined for the K sixth list groups; if the *i-th* cell index is greater than 0 and no SSB parameter is configured for the *i-th* cell index, the *i-th* cell index and the *i-th* SSB index in the SSB index list belong to a serving cell; and if the *i-th* cell index is greater than 0 and an SSB parameter is configured for the *i-th* cell index, the *i-th* cell index and the *i-th* SSB index in the SSB index list belong to a non-serving cell; where, 1≤k≤K, 1≤i≤Iₖ, and Iₖ is the number of cell indices in the K sixth list groups.
9e. The apparatus according to supplement 9d, wherein,
   that 'an SSB parameter is configured for the *i-th* cell index' refers to that the *i-th* cell index, an SSB parameter and a PCI are configured in an RRC IE, and that 'no SSB parameter is configured for the *i-th* cell index' refers to that the *i-th* cell index and a PCI are configured in an RRC IE.
10. The apparatus according to any one of supplements 4-9, wherein,
   in the first list groups or the second list groups or the fifth list groups, the cell indices of the serving cell are greater than or equal to a fourth threshold and less than the third threshold; and/or,
   in the first list groups, the cell indices of the non-serving cell are greater than or equal to the third threshold and less than a fifth threshold; and/or,
   in the third list groups, the cell indices of the non-serving cell are greater than or equal to a sixth threshold and less than a seventh threshold; and/or,
   in the fourth list groups, the cell indices of the non-serving cell are greater than or equal to an eighth threshold and less than or equal to a ninth threshold.
11. The apparatus according to supplement 5, wherein,
   the third threshold is greater than 1.
12. The apparatus according to supplement 5, wherein,
   the third threshold is a maximum number of serving cells that the terminal equipment may be configured with, or, the third threshold is the number of serving cells that the terminal equipment may be configured with.
13. The apparatus according to supplement 1, wherein,
   in the cell index lists, the cell index of the serving cell is a configured index ServCellIndex of the serving cell.
14. The apparatus according to supplement 1, wherein,
   in the cell index lists, the cell index of the non-serving cell is a configured index additionalPCIIndex of the non-serving cell, or the cell index of the non-serving cell is a sum of the configured index additionalPCIIndex of the non-serving cell and an offset.
15. The apparatus according to supplement 1, wherein,
   the transmitting unit further transmits a first index, the first index being used to indicate a center frequency of SSBs of an inter-frequency cell, wherein the first index indicates a frequency in a group of frequencies.
16. The apparatus according to supplement 1, wherein,
   the first configuration information is included in a measurement configuration IE.
17. The apparatus according to supplement 1, wherein,
   the first configuration information is configured per cell, or, the first configuration information is configured per terminal equipment.
17a. The apparatus according to supplement 1, wherein,
   the first configuration information is configured for a Pcell or an SpCell.
17b. The apparatus according to supplement 1 or 8 or 9, wherein,
   the terminal equipment is configured with K serving cells, and the first configuration information configures a fourth list group for one of the serving cells.
18. The apparatus according to supplement 1, wherein,
   the K groups of SSBs configured by the first configuration information are SSBs measured by the terminal equipment.
19. The apparatus according to supplement 1, wherein the apparatus further includes:
   a receiving unit configured to receive R groups of reporting information for R groups of SSBs, wherein R≥1, a group of reporting information includes a group of L1-RSRP and a group of SSBRIs, or a group of L1-SINRs and a group of SSBRIs.
20. The apparatus according to supplement 19, wherein,
   in a group of reporting information, the number of L1-RSRP is equal to the number of SSBRIs, or the number of L1-SINRs is equal to the number of SSBRIs.
21. The apparatus according to supplement 19, wherein,
   the R groups of reporting information include a first group of reporting information and/or a second group of reporting information, the first group of reporting information including a group of L1-RSRP and a group of SSBRIs, and the second group of reporting information including a group of L1-SINRs and a group of SSBRIs.
22. The apparatus according to supplement 19, wherein,
   an *r-th* group of SSBs includes M1 SSBs, and an *r-th* group of reporting information for the *r-th* group of SSBs includes M2 pieces of L1-RSRP or L1-SINRs; where, M2≤M1, and 1≤r≤R.
22a. The apparatus according to supplement 19, wherein,
   the R groups of SSBs are determined according to the first configuration information.
23. The apparatus according to supplement 22a, wherein,
   in the case where the first configuration information configures K groups of SSBs, the R groups of SSBs are the K groups of SSBs.
23a. The apparatus according to supplement 22a, wherein,
   in the case where the first configuration information configures K₁ second list groups and K₂ third list groups, the R groups of SSBs are determined according to the indices of the SSB index list, wherein an *r-th* group of SSBs includes SSBs in an SSB index list with an index r in the second list groups and/or SSBs in an SSB index list with an index r in the third list groups; where, 1≤r≤R, 0≤K₁≤K, 0≤K₂≤K, and K₁+K₂=K.
23b. The apparatus according to supplement 22a, wherein,
   in the case where the first configuration information configures K₃ fourth list groups and K₄ fifth list groups, the R groups of SSBs are determined according to the indices of the SSB index list, wherein an *r-th* group of SSBs includes SSBs in an SSB index list with an index r in the fourth list groups and/or SSBs in an SSB index list with an index r in the fifth list groups; where, 1≤r≤R, 0≤K₃≤K, 0≤K₄≤K, and K₃+K₄=K.
23c. The apparatus according to supplement 22a, wherein,
   the R groups of SSBs are determined according to whether the SSB indices included in the first configuration information belong to an intra-frequency cell or an inter-frequency cell, wherein in the R groups of SSBs, SSB indices of the same group of SSBs belong to an intra-frequency cell.
23d. The apparatus according to supplement 22a, wherein,
   in a case where the terminal equipment is configured with K serving cells and the first configuration information configures a fourth list group for one of the serving cells, the R groups of SSBs are SSBs included in fourth list groups configured for the K serving cells.
24. The apparatus according to supplement 19, wherein,
   the transmitting unit further transmits second configuration information, the second configuration information configuring the R groups of SSBs.
25. The apparatus according to supplement 24, wherein,
   the second configuration information configures the R groups of SSBs by configuring the R groups of SSBRIs.
25d. The apparatus according to supplement 22a or 24, wherein,
   in the R groups of SSBs, SSB indices of the same group of SSBs belong to an intra-frequency cell, and/or SSB indices of different groups of SSBs belong to an inter-frequency cell.
26. The apparatus according to any one of supplements 19-25, wherein,
   an SSBRI with a value of s denotes an *(s+1)-th* SSB index in a first SSB index list, which may be obtained by cascading K SSB index lists included in the K list groups; where, s ≥0.
26a. The apparatus according to any one of supplements 19-25, wherein,
   the SSBRI with a value of s denotes an *(s+1)-th* SSB index in a second SSB index list, which is an SSB index list in the first configuration information; where, s≥ 0.
27. The apparatus according to any one of supplements 19-25, wherein,
   the SSBRI with a value of s denotes an *(s+1)-th* SSB index in a third SSB index list, which is obtained by cascading SSB index lists associated with an *r-th* group of SSBs; where, s≥0, and 1≤r≤R_{∘}
28. The apparatus according to supplement 19, wherein,
   the R groups of SSBs are configured per cell.
29. The apparatus according to supplement 19 or 28, wherein,
   the reporting information is associated with list groups configured for one or more cells.
30. An information processing apparatus, configured in a network device, the information processing apparatus including:
   a receiving unit configured to receive R groups of reporting information for R groups of SSBs, wherein R≥1, a group of reporting information includes a group of L1-RSRP and a group of SSBRIs, or a group of L1-SINRs and a group of SSBRIs.
31. The apparatus according to supplement 30, wherein,
   in a group of reporting information, the number of L1-RSRP is equal to the number of SSBRIs, or the number of L1-SINRs is equal to the number of SSBRIs.
32. The apparatus according to supplement 30, wherein,
   the R groups of reporting information include a first group of reporting information and/or a second group of reporting information, the first group of reporting information including a group of L1-RSRP and a group of SSBRIs, and the second group of reporting information including a group of L1-SINRs and a group of SSBRIs.
33. The apparatus according to supplement 30, wherein,
   an *r-th* group of SSBs includes M1 SSBs, and an *r-th* group of reporting information for the *r-th* group of SSBs includes M2 pieces of L1-RSRP or L1-SINRs; where, M2≤M1, and 1≤r≤R.
34. The apparatus according to supplement 30, wherein the apparatus further includes:
   a transmitting unit configured to transmit first configuration information, the first configuration information configuring K groups of SSBs. The first configuration information includes K list groups, one of which including an SSB index list and a cell index list; where, K≥1.
35. The apparatus according to supplement 34, wherein,
   the K list groups include K first list groups, and in a *k-th* first list group, if an *i-th* cell index in the cell index list is less than a third threshold, the *i-th* cell index and an *i-th* SSB index in the SSB index list belong to a serving cell; and if the *i-th* cell index in the cell index list is greater than or equal to the third threshold, the *i-th* cell index and the *i-th* SSB index in the SSB index list belong to a non-serving cell; where, 1≤k≤K, 1≤i≤Iₖ, and Iₖ is the number of cell indices in the *k-th* first list group.
36. The apparatus according to supplement 34, wherein,
   the K list groups include K₁ second list groups and K₂ third list groups. The second list groups include SSB index lists and cell index lists of a serving cell, and the third list groups include SSB index lists and cell index lists of a non-serving cell; where, 0≤K₁≤K, 0≤K₂≤K, and K₁+K₂=K.
37. The apparatus according to supplement 36, wherein,
   indices of the SSB index lists in the second list groups and indices of the SSB index lists in the third list groups are independently numbered.
38. The apparatus according to supplement 34, wherein,
   the K list groups include K₃ fourth list groups and K₄ fifth list groups. In a *k₃-th* fourth list group, if an *i-th* cell index is equal to 0, the *i-th* cell index and an *i-th* SSB index in the SSB index list belong to a serving cell defined for the *k₃-th* fourth list group. If the *i-th* cell index is greater than 0, the *i-th* cell index and the *i-th* SSB index in the SSB index list belong to a non-serving cell. The fifth list groups include SSB index lists and the cell index lists of the serving cell; where, 1 ≤k₃≤K₃, 1≤i≤I*ₖ₃*, I*ₖ₃* being the number of cell indices in the *k₃-th* fourth list group, and 0≤K₃≤K, 0≤K₄ ≤K, K₃+K₄=K.
39. The apparatus according to supplement 38, wherein,
   indices of the SSB index lists in the fourth list groups and indices of the SSB index lists in the fifth list groups are independently numbered.
40. The apparatus according to supplement 34, wherein,
   the R groups of SSBs are determined according to the first configuration information.
41. The apparatus according to supplement 40, wherein,
   the R groups of SSBs are the K groups of SSBs.
42. The apparatus according to supplement 40, wherein,
   in the case where the first configuration information configures K₁ second list groups and K₂ third list groups, the R groups of SSBs are determined according to indices of the SSB index list, wherein the *r-th* group of SSBs includes SSBs in an SSB index list with an index r in the second list groups and/or SSBs in an SSB index list with an index r in the third list groups; where, 1≤r≤R.
43. The apparatus according to supplement 40, wherein,
   in the case where the first configuration information configures K₃ fourth list groups and K₄ fifth list groups, the R groups of SSBs are determined according to indices of the SSB index list, wherein the *r-th* group of SSBs includes SSBs in an SSB index list with an index r in the fourth list groups and/or SSBs in an SSB index list with an index r in the fifth list groups; where, 1≤r≤R.
44. The apparatus according to supplement 40, wherein,
   the R groups of SSBs are determined according to whether the SSB indices included in the first configuration information belong to an intra-frequency cell or an inter-frequency cell, wherein in the R groups of SSBs, SSB indices of the same group of SSBs belong to an intra-frequency cell.
45. The apparatus according to supplement 34, wherein,
   the transmitting unit further transmits second configuration information, the second configuration information configuring the R groups of SSBs.
46. The apparatus according to supplement 45, wherein,
   the second configuration information configures the R groups of SSBs by configuring R groups of SSBRIs.
46a. The apparatus according to supplement 40 or 45, wherein,
   in the R groups of SSBs, SSB indices of the same group of SSBs belong to an intra-frequency cell, and/or SSB indices of different groups of SSBs belong to an inter-frequency cell.
47. The apparatus according to any one of supplement 34-46, wherein,
   an SSBRI with a value of s denotes an *(s+1)-th* SSB index in the first SSB index list, and the first SSB index list is obtained by cascading K SSB index lists included in the K list groups; where, s≥0.
48. The apparatus according to any one of supplement 34-46, wherein,
   an SSBRI with a value of s denotes an *(s+1)-th* SSB index in a second SSB index list, the second SSB index list being an SSB index list in the first configuration information; where, s≥0.
48a. The apparatus according to any one of supplement 34-46, wherein,
   the SSBRI with a value of s denotes an *(s+1)-th* SSB index in a third SSB index list, the third SSB index list being obtained by cascading SSB index lists with which the *r-th* group of SSBs is associated; where, s≥0, and 1≤r≤R.
49. The apparatus according to supplement 30, wherein,
   the R groups of SSBs are configured per cell.
50. The apparatus according to supplement 30 or 49, wherein,
   the reporting information is associated with list groups configured for one or more cells.

### Information processing methods at network device sides

1. An information processing method, applicable to a network device, the method including:
   transmitting first configuration information, the first configuration information including K list groups, wherein K≥ 1, and one list group includes an SSB index list and a cell index list.
2. The method according to supplement 1, wherein,
   the number of SSB indices included in the SSB index list is equal to the number of cell indices included in the cell index list.
3. The method according to supplement 1, wherein,
   the number of SSB indices included in the K list groups is less than or equal to a first threshold, and/or the number of different cell indices included in the K list groups is less than or equal to a second threshold, wherein the second threshold is less than or equal to the first threshold.
4. The method according to supplement 1, wherein,
   the K list groups include K first list groups, in which cell indices in the cell index list indicate whether the cell indices and the SSB indices in the SSB index list corresponding to the cell indices belong to a serving cell or a non-serving cell.
5. The method according to supplement 1 or 4, wherein,
   the K list groups include K first list groups. In a *k-th* first list group, if an *i-th* cell index in the cell index list is less than a third threshold, the *i-th* cell index and an *i-th* SSB index in the SSB index list belong to a serving cell; and if the *i-th* cell index in the cell index list is greater than or equal to the third threshold, the *i-th* cell index and the *i-th* SSB index in the SSB index list belong to a non-serving cell; where, 1≤k≤K, 1≤i≤Iₖ, and Iₖ is the number of cell indices in the *k-th* first list group.
6. The method according to supplement 1, wherein,
   the K list groups include K₁ second list groups and K₂ third list groups; where, 0≤K₁≤K, 0≤K₂≤K, and K₁+K₂=K. Whether the cell indices and the SSB indices in the SSB index lists corresponding to the cell indices belong to a serving cell or a non-serving cell is indicated by the list groups that include the cell indices and are the second list groups or the third list groups.
7. The method according to supplement 1 or 6, wherein,
   the K list groups include K₁ second list groups and K₂ third list groups; where, 0≤K₁≤K, 0≤K₂≤K, and K₁+K₂=K. The second list groups include SSB index lists and cell index lists of a serving cell, and the third list groups include SSB index lists and cell index lists of a non-serving cell.
7a. The method according to supplement 7, wherein,
   the indices of the SSB index lists in the second list groups and the indices of the SSB index lists in the third list groups are independently numbered.
7b. The method according to supplement 7a, wherein,
   the K₁ second list groups and K₂ third list groups are mapped to the K list groups in an order of "the indices of the SSB index lists first and then list group type indices", or in an order of "list group type indices first and then the indices of the SSB index lists".
8. The method according to supplement 1, wherein,
   the K list groups include K₃ fourth list groups and K₄ fifth list groups; where, 0≤K₃≤K, 0≤K₄≤K, and K₃+K₄=K; wherein whether the cell indices and the SSB indices in the SSB index lists corresponding to the cell indices belong to a serving cell or a non-serving cell is indicated by the cell indices and/or the list groups that include the cell indices and are the fourth list groups or the fifth list groups.
9. The method according to supplement 1 or 8, wherein,
   the K list groups include K₃ fourth list groups and K₄ fifth list groups; where, 0≤K₃≤K, 0≤K₄≤K, and K₃+K₄=K. In a *k-th* fourth list group, if an *i-th* cell index is equal to 0, the *i-th* cell index and an *i-th* SSB index in the SSB index list belong to a serving cell defined for the K₃ fourth list groups; and if the *i-th* cell index is greater than 0, the *i-th* cell index and the *i-th* SSB index in the SSB index list belong to a non-serving cell, and the fifth list groups include an SSB index list and a cell index list of the serving cell; where, 1≤k₃≤K₃, 1≤i≤I₃, and Iₖ₃ is the number of cell indices in the K₃ fourth list groups.
9a. The method according to supplement 9, wherein,
   the indices of the SSB index lists in the fourth list groups and the indices of the SSB index lists in the fifth list group are independently numbered.
9b. The method according to supplement 9a, wherein,
   the K₃ fourth list groups and K₄ fifth list groups are mapped to the K list groups in an order of "the indices of the SSB index lists first and then list group type indices", or in an order of "list group type indices first and then the indices of the SSB index lists".
9c. The method according to supplement 1, wherein,
   the K list groups include K sixth list groups, and in the sixth list groups, whether cell indices and the SSB indices in the SSB index lists corresponding to the cell indices belong to a serving cell or a non-serving cell is indicated by the cell indices and/or whether SSB parameters are configured for the cell indices.
9d. The method according to supplement 1 or 9c, wherein,
   the K list groups include K sixth list groups. In a *k-th* sixth list group, if an *i-th* cell index is equal to 0, the *i-th* cell index and an *i-th* SSB index in the SSB index list belong to a serving cell defined for the K sixth list groups; if the *i-th* cell index is greater than 0 and no SSB parameter is configured for the *i-th* cell index, the *i-th* cell index and the *i-th* SSB index in the SSB index list belong to a serving cell; and if the *i-th* cell index is greater than 0 and an SSB parameter is configured for the *i-th* cell index, the *i-th* cell index and the *i-th* SSB index in the SSB index list belong to a non-serving cell; where, 1≤k≤K, 1≤i≤Iₖ, and Iₖ is the number of cell indices in the K sixth list groups.
9e. The method according to supplement 9d, wherein,
   that 'an SSB parameter is configured for the *i-th* cell index' refers to that the *i-th* cell index, an SSB parameter and a PCI are configured in an RRC IE, and that 'no SSB parameter is configured for the *i-th* cell index' refers to that the *i-th* cell index and a PCI are configured in an RRC IE.
10. The method according to any one of supplements 4-9, wherein,
   in the first list groups or the second list groups or the fifth list groups, the cell indices of the serving cell are greater than or equal to a fourth threshold and less than the third threshold; and/or,
   in the first list groups, the cell indices of the non-serving cell are greater than or equal to the third threshold and less than a fifth threshold; and/or,
   in the third list groups, the cell indices of the non-serving cell are greater than or equal to a sixth threshold and less than a seventh threshold; and/or,
   in the fourth list groups, the cell indices of the non-serving cell are greater than or equal to an eighth threshold and less than or equal to a ninth threshold.
11. The method according to supplement 5, wherein,
   the third threshold is greater than 1.
12. The method according to supplement 5, wherein,
   the third threshold is a maximum number of serving cells that the terminal equipment may be configured with, or, the third threshold is the number of serving cells that the terminal equipment may be configured with.
13. The method according to supplement 1, wherein,
   in the cell index lists, the cell index of the serving cell is a configured index ServCellIndex of the serving cell.
14. The method according to supplement 1, wherein,
   in the cell index lists, the cell index of the non-serving cell is a configured index additionalPCIIndex of the non-serving cell, or the cell index of the non-serving cell is a sum of the configured index additionalPCIIndex of the non-serving cell and an offset.
15. The method according to supplement 1, wherein the method further includes:
   transmitting a first index, the first index being used to indicate a center frequency of SSBs of an inter-frequency cell, wherein the first index indicates a frequency in a group of frequencies.
16. The method according to supplement 1, wherein,
   the first configuration information is included in a measurement configuration IE.
17. The method according to supplement 1, wherein,
   the first configuration information is configured per cell, or, the first configuration information is configured per terminal equipment.
17a. The method according to supplement 1, wherein,
   the first configuration information is configured for a Pcell or an SpCell.
17b. The method according to supplement 1 or 8 or 9, wherein,
   the terminal equipment is configured with K serving cells, and the first configuration information configures a fourth list group for one of the serving cells.
18. The method according to supplement 1, wherein,
   the K groups of SSBs configured by the first configuration information are SSBs measured by the terminal equipment.
19. The method according to supplement 1, wherein the method further includes:
   receiving R groups of reporting information for R groups of SSBs, wherein R≥1, a group of reporting information includes a group of L1-RSRP and a group of SSBRIs, or a group of L1-SINRs and a group of SSBRIs.
20. The method according to supplement 19, wherein,
   in a group of reporting information, the number of L1-RSRP is equal to the number of SSBRIs, or the number of L1-SINRs is equal to the number of SSBRIs.
21. The method according to supplement 19, wherein,
   the R groups of reporting information include a first group of reporting information and/or a second group of reporting information, the first group of reporting information including a group of L1-RSRP and a group of SSBRIs, and the second group of reporting information including a group of L1-SINRs and a group of SSBRIs.
22. The method according to supplement 19, wherein,
   an *r-th* group of SSBs includes M1 SSBs, and an *r-th* group of reporting information for the *r-th* group of SSBs includes M2 pieces of L1-RSRP or L1-SINRs; where, M2≤M1, and 1≤r≤R.
22a. The method according to supplement 19, wherein,
   the R groups of SSBs are determined according to the first configuration information.
23. The method according to supplement 22a, wherein,
   in the case where the first configuration information configures K groups of SSBs, the R groups of SSBs are the K groups of SSBs.
23a. The method according to supplement 22a, wherein,
   in the case where the first configuration information configures K₁ second list groups and K₂ third list groups, the R groups of SSBs are determined according to the indices of the SSB index list, wherein an *r-th* group of SSBs includes SSBs in an SSB index list with an index r in the second list groups and/or SSBs in an SSB index list with an index r in the third list groups; where, 1≤r≤R, 0≤K₁≤K, 0≤K₂≤K, and K₁+K₂=K.
23b. The method according to supplement 22a, wherein,
   in the case where the first configuration information configures K₃ fourth list groups and K₄ fifth list groups, the R groups of SSBs are determined according to the indices of the SSB index list, wherein an *r-th* group of SSBs includes SSBs in an SSB index list with an index r in the fourth list groups and/or SSBs in an SSB index list with an index r in the fifth list groups; where, 1 ≤r≤R, 0≤K₃≤K, 0≤K₄≤K, and K₃+K₄=K.
23c. The method according to supplement 22a, wherein,
   the R groups of SSBs are determined according to whether the SSB indices included in the first configuration information belong to an intra-frequency cell or an inter-frequency cell, wherein in the R groups of SSBs, SSB indices of the same group of SSBs belong to an intra-frequency cell.
23d. The method according to supplement 22a, wherein,
   in a case where the terminal equipment is configured with K serving cells and the first configuration information configures a fourth list group for one of the serving cells, the R groups of SSBs are SSBs included in fourth list groups configured for the K serving cells.
24. The method according to supplement 19, wherein the method further includes:
   transmitting second configuration information, the second configuration information configuring the R groups of SSBs.
25. The method according to supplement 24, wherein,
   the second configuration information configures the R groups of SSBs by configuring the R groups of SSBRIs.
25d. The method according to supplement 22a or 24, wherein,
   in the R groups of SSBs, SSB indices of the same group of SSBs belong to an intra-frequency cell, and/or SSB indices of different groups of SSBs belong to an inter-frequency cell.
26. The method according to any one of supplements 19-25, wherein,
   an SSBRI with a value of s denotes an *(s+1)-th* SSB index in a first SSB index list, which may be obtained by cascading K SSB index lists included in the K list groups; where, s≥0.
26a. The method according to any one of supplements 19-25, wherein,
   the SSBRI with a value of s denotes an *(s+1)-th* SSB index in a second SSB index list, which is an SSB index list in the first configuration information; where, s≥ 0.
27. The method according to any one of supplements 19-25, wherein,
   the SSBRI with a value of s denotes an *(s+1)-th* SSB index in a third SSB index list, which is obtained by cascading SSB index lists associated with an *r-th* group of SSBs; where, s≥0, and 1≤r≤R_{∘}
28. The method according to supplement 19, wherein,
   the R groups of SSBs are configured per cell.
29. The method according to supplement 19 or 28, wherein,
   the reporting information is associated with list groups configured for one or more cells.
30. An information processing method, applicable to a network device, the method including:
   receiving R groups of reporting information for R groups of SSBs, wherein R≥1, a group of reporting information includes a group of L1-RSRP and a group of SSBRIs, or a group of L1-SINRs and a group of SSBRIs.
31. The method according to supplement 30, wherein,
   in a group of reporting information, the number of L1-RSRP is equal to the number of SSBRIs, or the number of L1-SINRs is equal to the number of SSBRIs.
32. The method according to supplement 30, wherein,
   the R groups of reporting information include a first group of reporting information and/or a second group of reporting information, the first group of reporting information including a group of L1-RSRP and a group of SSBRIs, and the second group of reporting information including a group of L1-SINRs and a group of SSBRIs.
33. The method according to supplement 30, wherein,
   an *r-th* group of SSBs includes M1 SSBs, and an *r-th* group of reporting information for the *r-th* group of SSBs includes M2 pieces of L1-RSRP or L1-SINRs; where, M2≤M1, and 1≤r≤R.
34. The method according to supplement 30, wherein the method further includes:
   transmitting first configuration information, the first configuration information configuring K groups of SSBs. The first configuration information includes K list groups, one of which including an SSB index list and a cell index list; where, K≥1.
35. The method according to supplement 34, wherein,
   the K list groups include K first list groups, and in a *k-th* first list group, if an *i-th* cell index in the cell index list is less than a third threshold, the *i-th* cell index and an *i-th* SSB index in the SSB index list belong to a serving cell; and if the *i-th* cell index in the cell index list is greater than or equal to the third threshold, the *i-th* cell index and the *i-th* SSB index in the SSB index list belong to a non-serving cell; where, 1≤k≤K, 1≤i≤Iₖ, and Iₖ is the number of cell indices in the *k-th* first list group.
36. The method according to supplement 34, wherein,
   the K list groups include K₁ second list groups and K₂ third list groups. The second list groups include SSB index lists and cell index lists of a serving cell, and the third list groups include SSB index lists and cell index lists of a non-serving cell; where, 0≤K₁≤K, 0≤K₂≤K, and K₁+K₂=K.
37. The method according to supplement 36, wherein,
   indices of the SSB index lists in the second list groups and indices of the SSB index lists in the third list groups are independently numbered.
38. The method according to supplement 34, wherein,
   the K list groups include K₃ fourth list groups and K₄ fifth list groups. In a *k₃-th* fourth list group, if an *i-th* cell index is equal to 0, the *i-th* cell index and an *i-th* SSB index in the SSB index list belong to a serving cell defined for the *k₃-th* fourth list group. If the *i-th* cell index is greater than 0, the *i-th* cell index and the *i-th* SSB index in the SSB index list belong to a non-serving cell. The fifth list groups include SSB index lists and the cell index lists of the serving cell; where, 1≤k₃≤K₃, 1≤i≤I*ₖ₃*, I*ₖ₃* being the number of cell indices in the *k₃-th* fourth list group, and 0≤K₃≤K, 0≤K₄ ≤K, K₃+K₄=K.
39. The method according to supplement 38, wherein,
   indices of the SSB index lists in the fourth list groups and indices of the SSB index lists in the fifth list groups are independently numbered.
40. The method according to supplement 34, wherein,
   the R groups of SSBs are determined according to the first configuration information.
41. The method according to supplement 40, wherein,
   the R groups of SSBs are the K groups of SSBs.
42. The method according to supplement 40, wherein,
   in the case where the first configuration information configures K₁ second list groups and K₂ third list groups, the R groups of SSBs are determined according to indices of the SSB index list, wherein the *r-th* group of SSBs includes SSBs in an SSB index list with an index r in the second list groups and/or SSBs in an SSB index list with an index r in the third list groups; where, 1≤r≤R.
43. The method according to supplement 40, wherein,
   in the case where the first configuration information configures K₃ fourth list groups and K₄ fifth list groups, the R groups of SSBs are determined according to indices of the SSB index list, wherein the *r-th* group of SSBs includes SSBs in an SSB index list with an index r in the fourth list groups and/or SSBs in an SSB index list with an index r in the fifth list groups; where, 1≤r≤R.
44. The method according to supplement 40, wherein,
   the R groups of SSBs are determined according to whether the SSB indices included in the first configuration information belong to an intra-frequency cell or an inter-frequency cell, wherein in the R groups of SSBs, SSB indices of the same group of SSBs belong to an intra-frequency cell.
45. The method according to supplement 34, wherein the method further includes:
   transmitting second configuration information, the second configuration information configuring the R groups of SSBs.
46. The method according to supplement 45, wherein,
   the second configuration information configures the R groups of SSBs by configuring R groups of SSBRIs.
46a. The method according to supplement 40 or 45, wherein,
   in the R groups of SSBs, SSB indices of the same group of SSBs belong to an intra-frequency cell, and/or SSB indices of different groups of SSBs belong to an inter-frequency cell.
47. The method according to any one of supplement 34-46, wherein,
   an SSBRI with a value of s denotes an *(s+1)-th* SSB index in the first SSB index list, and the first SSB index list is obtained by cascading K SSB index lists included in the K list groups; where, s≥0.
48. The method according to any one of supplement 34-46, wherein,
   an SSBRI with a value of s denotes an *(s+1)-th* SSB index in a second SSB index list, the second SSB index list being an SSB index list in the first configuration information; where, s≥0.
48a. The method according to any one of supplement 34-46, wherein,
   the SSBRI with a value of s denotes an *(s+1)-th* SSB index in a third SSB index list, the third SSB index list being obtained by cascading SSB index lists with which the *r-th* group of SSBs is associated; where, s≥0, and 1≤r≤R.
49. The method according to supplement 30, wherein,
   the R groups of SSBs are configured per cell.
50. The method according to supplement 30 or 49, wherein,
   the reporting information is associated with list groups configured for one or more cells.

### Network device

1. A network device, including a memory and a processor, the memory storing a computer program, and the processor being configured to execute the computer program to carry out the methods as described in the supplements with respect to methods.

### Communication system

1. A communication system, including the network device and the terminal equipment described above.

## Claims

1. An information processing apparatus, configured in a terminal equipment, **characterized in that** the information processing apparatus comprises:
a receiving unit configured to receive first configuration information, the first configuration information comprising K list groups, wherein K ≥ 1, and one list group comprises an SSB index list and a cell index list; and
a measurement unit configured to perform SSB measurement according to the first configuration information.

2. The apparatus according to claim 1, wherein,
the K list groups comprise K first list groups, wherein in a *k-th* first list group, if an *i-th* cell index in the cell index list is less than a third threshold, the *i-th* cell index and an *i-th* SSB index in the SSB index list belong to a serving cell, and if the *i-th* cell index in the cell index list is greater than or equal to the third threshold, the *i-th* cell index and the *i-th* SSB index in the SSB index list belong to a non-serving cell; where, 1 ≤ k ≤ K, 1 ≤ i ≤ Iₖ, Iₖ being the number of cell indices in the *k-th* first list group.

3. The apparatus according to claim 1, wherein,
the K list groups comprise K₁ second list groups and K₂ third list groups, wherein 0 ≤ K₁ ≤ K, 0 ≤ K₂ ≤ K, and K₁+K₂=K, the second list group comprises an SSB index list and a cell index list of the serving cell, and the third list group comprises an SSB index list and a cell index list of the non-serving cell.

4. The apparatus according to claim 1, wherein,
the K list groups comprise K₃ fourth list groups and K₄ fifth list groups, wherein 0 ≤ K₃ ≤ K, 0 ≤ K₄ ≤ K, K₃+K₄=K, in a *k₃-th* fourth list group, if an *i-th* cell index is equal to 0, the *i-th* cell index and the *i-th* SSB index in the SSB index list belong to a defined serving cell of the *k₃-th* fourth list group, if the *i-th* cell index is greater than 0, the *i-th* cell index and the *i-th* SSB index in the SSB index list belong to the non-serving cell, and the fifth list group comprises an SSB index list and a cell index list of the serving cell; where, 1 ≤ k₃ ≤ K₃, 1 ≤ i ≤ Iₖ₃, and Iₖ₃ is the number of cell indices in the *k₃-th* fourth list group.

5. The apparatus according to claim 1, wherein,
the K list groups comprise K sixth list groups, and in a *k-th* sixth list group, if an *i-th* cell index is equal to 0, the *i-th* cell index and an *i-th* SSB index in the SSB index list belong to a defined serving cell of the *k-th* sixth list group, if the *i-th* cell index is greater than 0 and the *i-th* cell index is not configured with an SSB parameter, the *i-th* cell index and the *i-th* SSB index in the SSB index list belong to a serving cell, and if the *i-th* cell index is greater than 0 and the *i-th* cell index is configured with an SSB parameter, the *i-th* cell index and the *i-th* SSB index in the SSB index list belong to a non-serving cell; where, 1 ≤ k ≤ K, 1 ≤ i ≤ Iₖ, and Iₖ is the number of cell indices in the *k-th* sixth list group.

6. The apparatus according to claim 2, wherein,
the third threshold is greater than 1.

7. The apparatus according to claim 1, wherein,
in the cell index list, the cell index of the serving cell is a configured index ServCellIndex of the serving cell; and/or
in the cell index list, the cell index of the non-serving cell is a configured index additionalPCIIindex of the non-serving cell, or the cell index of the non-serving cell is a sum of a configured index additionalPCIIindex of the non-serving cell and an offset.

8. The apparatus according to claim 1, wherein,
the first configuration information is configured per cell, or the first configuration information is configured per terminal equipment.

9. The apparatus according to claim 1, wherein the apparatus further comprises:
a transmitting unit configured to transmit R groups of reporting information for R groups of SSBs, wherein R ≥ 1, a group of reporting information comprises a group of L1-RSRP and a group of SSBRIs, or a group of L1-SINRs and a group of SSBRIs.

10. The apparatus according to claim 9, wherein,
an SSBRI with a value of s denotes an *(s+1)-th* SSB index in a first SSB index list, the first SSB index list being obtained by cascading K SSB index lists comprised in the K list group, where, s ≥ 0; and/or
an SSBRI with a value of s denotes an *(s+1)-th* SSB index in a second SSB index list, the second SSB index list being an SSB index list in the first configuration information, where, s ≥ 0; and/or
an SSBRI with a value of s denotes an *(s+1)-th* SSB index in a third SSB index list, the third SSB index list being obtained by cascading SSB index lists with which an *r-th* group of SSBs is associated, where, s ≥ 0, and 1 ≤ r ≤ R.

11. The apparatus according to claim 9, wherein,
in a group of reporting information, the number of L1-RSRP is equal to the number of SSBRIs, or the number of L1-SINRs is equal to the number of SSBRIs.

12. The apparatus according to claim 9, wherein,
the R groups of reporting information comprise a first group of reporting information and/or a second group of reporting information, the first group of reporting information comprising a group of L1-RSRP and a group of SSBRIs, and the second group of reporting information comprising a group of L1-SINRs and a group of SSBRIs.

13. The apparatus according to claim 9, wherein,
in a case where the first configuration information configures K groups of SSBs, the R groups of SSBs are the K groups of SSBs; and/or
in a case where the first configuration information configures K₁ second list groups and K₂ third list groups, the R groups of SSBs are determined according to indices of the SSB index list, wherein the *r-th* group of SSBs comprises SSBs in an SSB index list with an index r in the second list group and/or SSBs in an SSB index list with an index r in the third list group, where, 1 ≤ r ≤ R, 0 ≤ K₁ ≤ K, 0 ≤ K₂ ≤ K, and K₁+K₂=K; and/or
in a case where the first configuration information configures K₃ fourth list groups and K₄ fifth list groups, the R groups of SSBs are determined according to indices of the SSB index list, wherein the *r-th* group of SSBs comprises SSBs in an SSB index list with an index r in the fourth list groups and/or SSBs in an SSB index list with an index r in the fifth list groups, 1 ≤ r ≤ R, 0 ≤ K₃ ≤ K, 0 ≤ K₄ ≤ K, and K₃+K₄=K.

14. The apparatus according to claim 9, wherein,
the receiving unit further receives second configuration information, the second configuration information configuring the R groups of SSBs.

15. The apparatus according to claim 14, wherein,
the second configuration information configures the R groups of SSBs by configuring R groups of SSBRIs.

16. The apparatus according to claim 9, wherein,
the reporting information is associated with a list group configured for one or more cells.

17. The apparatus according to claim 9, wherein the apparatus further comprises:
a quantization unit configured to perform the following operations on the *r-th* group of L1-RSRP or L1-SINRs: quantizing a piece of L1-RSRP or an L1-SINR into B1 bits, and quantizing remaining L1-RSRP or L1-SINRs as differential L1-RSRP or differential L1-SINRs into B2 bits, where, B₂<B₁, and 1 ≤ r ≤ R, and/or, in a case where the R groups of reporting information comprise R₁ groups of L1-RSRP and R₂ groups of L1-SINRs, perform the following operations respectively on the R₁ groups of L1-RSRP and R₂ groups of L1-SINRs: quantizing a piece of L1-RSRP or an L1-SINR into B1 bits, and quantizing remaining L1-RSRP or L1-SINRs as differential L1-RSRP or differential L1-SINRs into B2 bits, where, B₂<B₁, 0<R₁<R, 0<R₂<R, and R₁+R₂=R.

18. The apparatus according to claim 17, wherein,
maximum L1-RSRP or L1-SINR is quantized into B1 bits.

19. An information processing apparatus, configured in a network device, the information processing apparatus comprising:
a transmitting unit configured to transmit first configuration information, the first configuration information comprising K list groups, wherein K ≥ 1, and one list group comprises an SSB index list and a cell index list.

20. A communication system, comprising a network device and a terminal equipment, **characterized in that**,
the network device transmits first configuration information, the first configuration information comprising K list groups, wherein K ≥ 1, and one list group comprises an SSB index list and a cell index list,
and the terminal equipment receives the first configuration information, and performs SSB measurement according to the first configuration information.
